(19) Europäisches Patentamt
European Patent Office
Office européen des brevets

(11) EP 2 213 707 B1

# (12) EUROPEAN PATENT SPECIFICATION

(45) Date of publication and mention of the grant of the patent:
**18.07.2018 Bulletin 2018/29**

(21) Application number: **08850464.2**

(22) Date of filing: **14.11.2008**

(51) Int Cl.:
***C09D 11/00*** *(2014.01)* ***B41J 2/01*** *(2006.01)*
***B41M 5/00*** *(2006.01)*

(86) International application number:
**PCT/JP2008/070820**

(87) International publication number:
**WO 2009/063996 (22.05.2009 Gazette 2009/21)**

## (54) INK COMPOSITION

TINTENZUSAMMENSETZUNG

COMPOSITION D'ENCRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority:
**15.11.2007 JP 2007296367**
**05.12.2007 JP 2007314489**
**11.12.2007 JP 2007319282**
**13.02.2008 JP 2008031436**
**13.02.2008 JP 2008031437**
**19.02.2008 JP 2008036981**
**19.02.2008 JP 2008036982**
**14.11.2008 JP 2008292373**

(43) Date of publication of application:
**04.08.2010 Bulletin 2010/31**

(73) Proprietor: **Seiko Epson Corporation**
**Shinjuku-ku**
**Tokyo 163-0811 (JP)**

(72) Inventors:
- **YATAKE, Masahiro**
  **Suwa-shi**
  **Nagano 392-8502 (JP)**
- **OKI, Yasuhiro**
  **Suwa-shi**
  **Nagano 392-8502 (JP)**
- **NAGASE, Makoto**
  **Suwa-shi**
  **Nagano 392-8502 (JP)**
- **MASUDA, Motoki**
  **Suwa-shi**
  **Nagano 392-8502 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 683 843**
**EP-A2- 1 811 002**
**WO-A1-01/44386**
**JP-A- 2004 261 974**
**JP-A- 2005 272 790**
**JP-A- 2006 348 256**
**JP-A- 2008 266 853**
**US-A1- 2005 282 929**
**US-A1- 2005 288 391**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 213 707 B1

## Description

TECHNICAL FIELD

The present invention relates to an ink composition which is excellent in color developability, stability and fixability and particularly excellent as an inkjet recording ink for textiles.

BACKGROUND ART

In printing onto paper as recording media, an ink used for inkjet recording is required to have characteristics such as no blurring, good drying properties, uniform printability on surfaces of various recording media, and no mixture of adjacent colors in multicolor system printing such as color printing.

In conventional inks, particularly in many of the inks using a pigment, it has been studied and put into practical use that wettability of the inks to a surface of paper is suppressed by mainly inhibiting permeability to confine ink drops to near the surface of the paper, thereby securing print quality. However, the inks in which the wettability to the paper is suppressed has a large difference in blurring due to difference in paper type. Particularly, in recycled paper in which various components of paper are mixed, the blurring caused by the difference in wettability characteristics of the inks to the respective components occurs. Further, such inks have a problem that it takes a long time to dry the printing to cause the mixture of adjacent colors in the multicolor system printing such as the color printing. Furthermore, in the inks using a pigment as a color material, there is also another problem that rubbing resistance is deteriorated because the pigment remains on the surface of the paper or the like.

In order to solve such problems, the permeability of the inks to paper has been attempted to be improved, and there have been studied the addition of diethylene glycol monobutyl ether (see patent document 1), the addition of Surfynol 465 (manufactured by Nissin Chemical Industry Co., Ltd.) as an acetylene glycol-based surfactant (see patent document 2), the addition of both of diethylene glycol monobutyl ether and Surfynol 465 (see patent document 3), and the like. Further, it has been studied to use ethers of diethylene glycol in the inks (see patent document 4).

Further, in the inks using pigments, it is generally difficult to improve the permeability of the inks while securing dispersion stability of the pigments, and the range of selection of a penetrating agent is narrow. Accordingly, conventional combinations of the glycol ethers and the pigments include an example using the pigment and triethylene glycol mono methyl ether (see patent document 5), an example using an ether of ethylene glycol, diethylene glycol or triethylene glycol (see patent document 6), and the like.

Furthermore, as ink compositions for textiles, there are an example using, for example, a dye (see patent document 7), an example relating to an adhesive (see patent document 8), and the like.

In addition, in patent document 9, the present inventors disclose an ink composition containing a polymer-coated pigment in which a pigment is coated with a specific water-dispersible polymer, as an aqueous ink composition having either low blurring properties or high color developability on regular paper and either sufficient color developability or fixability on exclusive paper, or both thereof.

Patent Documents US 2005/0282929 A1 and US 2005/0288391 A1 disclose inkjet ink compositions including an inkjet ink binder, a colorant and a liquid medium.

Patent Document EP 1 683 843 A1 discloses a binder composition for inkjet inks and inkjet inks including the binder.

Patent Document EP 1 811 002 A2 discloses a recording ink which is suitable for inkjet recording, as well as an ink media set, an ink cartridge, an ink record, an inkjet recording apparatus and an inkjet recording method using the recording ink.

Patent Document WO 01/44386 A1 discloses an ink composition comprising a colorant and a polymeric binder.

Patent Document 1: U.S. Patent No. 5,156,675
Patent Document 2: U.S. Patent No. 5,183,502
Patent Document 3: U.S. Patent No. 5,196,056
Patent Document 4: U.S. Patent No. 2,083,372
Patent Document 5: JP-A-56-147861
Patent Document 6: JP-A-9-111165
Patent Document 7: JP-A-2007-515561
Patent Document 8: JP-A-2007-126635
Patent Document 9: JP-A-2005-272790

DISCLOSURE OF THE INVENTION

PROBLEMS TO BE SOLVED BY THE INVENTION

However, the conventional inks were insufficient in printing quality, particularly insufficient in fixability as inkjet recording inks for textiles, and also insufficient in color density and color developability. Further, the conventional pigment dispersions were low in preservation stability and unstable. Accordingly, they had a problem that when a substance having a hydrophilic moiety and a hydrophobic moiety such as a surfactant or a glycol ether was present, absorption and desorption of the polymer from the pigment became liable to occur, resulting in poor ink preservation stability. In order to reduce the blurring to paper, the ordinary aqueous inks require the substance having the hydrophilic moiety and the hydrophobic moiety such as the surfactant or the glycol ether. An ink in which such a substance was not used had a problem that the permeability to paper became insufficient, so that the paper type was limited in order to perform uniform printing, thus leading to a tendency to cause deterioration in quality of printed images.

Furthermore, there was a problem that the use of an additive as used in the invention (an acetylene glycol-based or acetylene alcohol-based surfactant, di(tri)ethylene glycol monobutyl ether, (di)propylene glycol monobutyl ether, a 1,2-alkylene glycol or a mixture thereof) in the conventional pigment dispersion resulted in failure to obtain long-term preservation stability and dried the ink because of its poor redissolvability, which caused a tendency to clog a tip or the like of a nozzle of an inkjet head.

Then, the invention solves such problems, and an object thereof is to provide an ink composition which is excellent in color developability, stability and fixability, particularly excellent as an inkjet recording ink for textiles, and excellent in discharge stability of the ink from an inkjet head.

MEANS TO SOLVE THE PROBLEMS

The ink compositions of the present invention are as follows.

(1) An ink composition comprising: a dispersion having an average particle size of 50 nm to 300 nm, in which a pigment is made dispersible in water; and polymer fine particles having a glass transition temperature of -10°C or less and an acid value of 100 mg KOH/g or less.
wherein the polymer fine particles are polymerized using 70% by weight or more of an alkyl (meth)acrylate and/or a cyclic alkyl (meth)acrylate and from 5% by weight to 25% by weight of styrene, as constituents thereof.

(2) The ink composition according to item (1) above, wherein the alkyl (meth)acrylate and/or the cyclic alkyl (meth)acrylate are an alkyl (meth)acrylate having 1 to 24 carbon atoms and/or a cyclic alkyl (meth)acrylate having 3 to 24 carbon atoms.

(3) The ink composition according to item (1) above, further comprising a polyalkylene wax having a melting point of 80°C or more.

(4) The ink composition according to any one of items (1) to (3) above, wherein the dispersion is a dispersion having an average particle size of 50 nm to 300 nm in which carbon black dispersed without any dispersing agent is made dispersible in water.

(5) The ink composition according to item (1) above, wherein the dispersion is dispersed by using a polymer obtained by polymerizing 50% by weight or more of benzyl acrylate and 15% by weight or less of methacrylic acid and/or acrylic acid as constituents.

(6) The ink composition according to any one of items (1) to (5) above, wherein the dispersion is a dispersion having an average particle size of 50 nm to 300 nm in which an organic pigment is made dispersible in water with a polymer, and the polymer has a styrene-conversion weight average molecular weight by gel permeation chromatography (GPC) of 10,000 to 200,000.

(7) The ink composition according to item (1) above, wherein the dispersion contains an organic pigment encapsulated in a water-insoluble polymer obtained by copolymerizing a monomer mixture containing a salt-forming group-containing monomer and a macromer and/or a hydrophobic monomer, and
wherein the polymer fine particles are obtained by polymerizing at least ethyl acrylate and (meth)acrylic acid as constituents.

(8) The ink composition according to item (1) above, wherein the dispersion contains an organic pigment encapsulated in a resin layer formed by emulsion polymerization, and
wherein the polymer fine particles are obtained by polymerizing at least ethyl acrylate and (meth)acrylic acid as constituents.

(9) The ink composition according to any one of items (1) to (8) above, wherein the polymer fine particles have a styrene-conversion weight average molecular weight by gel permeation chromatography (GPC) of 100,000 to 1,000,000.

(10) The ink composition according to any one of items (1) to (9) above, comprising a 1,2-alkylene glycol.

(11) The ink composition according to any one of items (1) to (10) above, comprising an acetylene glycol-based surfactant and/or an acetylene alcohol-based surfactant.

(12) The ink composition according to any one of items (1) to (11) above, wherein the content (% by weight) of the polymer fine particles is higher than the content (% by weight) of the pigment.

(13) The ink composition according to any one of items (1) to (12) above, wherein the ink composition is used for an inkjet recording system.

(14) Use of the ink composition according to any one of items (1) to (13) above as an inkjet recording ink for textiles.

BEST MODE FOR CARRYING OUT THE INVENTION

The invention is based on the results of intensive studies in view of requirements of such characteristics as being excellent in color developability, stability and fixability, particularly, being excellent as an inkjet recording ink for textiles.

Embodiment of the Invention

The ink composition of the invention is characterized by comprising a dispersion having an average particle size of 50 nm to 300 nm, in which a pigment is made dispersible in water, and polymer fine particles having a glass transition temperature of -10°C or less and an acid value of 100 mg KOH/g or less,
wherein the polymer fine particles are polymerized using 70% by weight or more of an alkyl (meth)acrylate and/or a cyclic alkyl (meth)acrylate and from 5% by weight to 25% by weight of styrene, as constituents thereof.

First, there will be described the pigment dispersion and the polymer fine particles contained in the ink composition of the invention (hereinafter simply referred to as "the ink of the invention"), and additives which may be optionally contained.

The average particle size of the pigment dispersion and the polymer fine particles is measured by a light scattering method. An average particle size of the pigment dispersion measured by the light scattering method of less than 50 nm results in deteriorated color developability, whereas exceeding 300 nm results in deteriorated fixability. It is preferably from 60 nm to 230 nm, more preferably from 70 nm to 230 nm, and still more preferably from 80 nm to 130 nm.

On the other hand, the average particle size of the polymer fine particles is preferably from 50 nm to 500 nm, and more preferably from 60 nm to 300 nm. An average particle size of the polymer fine particles of less than 50 nm results in deteriorated fixability, whereas exceeding 500 nm results in a tendency of the discharge from the inkjet head to become unstable.

Further, the glass transition temperature of the polymer fine particles contained in the ink of the invention is preferably -10°C or less, and particularly, the fixability of the pigment as the ink for textiles is improved thereby. When it exceeds -10°C, the fixability of the pigment is gradually deteriorated. It is more preferably - 15°C or less, still more preferably -20°C or less, still further more preferably -25°C or less, and particularly preferably -30°C or less.

Furthermore, the acid value of the above-mentioned polymer fine particles is preferably 100 mg KOH/g or less. An acid value exceeding 100 mg KOH/g results in a decrease in washing fastness at the time when printed on a cloth as the ink for textiles. It is more preferably 50 mg KOH/g or less, and still more preferably 30 mg KOH/g or less.

In addition, the molecular weight of the above-mentioned polymer fine particles is preferably 100,000 or more, and more preferably 200,000 or more. Less than 100,000 results in a decrease in washing fastness at the time when printed on a cloth as the ink for textiles.

The dispersion contained in the ink of the invention is preferably one having an average particle size of 50 nm to 300 nm in which carbon black dispersed without any dispersing agent is made dispersible in water. By using carbon black dispersed without any dispersing agent, the color developability of printed matter is improved. Methods for dispersing carbon black in water without any dispersing agent include a method of oxidizing the surface of carbon black with ozone, sodium hypochlorite or the like. The average particle size of the carbon black is preferably from 50 nm to 150 nm. Less than 50 nm results in difficulty to obtain the color developability, whereas exceeding 150 nm results in deteriorated fixability. The particle size is preferably from 60 nm to 130 nm, more preferably from 70 nm to 130 nm, and still more preferably from 80 nm to 120 nm.

Further, the dispersion contained in the ink of the invention is one having an average particle size of 50 nm to 300 nm in which the organic pigment is made dispersible in water with a polymer, and it is preferred that the polymer has a styrene-conversion weight average molecular weight by gel permeation chromatography (GPC) of 10,000 to 200,000. The polymer having a styrene-conversion weight average molecular weight of 10,000 to 200,000 improves the fixability of the pigment particularly as the ink for textiles, and also improves the reservation stability of the pigment ink. Further, at least 70% or more, preferably at least 80% or more of the polymer used for dispersion of the above-mentioned pigment is preferably a polymer obtained by copolymerization of a (meth)acrylate and (meth)acrylic acid.

Furthermore, aside from the above-mentioned dispersing agent, in order to stabilize dispersion, a water-dispersible or water-soluble polymer or surfactant may be added as a dispersion stabilizing agent.

In addition, it is preferred that the polymer fine particles have a styrene-conversion weight average molecular weight by gel permeation chromatography (GPC) of 100,000 to 1,000,000. The polymer fine particles having a styrene-conversion weight average molecular weight of 100,000 to 1,000,000 improves the fixability of the pigment particularly as the ink for textiles.

In the ink of the invention, it is preferred to use a 1,2-alkylene glycol. The use of the 1,2-alkylene glycol reduces blurring to improve print quality. As examples of the 1,2-alkylene glycols, preferred are 1,2-alkylene glycols having 5 or 6 carbon atoms such as 1,2-hexanediol, 1,2-pentanediol and 4-methyl-1,2-pentanediol. Above all, 1,2-hexanediol and 4-methyl-1,2-pentanediol having 6 carbon atoms are preferred. The amount of these 1,2-alkylene glycols added is preferably from 0.3% by weight (hereinafter sometimes simply referred to as "%") to 30%, and more preferably from 0.5% to 10%.

Further, in the ink of the invention, it is also preferred to use a glycol ether. As the glycol ether, it is preferred to use one or more selected from diethylene glycol monobutyl ether, triethylene glycol monobutyl ether, propylene glycol monobutyl ether and dipropylene glycol monobutyl ether. The amount of the glycol ether added is preferably from 0.1% to 20%, and more preferably from 0.5% to 10%.

Furthermore, in the ink of the invention, it is preferred to use an acetylene glycol-based surfactant and/or an acetylene alcohol-based surfactant. The use of the acetylene glycol-based surfactant and/or the acetylene alcohol-based surfactant further reduces blurring to improve print quality. Further, drying properties of printing are improved by the addition thereof, which allows high speed printing.

The acetylene glycol-based surfactant and/or the acetylene alcohol-based surfactant is preferably one or more selected from 2,4,7,9-tetramethyl-5-decyne-4,7-diol and an alkylene oxide adduct of 2,4,7,9-tetramethyl-5-decyne-4,7-diol, and 2,4-dimethyl-5-decyne-4-ol and an alkylene oxide adduct of 2,4-dimethyl-5-decyne-4-ol. These are available as Olfin 104 series or E series such as Olfin E1010 manufactured by Air Products (England) and Surfynol 465 or Surfynol 61 manufactured by Nisshin Chemical Industry Co., Ltd.

Further, in the ink of the invention, blurring is reduced by using two or more members such as the 1,2-alkylene glycol and the acetylene glycol-based surfactant and/or the acetylene alcohol-based surfactant, or the glycol ether and the acetylene glycol-based surfactant and/or the acetylene alcohol-based surfactant.

Furthermore, in the ink of the invention, it is preferred that the content (% by weight) of the above-mentioned polymer fine particles is higher than the content (% by weight) of the above-mentioned pigment. The addition of the polymer fine particles in a higher amount by weight unit than the pigment improves the fixability of the pigment particularly as the ink for textiles. Moreover, with respect to the ink for textiles, water-soluble components in the ink are washed away by adding a process of washing with water or surfactant-containing water after printing on a cloth, thereby strengthening the fixing of the polymer fine particles onto the cloth to be able to further improve rubbing resistance.

In addition, in the invention, it is preferred to use at least water, a coloring material and a humectant.

By preparing the above-mentioned inkjet recording ink in this way, there can be obtained the ink composition which is excellent in color developability, stability and fixability and particularly excellent as the inkjet recording ink for textiles.

As the pigments for black ink which can be used in the invention, carbon blacks (C.I. Pigment Black 7) such as furnace black, lamp black, acetylene black and channel black are particularly preferred. However, there can also be used metals such as copper oxides, iron oxides (C.I. Pigment Black 11) and titanium oxide, and organic pigments such as aniline black (C.I. Pigment Black 1).

Further, as the pigments for color inks, there can be used C.I. Pigment Yellow 1 (Fast Yellow G), 3, 1, 2 (Dis-Azo Yellow AAA), 13, 14, 17, 24, 34, 35, 37, 42 (Yellow Iron Oxide), 53, 55, 74, 81, 83 (Dis-Azo Yellow HR), 93, 94, 95, 97, 98, 100, 101, 104, 108, 109, 110, 117, 120, 128, 138, 153, 155, 180, 185, C.I. Pigment Red 1, 2, 3, 5, 17, 22 (Brilliant Fast Scarlet), 23, 31, 38, 48:2 (Permanent Red 2B (Ba)), 48:2 (Permanent Red 2B (Ca)), 48:3 (Permanent Red 2B (Sr)), 48:4 (Permanent Red 2B (Mn)), 49:1, 52:2, 53:1, 57:1 (Brilliant Carmine 6B), 60:1, 63:1, 63:2, 64:1, 81 (Rhodamine 6G Lake), 83, 88, 101 (red iron oxide), 104, 105, 106, 108 (Cadmium Red), 112, 114, 122 (Quinacridone Magenta), 123, 146, 149, 166, 168, 170, 172, 177, 178, 179, 185, 190, 193, 202, 206, 209, 219, C.I. Pigment Violet 19, 23, C.I. Pigment Orange 36, C.I. Pigment Blue 1, 2, 15 (Phthalocyanine Blue R), 15:1, 15:2, 15:3 (Phthalocyanine Blue G), 15:4, 15:6 (Phthalocyanine Blue E), 16, 17:1, 56, 60, 63, C.I. Pigment Green 1, 4, 7, 8, 10, 17, 18, 36 and the like. As described above, various pigments can be used as the coloring material.

Although the above-mentioned pigment is dispersed by using a dispersing machine, various commercially available dispersing machines can be used as the dispersing machine. From the viewpoint of decreased contamination, non-media dispersion is preferred. Specific examples thereof include a wet jet mill (Senus Co., Ltd.), Nanomizer (Nanomizer, Inc.), Homogenizer (Gaulin Corporation), Ultimaizer (Sugino Machine Limited), Microfluidizer (Microfluidics Corporation) and the like.

The amount of the pigment added to the ink of the invention is preferably 0.5 to 30%, and more preferably 1.0

to 15%. When the amount added is less than 0.5%, it becomes impossible to secure printing density. On the other hand, the amount added exceeds 30%, the viscosity of the ink increases or structural viscosity is generated in viscosity characteristics to tend to deteriorate the discharge stability of the ink from the inkjet head.

Further, for the purpose of securing standing stability, stable discharge from the inkjet head, improvement of clogging, or prevention of ink deterioration, various additives such as a humectant, a dissolution aid, a penetration controlling agent, a viscosity modifier, a pH adjuster, a dissolution aid, an antioxidant, a preservative, an antifungal agent, a corrosion inhibitor and a chelate for capturing metal ions which affect dispersion can also be added to the ink of the invention.

Furthermore, the ink of the invention is preferably discharged by a method using an electrostrictive element which induces no heating, such as a piezo element. When heating occurs like a thermal head, the polymer fine particles added and the polymer used for dispersion of the pigment or the like are deteriorated, so that discharge is liable to become unstable. In particular, when a large amount of the ink is discharged over a long period of time like the inkjet ink for textiles, a head inducing heating is unfavorable.

The ink of the invention is excellent particularly as the inkjet recording ink for textiles, but besides applicable to writing things and the like, in addition to inkjet inks such as an inkjet ink for consumer business and an industrial inkjet ink.

Other Preferred Embodiments of the Invention

The constitution described in the above-mentioned embodiment (a) is basic in the ink of the invention, and further, various preferred embodiments are also possible as described below.

The fastness to rubbing of dry rubbing and wet rubbing at the time when printed on a cloth as the ink for textiles is improved by comprising the polymer fine particles containing 70% by weight or more of the alkyl (meth)acrylate and/or the cyclic alkyl (meth)acrylate as the constituent.

As the alkyl (meth)acrylate and/or the cyclic alkyl (meth)acrylate, preferred are an alkyl (meth)acrylate having 1 to 24 carbon atoms and/or a cyclic alkyl (meth)acrylate having 3 to 24 carbon atoms. Examples thereof include methyl (meth)acrylate, ethyl (meth)acrylate, propyl (meth)acrylate, n-butyl (meth)acrylate, isobutyl (meth)acrylate, pentyl (meth)acrylate, hexyl (meth)acrylate, 2-ethylhexyl (meth)acrylate, octyl (meth)acrylate, nonyl (meth)acrylate, decyl (meth)acrylate, t-butylcyclohexyl (meth)acrylate, lauryl (meth)acrylate, isobornyl (meth)acrylate, cetyl (meth)acrylate, stearyl (meth)acrylate, isostearyl (meth)acrylate, tetramethylpiperidyl (meth)acrylate, dicyclopentanyl (meth)acrylate, dicyclopentenyl (meth)acrylate, dicyclopentenyloxy (meth)acrylate, behenyl (meth)acrylate and the like.

Further, in the ink of the invention, the polymer fine particles further contain 5% by weight to 25% by weight of styrene as a constituent, in addition to 70%by weight or more of the alkyl (meth)acrylate and/or the cyclic alkyl (meth)acrylate described above. The fastness to rubbing of dry rubbing and wet rubbing is improved by the aforementioned constitution, and the discharge stability at the time when used as a component of the inkjet ink is improved.

Preferred Embodiment (d) of the Invention

The ink of the invention preferably comprisesa polyalkylene wax having a melting point of 80°C or more. This makes it possible to obtain the inkjet recording ink having more excellent rubbing resistance. In particular, improvement of the rubbing resistance as the characteristic required for the ink for textiles becomes marked. Usually, in the case of the pigment ink for textiles, a cloth is pretreated with a pretreatment agent to improve the color developability, and after printing, a process of improving the rubbing resistance with an after-treatment agent is performed. However, when printing is performed with the ink of the invention, the color developability is high and the rubbing resistance is excellent even without the pretreatment and after-treatment. Accordingly, the process can be significantly simplified, so that energy therefor, the treatment agent, and water and a washing agent for washing can be eliminated.

The melting point of the polyalkylene wax used in the invention is preferably 80°C or more, and more preferably 100°C or more, from the viewpoint of improving the rubbing resistance as described above. Further, as this polyalkylene wax, preferred is polyethylene wax or polypropylene wax. Furthermore, the polyalkylene waxes include a copolymer type of an unsaturated monomer such as propylene, ethylene oxide, acrylic acid, methacrylic acid, vinyl acetate or maleic anhydride, as well as a homopolymer series of ethylene or propylene. In addition, in order to reduce the coefficient of friction, it is possible to use a mixture with polyethylene tetrafluoride, or the like. Further, many kinds thereof are commercially available from makers such as Mitsui Chemicals, Inc., Honeywell Inc., Shamrock Technologies, Inc., Sanyo Chemical Industries, Ltd., Eastman Chemical Company, Allied Signals Inc. and Clariant Corporation.

Preferred Embodiment (e) of the Invention

Preferably, the dispersion is dispersed by using a polymer obtained by polymerizing 50% by weight or more of benzyl acrylate and 15% by weight or less of methacrylic acid and/or acrylic acid. Benzyl acrylate provides high color

development due to the polymer Tg and the refraction index, compared to the case where another acrylate is used. When the amount of benzyl acrylate is less than 50% by weight, the fixability is deteriorated. Accordingly, the preferred range of the amount thereof blended is 50% by weight or more. It is more preferably 60% by weight or more, and still more preferably 70% by weight or more. Further, polymerization with 15% by weight or less of methacrylic acid and/or acrylic acid is preferred. Exceeding 15% by weight results in deterioration of the color developability of the inkjet ink. The preferred range is 10% by weight or less. Further, when methacrylic acid and acrylic acid are compared to each other, the use of acrylic acid is preferred from the viewpoint of fixability.

Preferred Embodiment (f) of the Invention

Preferably, the dispersion contains an organic pigment encapsulated in a water-insoluble polymer obtained by copolymerizing a monomer mixture containing a salt-forming group-containing monomer and a macromer and/or a hydrophobic monomer, and polymer fine particles are obtained by polymerizing at least ethyl acrylate and (meth)acrylic acid as constituents.

As the constituents of the polymer fine particles, it is preferred to use at least ethyl acrylate and (meth)acrylic acid. Further, the amount of ethyl acrylate blended in preparing the polymer fine particles is preferably from 60% by weight to 80% by weight (hereinafter sometimes simply referred to as "%"). By adjusting the compounding ratio of ethyl acrylate in the polymer fine particles within the above-mentioned range, performance under both of dry and wet conditions can be kept suitable, for the rubbing resistance at the time when printed on a cloth.

Further, as another constituent of the polymer fine particles, arbitral selection is possible, as long as it is copolymerizable with ethyl acrylate and (meth)acrylic acid and the polymer fine particles prepared satisfy the above-mentioned conditions of the glass transition temperature and the acid value. In particular, it is preferred to blend an unsaturated vinyl monomer having a "bulky" molecular structure such as an aromatic group, an alicyclic hydrocarbon group or a heterocyclic group. The aromatic groups include a benzyl group, a phenyl group, naphthyl group and the like, the alicyclic hydrocarbon groups include a cycloalkyl group, a cycloalkenyl group, an isobornyl group, a dicyclopentanyl group, a dicyclopentenyl group, an adamantane group and the like, and the heterocyclic groups include a tetrahydrofuran group and the like. By introducing these "bulky" group-containing components, the mechanical strength of the polymer fine particles is enhanced, and the rubbing resistance of printed matter can be improved.

Furthermore, in this embodiment (f), the glass transition temperature of the polymer fine particles is preferably from -50°C to 0°C, and particularly, the fixability of the pigment as the ink for textiles is improved. Exceeding 0°C results in gradual deterioration of the fixability of the pigment, whereas less than 50°C results in a tendency of the discharge from the inkjet head to become unstable. It is more preferably from -25°C to -5°C, and most preferably from -25°C to -10°C. In addition, the acid value of the polymer fine particles is preferably 50 mg KOH/g or less. When the acid value exceeds 50 mg KOH/g, the washing fastness at the time when printed on a cloth as the ink for textiles is deteriorated. More preferably, it is 30 mg KOH/g or less. The acid value can be calculated from constituent units of the polymer by computation. Alternatively, it can also be determined by a method in which the polymer is dissolved in an appropriate solvent (for example, methyl ethyl ketone), followed by titration. Further, the molecular weight of the polymer fine particles is preferably 100,000 or more, and more preferably 200,000 or more. Less than 100,000 results in deterioration of the washing fastness at the time when printed on a cloth as the ink for textiles.

The dispersion contained in the ink of the invention is characterized by one using a water-insoluble polymer (A). The water-insoluble polymer (A) is used in order to improve the color developability.

The water-insoluble polymer as used herein means a polymer having a dissolved amount of 10 g or less, preferably 5 g or less and more preferably 1 g or less when the polymer is dried at 105°C for 2 hours and dissolved in 100 g of water at 25°C. When the polymer has a salt-forming group, the dissolved amount is the dissolved amount at the time when the salt-forming group of the polymer is 100% neutralized with acetic acid or sodium hydroxide depending on the kind thereof.

The water-insoluble polymer (A) contained in the ink of the invention is a water-insoluble polymer obtained by copolymerizing a monomer mixture containing (a) a salt-forming group-containing monomer (hereinafter sometimes referred to as a "component (a)"), (b) a macromer (hereinafter sometimes referred to as a "component (b)") and/or (c) a hydrophobic monomer (hereinafter sometimes referred to as a "component (c)"). This water-insoluble polymer has a constituent unit derived from the component (a), a constituent unit derived from the component (b) and a constituent unit derived from the component (c).

The salt-forming group-containing monomer (a) is used from the viewpoint of enhancing the dispersion stability of the resulting dispersion. The salt-forming groups include a carboxyl group, a sulfonic acid group, a phosphoric acid group, an amino group and an ammonium group.

The salt-forming group-containing monomers (a) include cationic monomers, anionic monomers and the like. Examples thereof include those described in JP-A-9-286939, page 5, line 24 to column 8, line 29, and the like.

Typical examples of the cationic monomers include unsaturated amine-containing monomers, unsaturated

ammonium salt-containing monomers and the like. Above all, preferred are N,N-dimethylaminoethyl (meth)acrylate, N-(N',N'-dimethylaminopropyl) (meth)acrylamide and vinyl pyrrolidone.

Typical examples of the anionic monomers include unsaturated carboxylic acid monomers, unsaturated sulfonic acid monomers, unsaturated phosphoric acid monomers and the like.

The unsaturated carboxylic acid monomers include acrylic acid, methacrylic acid, crotonic acid, itaconic acid, maleic acid, fumaric acid, citraconic acid, 2-methacryloyloxymethylsuccinic acid and the like. The unsaturated sulfonic acid monomers include styrenesulfonic acid, 2-acrylamido-2-methylpropanesulfonic acid, 3-sulfopropyl (meth)acrylate, bis(3-sulfopropyl)itaconic ester and the like. The unsaturated phosphoric acid monomers include vinylphosphonic acid, vinyl phosphate, bis(methacryloxyethyl) phosphate, diphenyl-2-acryloyloxyethyl phosphate, diphenyl-2-methacryloyloxyethyl phosphate, dibutyl-2-acryloyloxyethyl phosphate and the like.

Of the above-mentioned anionic monomers, from the viewpoints of the dispersion stability and discharge stability, preferred are the unsaturated carboxylic acid monomers, and more preferred are acrylic acid and methacrylic acid.

The macromer (b) is used from the viewpoint of enhancing the dispersion stability of the polymer (A), when the polymer (A) contains the pigment. The macromers (b) include macromers as polymerizable unsaturated group-containing monomers having a molecular weight of 500 to 100,000 and preferably 1,000 to 10,000. Incidentally, the molecular weight of the polymer as used herein is the styrene-conversion weight average molecular weight measured by gel permeation chromatography (GPC).

Of the macromers (b), from the viewpoint of the dispersion stability of the polymer (A), and the like, preferred are styrenic macromers and aromatic groupcontaining (meth)acrylate-based macromers which have a polymerizable functional group at one terminal end thereof.

The styrenic macromers include homopolymers of styrenic monomers, and copolymers of the styrenic monomers with other monomers. The styrenic monomers include styrene, 2-methyl styrene, vinyltoluene, ethylvinylbenzene, vinylnaphthalene, chlorostyrene and the like. The aromatic group-containing (meth)acrylate-based macromers include homopolymers of aromatic group-containing (meth)acrylates and copolymers thereof with other monomers. The aromatic group-containing (meth)acrylate is a (meth)acrylate having an arylalkyl group having 7 to 22 carbon atoms, preferably 7 to 18 carbon atoms and more preferably 7 to 12 carbon atoms, which may have a hetero atom-containing substituent group, or an aryl group having 6 to 22 carbon atoms, preferably 6 to 18 carbon atoms and more preferably 6 to 12 carbon atoms, which may have a hetero atom-containing substituent group. The hetero atom-containing substituent groups include a halogen atom, an ester group, an ether group, a hydroxyl group and the like. Examples thereof include benzyl (meth)acrylate, phenoxyethyl (meth)acrylate, 2-hydroxy-3-phenoxypropyl acrylate, 2-methacryloyloxyethyl-2-hydroxypropyl phthalate and the like, and particularly preferred is benzyl (meth)acrylate.

The polymerizable functional group existing at one terminal end of each of these macromers is preferably an acryloyloxy group or a methacryloyloxy group, and the other monomers to be copolymerized therewith are preferably acrylonitrile and the like.

The content of the styrene-based monomer in the styrenic macro mer or the aromatic group-containing (meth)acrylate in the aromatic group-containing (meth)acrylate-based macromer is preferably 50% by weight or more, and more preferably 70% by weight or more, from the viewpoint of enhancing an affinity for the pigment.

The macromer (b) may contain a side chain comprising another constituent unit such as an organopolysiloxane or the like. This side chain can be obtained, for example, by copolymerizing a silicone-based macromer having a polymerizable functional group at one terminal end thereof, which is represented by the following formula (1):

$$CH_2=C(CH_3)-COOC_3H_6-[Si(CH_3)_2O]_tSi(CH_3)_3 \qquad (1)$$

wherein t represents a number of 8 to 40.

The styrenic macromers which are commercially available as the component (b) include, for example, AS-6(S), AN-6(S) and HS-6(S), product names of Toagosei Co., Ltd., and the like.

The hydrophobic monomer (c) is used from the viewpoints of improving the color developability and glossiness. The hydrophobic monomers (c) include alkyl (meth)acrylates, aromatic group-containing monomers and the like.

As the alkyl (meth)acrylate, preferred is one containing an alkyl group having 1 to 22 carbon atoms, preferably 6 to 18 carbon atoms. Examples thereof include methyl (meth)acrylate, ethyl (meth)acrylate, (iso)propyl (meth)acrylate, (iso- or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, (iso)stearyl (meth)acrylate and the like.

Incidentally, in this specification, the terms "(iso- or tertiary-)" and "(iso) " mean both the case where these groups are present and the case where these groups are not present. When these groups are not present, it shows "normal". Further, the term "(meth)acrylate" means acrylate, methacrylate or both of them.

The aromatic group-containing monomer may have a hetero atom-containing substituent group, and is preferably a vinyl monomer containing an aromatic group having 6 to 22 carbon atoms and preferably 6 to 12 carbon atoms. Examples thereof include the above-mentioned styrenic monomer (component c-1) and the above-mentioned aromatic

group-containing (meth)acrylate (component c-2). The hetero atom-containing substituent groups include those described above.

Of the components (c), the styrenic monomer (component c-1) is preferred from the viewpoints of the glossiness and color developability. The styrenic monomers include those described above, and particularly preferred are styrene and 2-methyl styrene. The content of the component (c-1) in the component (c) is preferably from 10% by weight to 100% by weight (hereinafter sometimes simply referred to as "%"), and more preferably from 20% to 80%, from the viewpoints of improving the color developability and glossiness.

Further, the aromatic group-containing (meth)acrylate (c-2) components include those described above, and preferred are benzyl (meth)acrylate, phenoxyethyl (meth)acrylate and the like. The content of the component (c-2) in the component (c) is preferably from 10% to 100%, and more preferably from 20% to 80%, from the viewpoint of the glossiness. Furthermore, it is also preferred that the components (c-1) and (c-2) are used in combination with each other.

The monomer mixture may further contain (d) a hydroxyl group-containing monomer (hereinafter sometimes referred to as a "component (d) "). The hydroxyl group-containing monomer (d) exhibits an excellent effect of enhancing the dispersion stability.

The components (d) include 2-hydroxyethyl (meth)acrylate, 3-hydroxypropyl (meth)acrylate, polyethylene glycol (n=2 to 30 wherein n represents an average molar number of addition of oxyalkylene groups, hereinafter the same) (meth)acrylate, polypropylene glycol (n=2 to 30) (meth)acrylate, poly(ethylene glycol (n=1 to 15)/propylene glycol (n=1 to 15)) (meth)acrylate and the like. Of these, preferred are 2-hydroxyethyl (meth)acrylate, polyethylene glycol monomethacrylate and polypropylene glycol methacrylate.

The monomer mixture may further contain (e) a monomer (hereinafter sometimes referred to as a "component (e)") represented by the following formula (2):

$$CH_2=C(R^1)COO(R^2O)_pR^3 \qquad (2)$$

wherein $R^1$ is a hydrogen atom or a lower alkyl group having 1 to 5 carbon atoms, $R^2$ is a divalent hydrocarbon group having 1 to 30 carbon atoms, which may contain a hetero atom, $R^3$ is a monovalent hydrocarbon group having 1 to 30 carbon atoms, which may contain a hetero atom, and p means the average molar number of addition and represents a number of 1 to 60 and preferably a number of 1 to 30.

The component (e) exhibits an excellent effect of improving the color developability and glossiness of the ink.

In formula (2), the hetero atoms include, for example, a nitrogen atom, an oxygen atom, a halogen atom and a sulfur atom.

Suitable examples of $R^1$ include a methyl group, an ethyl group, an (iso)propyl group and the like.

Suitable examples of $R^2O$ include an oxyethylene group, an oxy(iso)propylene group, an oxytetramethylene group, an oxyheptamethylene group, an oxyhexamethylene group and an oxyalkylene group having 2 to 7 carbon atoms comprising a combination of two or more of these oxyalkylenes.

Suitable examples of $R^3$ include an aliphatic alkyl group having 1 to 30 carbon atoms and preferably 1 to 20 carbon atoms, an aromatic ring-containing alkyl group having 7 to 30 carbon atoms and a heterocycle-containing alkyl group having 4 to 30 carbon atoms.

Specific examples of the components (e) include methoxy polyethylene glycol (1 to 30: represents the value of p in formula (2), hereinafter the same) (meth)acrylate, methoxy polytetramethylene glycol (1 to 30) (meth)acrylate, ethoxy polyethylene glycol (1 to 30) (meth)acrylate, octoxy polyethylene glycol (1 to 30) (meth)acrylate, polyethylene glycol (1 to 30) (meth)acrylate 2-ethylhexyl ether, (iso)propoxy polyethylene glycol (1 to 30) (meth)acrylate, butoxy polyethylene glycol (1 to 30) (meth)acrylate, methoxy polypropylene glycol (1 to 30) (meth)acrylate, methoxy (ethylene glycol/propylene glycol copolymer) (1 to 30, ethylene glycol of which: 1 to 29) (meth)acrylate and the like. Of these, preferred are octoxy polyethylene glycol (1 to 30) (meth)acrylate and polyethylene glycol (1 to 30) (meth)acrylate 2-ethylhexyl ether.

Specific examples of the commercially available components (d) and (e) include polyfunctional acrylate monomers (NK esters) M-40G, M-90G and M-230G supplied from Shin-Nakamura Kagaku Kogyo Co., Ltd., and Blemmer Series PE-90, PE-200, PE-350, PME-100, PME-200, PME-400, PME-1000, PP-500, PP-800, PP-1000, AP-150, AP-400, AP-550, AP-800, 50PEP-300, 50POEP-800B and the like supplied from NOF Corporation.

The above-mentioned components (a) to (e) can each be used either alone or as a mixture of two or more thereof.

In producing the water-insoluble polymer, the contents of the above-mentioned components (a) to (e) in the monomer mixture (contents as non-neutralized amounts, hereinafter the same) or the contents of the respective constituent units derived from the components (a) to (e) in the water-insoluble polymer are as follows.

The content of the component (a) is preferably from 2% to 40%, more preferably from 2% to 30%, and still more preferably from 3% to 20%, from the viewpoint of the dispersion stability of the resulting dispersion.

The content of the component (b) is preferably from 1% to 25%, and more preferably from 5% to 20%, particularly from the viewpoint of enhancing an interaction with the pigment.

The content of the component (d) is preferably from 5% to 98%, and more preferably from 10% to 60%, from the viewpoints of the glossiness and image clarity.
The weight ratio of the components (a), (b) and (c) in the water-insoluble polymer ((a)/[(b)+(c)]) is preferably from 0.01 to 1, more preferably from 0.02 to 0.67, and still more preferably from 0.03 to 0.50, from the viewpoints of the glossiness and image clarity.
The content of the component (d) is preferably from 5% to 40%, and more preferably from 7% to 20%, from the viewpoint of the dispersion stability of the resulting dispersion.
The content of the component (e) is preferably from 5% to 50%, and more preferably from 10% to 40%, from the viewpoint of the dispersion stability of the resulting dispersion.
The total content of [the component (a) + the component (d)] in the monomer mixture is preferably from 6% to 60%, and more preferably from 10% to 50%, from the viewpoint of the dispersion stability of the resulting dispersion. The total content of [the component (a) + the component (e)] in the monomer mixture is preferably from 6% to 75%, and more preferably from 13% to 50%, from the viewpoint of the dispersion stability of the resulting dispersion. Further, the total content of [the component (a) + the component (d) + the component (e)] in the monomer mixture is preferably from 6% to 60%, and more preferably from 7% to 50%, from the viewpoint of the dispersion stability of the resulting dispersion.

Preferred Embodiment (g) of the Invention

Preferably, the dispersion contains an organic pigment encapsulated in a resin layer formed by emulsion polymerization, and polymer fine particles which are obtained by polymerizing at least ethyl acrylate and (meth)acrylic acid as constituents.
As the polymer fine particles contained in the ink of the invention, there are preferably used the polymer fine particles described in the above-mentioned embodiment (f).
The dispersion contained in the ink of the invention is characterized by containing an organic pigment encapsulated in a resin layer formed by emulsion polymerization. The dispersion stability of the pigment is improved by encapsulating the organic pigment with the resin layer formed by the emulsion polymerization.
In the emulsion polymerization for forming the resin layer for encapsulating the organic resin of the invention, an ordinary non-reactive surfactant can be used. However, it is preferred to use an ionic polymerizable surfactant. The use of the ionic polymerizable surfactant makes it possible to decrease the amount of the surfactant remaining in the dispersion prepared, because the surfactant itself becomes a constituent of the resin layer. A process for removing the remaining surfactant from the dispersion can be omitted thereby. Furthermore, there is also exhibited an effect of improving the dispersion stability of the dispersion with an ionic group derived from the ionic polymerizable surfactant.
The ionic polymerizable surfactant is a surfactant having an ionic group, a hydrophobic group and further a polymerizable group. The ionic groups include an anionic group and a cationic group, and are appropriately determined depending on the use of the dispersion and characteristics required. The ionic polymerizable surfactant is called either an anionic polymerizable surfactant or a cationic polymerizable surfactant, depending on whether it has an anionic group or a cationic group as the ionic group.
As the anionic group, there can be suitably exemplified one selected from the group consisting of a sulfone group, a sulfine group, a carboxyl group, a phosphate group, a sulfonate ester group, a sulfonate ester group, a phosphoester group and salts thereof. The salts include Na salts, K salts, Ca salts, organic amine salts and the like.
The cationic group is preferably a cationic group selected from the group consisting of a primary ammonium cation, a secondary ammonium cation, a tertiary ammonium cation and a quaternary ammonium cation. The primary ammonium cations include a monoalkylammonium cation ($RNH_3^+$) and the like, the secondary ammonium cations include a dialkylammonium cation ($R_2NH_2^+$) and the like, the tertiary ammonium cations include a trialkylammonium cation ($R_3NH^+$) and the like, and the quaternary ammonium cations include $R_4NH^+$ and the like. R as used herein is a hydrophobic group, which includes the following. Further, counter anions of the above-mentioned cationic groups include $Cl^-$, $Br^-$, $I^-$, $CH_3OSO_3^-$, $C_2H_5\ OSO_3^-$ and the like.
The hydrophobic group is preferably one or two or more selected from the group consisting of an alkyl group having 8 to 16 carbon atoms and an aryl group such as a phenyl group or a phenylene group, and may also have both the alkyl group and the aryl group in its molecule.
The polymerizable group is preferably a radically polymerizable unsaturated hydrocarbon group, and specifically, it is preferably a group selected from the group consisting of a vinyl group, an allyl group, an acryloyl group, a methacryloyl group, a propenyl group, a vinylidene group and a vinylene group. Of these, an allyl group, a methacryloyl group and an acryloyl group are particularly preferred.
Specific examples of the anionic polymerizable surfactants include anionic allyl derivatives described in JP-B-49-46291, JP-B-1-24142 and JP-A-62-104802, anionic propenyl derivatives described in JP-A-62-221431, anionic acrylic acid derivatives described in JP-A-62-34947 and JP-A-55-11525, anionic itaconic acid derivatives described in JP-B-46-34898 and JP-A-51-30284, and the like.

As the anionic polymerizable surfactant used in the invention, preferred is, for example, a compound represented by the following general formula (31):

[Chem. 1]

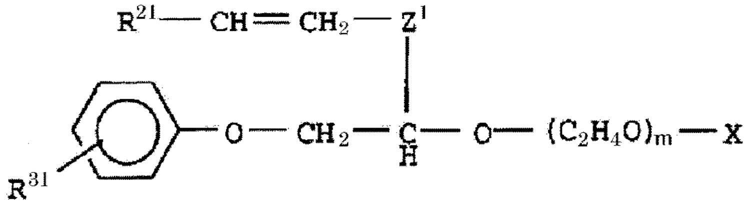

(31)

wherein $R^{21}$ and $R^{31}$ are each independently a hydrogen atom or a hydrocarbon group having 1 to 12 carbon atoms, $Z^1$ is a group represented by a carbon-carbon single bond or the formula $-CH_2-O-CH_2-$, m is an integer of 2 to 20, and X is a group represented by the formula $-SO_3M^1$, wherein $M^1$ is an alkali metal, an ammonium salt or an alkanolamine; or, for example, a compound represented by the following general formula (32):

[Chem. 2]

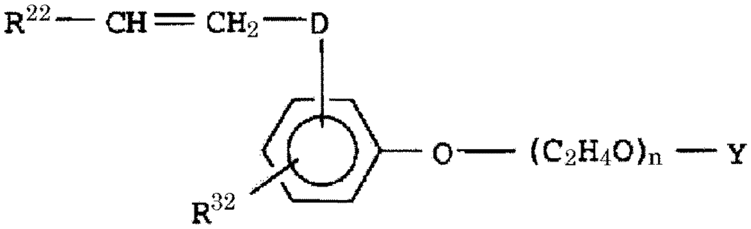

(32)

wherein $R^{22}$ and $R^{32}$ are each independently a hydrogen atom or a hydrocarbon group having 1 to 12 carbon atoms, D is a group represented by a carbon-carbon single bond or the formula $-CH_2-O-CH_2-$, n is an integer of 2 to 20, and Y is a group represented by the formula $-SO_3M^2$, wherein $M^2$ is an alkali metal, an ammonium salt or an alkanolamine.

The anionic polymerizable surfactants represented by the above-mentioned formula (31) include compounds described in JP-A-5-320276 and JP-A-10-316909. By appropriately adjusting the value of m in formula (31), it is possible to adjust the hydrophilicity of a surface of the resin layer encapsulating the pigment particle. Preferred examples of the polymerizable surfactants represented by formula (31) include a compound represented by the following formula (310), and specific examples thereof include compounds represented by the following formulas (31a) to (31d):

[Chem. 3]

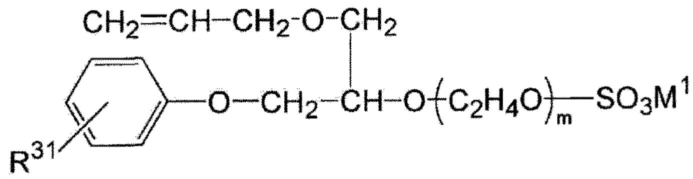

(310)

wherein $R^{31}$, m and $M^1$ have the same meanings as given for the compound represented by formula (31);

[Chem. 4]

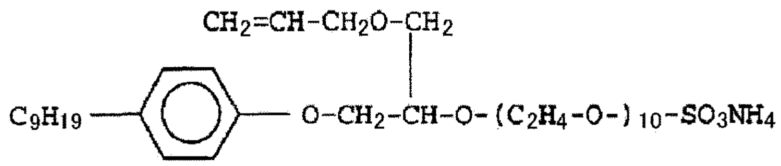

(31a)

[Chem. 5]

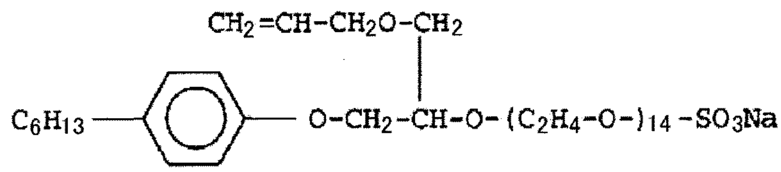

(31b)

[Chem. 6]

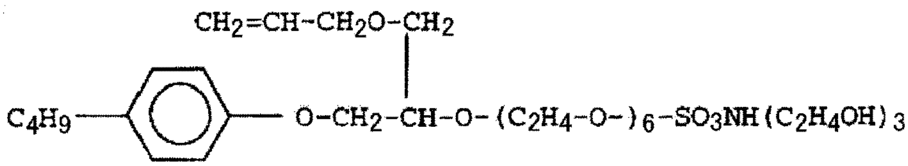

(31c)

[Chem. 7]

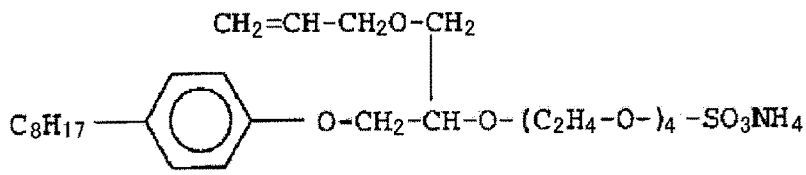

(31d)

As the above-mentioned anionic polymerizable surfactants, there can also be used commercially available products. Adeka Reasoap SE-10N supplied from Asahi Denka Co., Ltd. is a compound in which $M^1$ is $NH_4$, $R^{31}$ is $C_9H_{19}$ and m is 10 in the compound represented by formula (310). Similarly, Adeka Reasoap SE-20N is a compound in which $M^1$ is $NH_4$, $R^{31}$ is $C_9H_{19}$ and m is 20 in the compound represented by formula (310).

Further, as the anionic polymerizable surfactant used in the invention, preferred is, for example, a compound represented by general formula (33):

[Chem. 8]

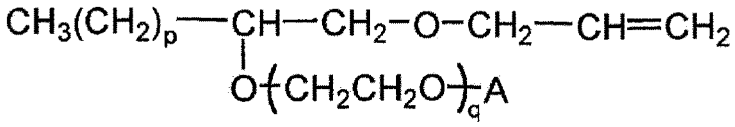

(33)

wherein p is 9 or 11, q is an integer of 2 to 20, and A is a group represented by - $SO_3M^3$, wherein $M^3$ is an alkali metal, an ammonium salt or an alkanolamine.

Preferred examples of the anionic polymerizable surfactants represented by formula (33) include a compound represented by the following formula (33'):

[Chem. 9]

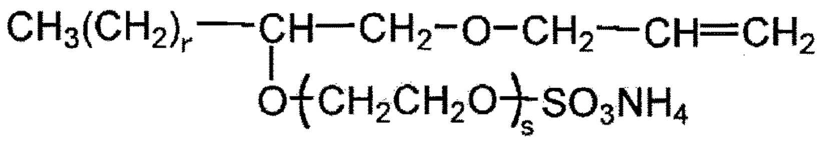

(33')

wherein r is 9 or 11, and s is 5 or 10.

As the above-mentioned anionic polymerizable surfactants, there can also be used commercially available products. The commercially available products include, for example, Aqualon KH series (Aqualon KH-5 and Aqualon KH-10) (the above are trade names) supplied from Daiichi Kogyo Seiyaku Co., Ltd. Aqualon KH-5 is a mixture of a compound in which r is 9 and s is 5, and a compound in which r is 11 and s is 5, in the above-mentioned formula (33'). Aqualon KH-10 is a mixture of a compound in which r is 9 and s is 10, and a compound in which r is 11 and s is 10, in the above-mentioned formula.

Further, the anionic polymerizable surfactants used in the invention also include a compound represented by the following general formula (34):

[Chem. 10]

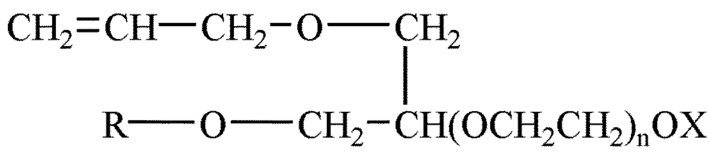

(34)

wherein R is an alkyl group having 8 to 15 carbon atoms, n is an integer of 2 to 20, and X is a group represented by $-SO_3B$, wherein B is an alkali metal, an ammonium salt or an alkanolamine.

As the above-mentioned anionic polymerizable surfactants, there can also be used commercially available products. The commercially available products include, for example, Adeka Reasoap SR series (Adeka Reasoap SR-10, SR-20 and SR-1025) (the above are trade names) supplied from Asahi Denka Co., Ltd. The Adeka Reasoap SR series are compounds in which B is represented by $NH_4$ in the above-mentioned general formula (34). SR-10 is a compound in which n is 10, and SR-20 is a compound in which n is 20.

Furthermore, the anionic polymerizable surfactants used in the invention also include a compound represented by the following general formula (A):

[Chem. 11]

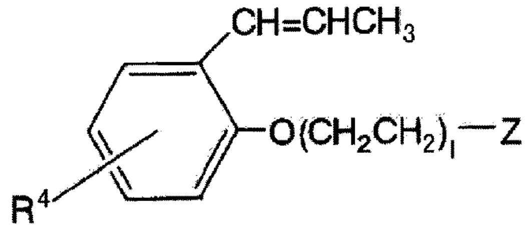

Z; $-SO_3M^4$

(A)

wherein $R^4$ represents a hydrogen atom or a hydrocarbon group having 1 to 12 carbon atoms, 1 represents a number of 2 to 20, and $M^4$ represents an alkali metal, an ammonium salt or an alkanolamine.

As the above-mentioned anionic polymerizable surfactants, there can also be used commercially available products. The commercially available products include, for example, Aqualon HS series (Aqualon HS-10, HS-20 and HS-1025) (the above are trade names) supplied from Daiichi Kogyo Yakuhin Co., Ltd.

Further, the anionic polymerizable surfactants used in the invention include, for example, a sodium alkylallylsulfosuccinate represented by the following general formula (35):

[Chem. 12]

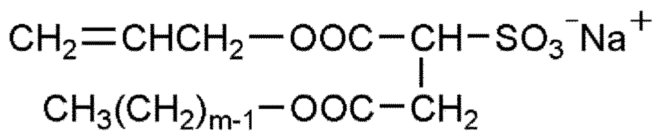

(m=12,16)

(35)

As the above-mentioned anionic polymerizable surfactants, there can also be used commercially available products. The commercially available products include, for example, Eleminol JS-2 supplied from Sanyo Chemical Industries, Ltd., which is a compound in which m is 12 in the above-mentioned general formula (35).

Further, the anionic polymerizable surfactants used in the invention include, for example, methacryloyloxypolyoxyallylene sulfuric ester sodium salt represented by general formula (36). In the following formula, n is from 1 to 20.

[Chem. 13]

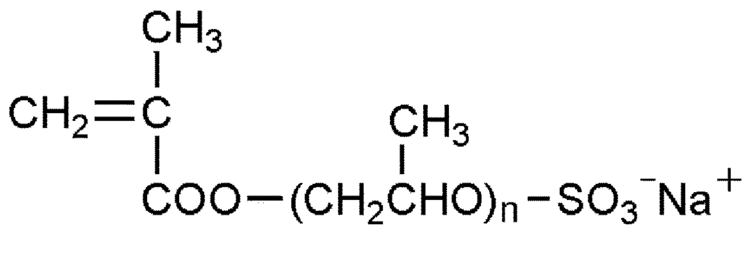

(36)

As the above-mentioned anionic polymerizable surfactants, there can also be used commercially available products. The commercially available products include, for example, Eleminol RS-30 supplied from Sanyo Chemical Industries, Ltd., which is a compound in which n is 9 in the above-mentioned general formula (36).

Further, the anionic polymerizable surfactants used in the invention include, for example, a compound represented by the following general formula (37):

[Chem. 14]

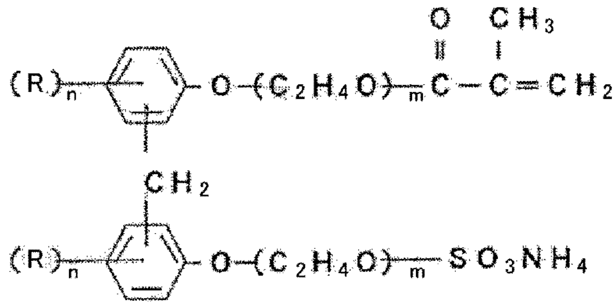

(37)

As the above-mentioned anionic polymerizable surfactants, there can also be used commercially available products. The commercially available products include, for example, Antox MS-60 supplied from Nippon Nyukazai Co., Ltd.

The anionic polymerizable surfactants exemplified above can be used either alone or as a mixture of two or more thereof.

The cationic polymerizable surfactants include, for example, a compound represented by the general formula $R_{[4-(1+m+n)]}R^1{}_1R^2{}_mR^3{}_nN^+ \cdot X^-$ (wherein R is a polymerizable group, $R^1$, $R^2$ and $R^3$ are each an alkyl group having 8 to 16 carbon atoms or an aryl group such as a phenylene group, $X^-$ is $Cl^-$, $Br^-$, $I^-$, $CH_3OSO_3^-$ or $C_2H_5OSO_3^-$, and l, m and n are each 1 or 0). The polymerizable groups as used herein include those described above.

Specific examples of the cationic polymerizable surfactants used in the invention include methacrylic acid dimethylaminoethyl chloride, methacrylic acid dimethylaminoethyloctyl chloride, methacrylic acid dimethylaminoethylcetyl chloride, methacrylic acid dimethylaminoethyldecyl chloride, methacrylic acid dimethylaminoethyldodecyl chloride, methacrylic acid dimethylaminoethyltetradecyl chloride and the like. The cationic polymerizable surfactants exemplified above can be used either alone or as a mixture of two or more thereof.

In the emulsion polymerization for forming the resin layer for encapsulating the organic resin of the invention, it is also possible to use a hydrophobic monomer as a constituent of the resin layer. The hydrophobic monomer means a compound having at least a hydrophobic group and a polymerizable group in its structure, and there can be exemplified one in which the hydrophobic group is selected from the group consisting of an aliphatic hydrocarbon group, an alicyclic hydrocarbon group and an aromatic hydrocarbon group.

The above-mentioned aliphatic hydrocarbon groups include a methyl group, an ethyl group, a propyl group and the like, the alicyclic hydrocarbon groups include a cyclohexyl group, a dicyclopentenyl group, an isobornyl group and the like, and the aromatic hydrocarbon groups include a benzyl group, a phenyl group, a naphthyl group and the like.

The polymerizable groups of the above-mentioned hydrophobic monomers include the same ones as described for the above-mentioned ionic polymerizable surfactants.

Specific examples of the hydrophobic monomers include styrene derivatives such as styrene, methylstyrene, vinyltoluene, dimethylstyrene, chlorostyrene, dichlorostyrene, t-butylstyrene, bromostyrene and p-chloromethylstyrene; monofunctional acrylic esters such as methyl acrylate, ethyl acrylate, isopropyl acrylate, n-butyl acrylate, butoxyethyl acrylate, isobutyl acrylate, n-amyl acrylate, isoamyl acrylate, n-hexyl acrylate, octyl acrylate, decyl acrylate, dodecyl acrylate, octadecyl acrylate, benzyl acrylate, phenyl acrylate, phenoxyethyl acrylate, cyclohexyl acrylate, dicyclopentanyl acrylate, dicyclopentenyl acrylate, dicyclopentenyloxyethyl acrylate, tetrahydrofurfuryl acrylate, isobornyl acrylate, isoamyl acrylate, lauryl acrylate, stearyl acrylate, behenyl acrylate, ethoxy diethylene glycol acrylate, methoxy propylene glycol acrylate, phenoxy polyethylene glycol acrylate, nonyl phenol EO adduct acrylate, isooctyl acrylate, isomyristyl acrylate, isostearyl acrylate, 2-ethylhexyldiglycol acrylate and octoxy polyethylene glycol polypropylene glycol monoacrylate; monofunctional methacrylic esters such as methyl methacrylate, ethyl methacrylate, isopropyl methacrylate, n-butyl methacrylate, i-butyl methacrylate, t-butyl methacrylate, n-amyl methacrylate, isoamyl methacrylate, n-hexyl methacrylate, 2-ethylhexyl methacrylate, lauryl methacrylate, tridecyl methacrylate, stearyl methacrylate, isodecyl methacrylate, octyl methacrylate, decyl methacrylate, dodecyl methacrylate, octadecyl methacrylate, methoxy diethylene glycol methacrylate, polypropylene glycol monomethacrylate, benzyl methacrylate, phenyl methacrylate, phenoxyethyl methacrylate, cyclohexyl methacrylate, tetrahydrofurfuryl methacrylate, t-butylcyclohexyl methacrylate, behenyl methacrylate, dicyclopentanyl methacrylate, dicyclopentenyl methacrylate, dicyclopentenyloxyethyl methacrylate, butoxymethyl methacrylate, isobornyl methacrylate and octoxy polyethylene glycol methacrylate; allyl compounds such as allylbenzene, allyl-3-cyclohexane propionate, 1-allyl-3,4-dimethoxybenzene, allyl phenoxyacetate, allyl phenylacetate, allylcyclohexane and an allyl multivalent carboxylate; unsaturated esters of fumaric acid, maleic acid and itaconic acid; and radically polymerizable group-containing monomers such as an N-substituted maleimide and a cyclic olefin; and the like.

In the emulsion polymerization for forming the resin layer for encapsulating the organic resin of the invention, another polymerizable monomer component can be used as a constituent of the resin layer within the range not impairing the effect of the invention, in addition to the above-mentioned various surfactants and hydrophobic monomers. The other polymerizable monomers used in the invention include, for example, a crosslinkable monomer. The crosslinkable monomer is added to polymerization components and copolymerized with the hydrophobic monomer, thereby being able to enhance the mechanical strength, heat resistance, solvent resistance and the like of the polymer. For example, in the inkjet recording ink, this can also enhance the dispersibility of the pigment particles, and the storage stability and discharge properties of the ink.

The crosslinkable monomers which can be used in the invention include one having a compound having two or more unsaturated hydrocarbon groups of at least one kind selected from the group consisting of a vinyl group, an allyl group, an acryloyl group, a methacryloyl group, a propenyl group, a vinylidene group and a vinylene group. Specific examples of the crosslinkable monomers include, for example, ethylene glycol diacrylate, diethylene glycol diacrylate, triethylene glycol diacrylate, tetraethylene glycol diacrylate, polyethylene glycol diacrylate, allyl acrylate, bis(acryloxyethyl)hydroxyethyl isocyanurate, bis(acryloxyneopentyl glycol) adipate, 1,3-butylene glycol diacrylate, 1,6-hexanediol diacrylate, neopentyl glycol diacrylate, propylene glycol diacrylate, polypropylene glycol diacrylate, 2-hydroxy-1,3-diacryloxypropane, 2,2-bis[4-(acryloxy)phenyl]propane, 2,2-bis[4-(acryloxyethoxy)phenyl]propane, 2,2-bis[4-(acryloxyethoxydiethoxy)phenyl]propane, 2,2-bis[4-(acryloxyethoxypolyethoxy)phenyl]propane, hydroxy pivalic acid neopentyl glycol diacrylate, dipentaerythritol hexaacrylate, dipentaerythritol monohydroxypentaacrylate, ditrimethylolpropane tetraacrylate, pentaerythritol triacrylate, tetrabromobisphenol A diacrylate, triglycerol diacrylate, trimethylolpropane triacrylate, tris(acryloxyethyl) isocyanurate, ethylene glycol dimethacrylate, diethylene glycol dimethacrylate, triethylene glycol dimethacrylate, tetraethylene glycol dimethacrylate, polyethylene glycol dimethacrylate, propylene glycol dimethacrylate, polypropylene glycol dimethacrylate, 1,3-butylene glycol dimethacrylate, 1,4-butanediol dimethacrylate, 1,6-hexanediol dimethacrylate, neopentyl glycol dimethacrylate, 2-hydroxy-1,3-dimethacryloxypropane, 2,2-bis[4-(methacryloxy)phenyl]propane, 2,2-bis[4-(methacryloxyethoxy)phenyl]propane, 2,2-bis[4-(methacryloxyethoxydiethoxy)phenyl]propane, 2,2-bis[4-(methacryloxyethoxypolyethoxy)phenyl]propane, tetrabromobisphenol A dimethacrylate, dicyclopentanyl dimethacrylate, dipentaerythritol hexamethacrylate, glycerol dimethacrylate, hydroxy pivalic acid neopentyl glycol dimethacrylate, dipentaerythritol monohydroxypentamethacrylate, ditrimethylolpropane tetramethacrylate, pentaerythritol trimethacrylate, pentaerythritol tetramethacrylate, triglycerol dimethacrylate, trimethylolpropane trimethacrylate, tris-(methacryloxyethyl) isocyanurate, allyl methacrylate, divinylbenzene, diallyl phthalate, diallyl terephthalate, diallyl isophthalate, diethylene glycol bisallyl carbonate and the like.

The emulsion polymerization reaction for forming the resin layer for encapsulating the organic pigment of the invention can be conducted by using a known polymerization initiator. Specific examples of the polymerization initiators include, for example, 2,2'-azobisisobutyronitrile, 2,2'-azobis(2,4-dimethylvaleronitrile), 2,2'-azobis(2,3-dimethylbutyronitrile), 2,2'-azobis(2-methylbutyronitrile), 2,2'-azobis(2,3,3-trimethylbutyronitrile), 2,2'-azobis(2-isopropylbutyronitrile), 1,1'-azobis(cyclohexane-1-carbonitrile), 2,2'-azobis(4-methoxy-2,4-dimethylvaleronitrile), 2-(carbamoylazo)isobutyronitrile, 4,4'-azobis(4-cyanovaleric acid, dimethyl-2,2'-azobisisobutyrate, peroxide compounds such as butyl peroxide, propyl peroxide, butyryl peroxide, benzoyl isobutyryl peroxide and benzoyl peroxide, and water-soluble polymerization initiators such as potassium persulfate, ammonium persulfate, sodium persulfate, 2,2'-azobis(2-methylpropionamidine) dihydrochloride and 4,4'-azobis(4-cyanovaleric acid). Further, there can also be used a redox initiator in which potassium persulfate, ammonium persulfate, sodium persulfate or the like is combined with sodium sulfite, sodium hyposulfite, ferrous sulfate or the like.

## EXAMPLES

The invention will be illustrated in greater detail below, but the invention should not be construed as being limited to the following Examples.

### [Example A] (not according to the present invention)

### (Example A-1) (not according to the present invention)

#### (1) Production of Pigment Dispersion A1

In pigment dispersion A1, Monarch 880 manufactured by Cabot Corporation was used as carbon black (Pigment Black 7). A surface of the carbon black was oxidized in the same manner as in JP-A-8-3498 to make it dispersible in water, thereby preparing pigment dispersion A1. The particle size was measured by using a Microtrac size distribution

analyzer, UPA250 (manufactured by Nikkiso Co., Ltd.). As a result, it was 110 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 4 parts of glycidoxy acrylate, 15 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 6 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -15°C. The styrene conversion molecular weight was 150,000, when measured using gel permeation chromatography (GPC) of 7100 system manufactured by Hitachi, Ltd. and using THF as a solvent. The acid value was 20 mg KOH/g. The acid value was measured by the following method. The above-mentioned aqueous dispersion of polymer fine particles is collected in a state prior to neutralization with sodium hydroxide, and the solid concentration thereof is exactly measured by a thermobalance (TG-2121 manufactured by Seiko Electron Industry Co., Ltd.). Then, about 10 g of this aqueous dispersion of polymer fine particles is accurately weighed and taken in a stoppered conical flask, and 100 ml of a 2-propanol-tetrahydrofuran mixed solution (1:2) is added to dissolve the polymer fine particles. This is titrated with a 0.1 mol/L 2-propanol solution of potassium hydroxide using a phenolphthalein reagent until a pink color continuing for 30 seconds is shown, thereby performing measurement. The acid value is determined by formula (1):

$$\text{Acid value (mg KOH/g)} = (5.611 \times a \times f)/S \qquad (1)$$

S: The collection quantity of the sample.
a: The amount of consumption (ml) of the 0.1 mol/L 2-propanol solution of potassium hydroxide
f: The factor of the 0.1 mol/L 2-propanol solution of potassium hydroxide
Incidentally, a is the titration value (ml) minus the blank value (ml).

(3) Preparation of Inkjet Recording Ink

Examples of compositions suitable for inkjet recording inks will be shown in Table 2 below. An inkjet recording ink of the invention was prepared by using dispersion A1 prepared by the above-mentioned method and mixing with vehicle components shown in Table 2. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)-2Na salt for reducing the effects of metal ions in the ink system were each added to ion-exchange water.

(4) Rubbing Resistance Test and Dry Cleaning Test

Using the ink of Example A-1, and using PX-V600 manufactured by Seiko Epson Corporation as an inkjet printer, a sample in which solid printing was made on cotton was prepared. That sample was subjected to a rubbing fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 1.

(5) Measurement of Discharge Stability

Using PX-V600 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink which caused no print distortion at all was evaluated as AA, one which caused a print distortion at one place as A, one which caused print distortions at 2 to 3 places as B, one which caused print distortions at 4 to 5 places as C, and one which caused print distortions at 6 or more places as D. The results are shown in Table 1.

(Example A-2) (not according to the present invention)

(1) Production of Pigment Dispersion A2

First, in pigment dispersion A2, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 75 parts of benzyl acrylate, 2 parts of acrylic acid and 0.3 part of t-dodecyl mercaptan were placed therein and heated to 70°C. Then, 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were placed in the dripping funnel, and a polymerization reaction of a dispersion polymer was conducted while adding them dropwise to the reaction vessel, taking 4 hours. Then, methyl ethyl ketone was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As a result, it was 40°C.

Further, 40 parts of the above-mentioned dispersion polymer solution, 30 parts of Pigment Blue 15:3, 100 parts of a 0.1 mol/L aqueous sodium hydroxide solution and 30 parts of methyl ethyl ketone were mixed, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Then, the entire amount of methyl ethyl ketone and a part of the water were distilled off using a rotary evaporator, and the pH was adjusted to 9 by neutralization with a 0.1 mol/L sodium hydroxide solution. Then, filtration through a 0.3-μm membrane filter and adjustment with ion-exchange water were performed to prepare pigment dispersion A2 having a pigment concentration of 15%. The particle size was measured by the same method as in Example A-1. As a result, it was 80 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 19 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 16 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion B (EM-B). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -17°C. The molecular weight was measured in the same manner as in Example A-1. As a result, it was 200,000. The acid value was 20 mg KOH/g. The acid value was measured by the same method as in Example A-1.

(3) Preparation of Inkjet Recording Ink

Examples of compositions suitable for inkjet recording inks are shown in Table 2 below. An inkjet recording ink of the invention was prepared in the same manner as in Example A-1 by using the dispersion A2 prepared by the above-mentioned method and mixing with vehicle components shown in Table 2.

(4) Rubbing Resistance Test and Dry Cleaning Test

Using the ink of Example A-2, the rubbing resistance test and the dry cleaning test were made in the same manner and by the same evaluation method as in Example A-1. The results of the rubbing resistance test and the dry cleaning test are shown in Table 1.

(5) Measurement of Discharge Stability

Using the ink of Example A-2, the discharge stability was measured in the same manner and by the same evaluation method as in Example A-1. The measurement results of the discharge stability are shown in Table 1.

(Example A-3) (not according to the present invention)

(1) Production of Pigment Dispersion A3

First, using Pigment Violet 19 (quinacridone pigment: manufactured by Clariant Corporation), a pigment dispersion was prepared in the same manner as pigment dispersion A2, and this was taken as pigment dispersion A3. The particle size was measured by the same method as in Example A-1. As a result, it was 90 nm.

(2) Preparation of Polymer Fine Particles

The same polymer fine particles as in Example A-2 were used.

(3) Preparation of Inkjet Recording Ink

Examples of compositions suitable for inkjet recording inks are shown in Table 2 below. An inkjet recording ink of the invention was prepared and evaluated in the same manner as in Example A-1 by using dispersion A3 prepared by the above-mentioned method and mixing with vehicle components shown in Table 2.

(4) Rubbing Resistance Test and Dry Cleaning Test

Using the ink of Example A-3, the rubbing resistance test and the dry cleaning test were made in the same manner and by the same evaluation method as in Example A-1. The results of the rubbing resistance test and the dry cleaning test are shown in Table 1.

(5) Measurement of Discharge Stability

Using the ink of Example A-3, the discharge stability was measured in the same manner and by the same evaluation method as in Example A-1. The measurement results of the discharge stability are shown in Table 1.

(Example A-4) (not according to the present invention)

(1) Production of Pigment Dispersion A4

First, using Pigment Yellow 14 (azo pigment: manufactured by Clariant Corporation), a pigment dispersion was prepared in the same manner as pigment dispersion A2, and this was taken as pigment dispersion A4. The particle size was measured by the same method as in Example A-1. As a result, it was 115 nm.

(2) Preparation of Polymer Fine Particles

The same polymer fine particles as in Example A-2 were used.

(3) Preparation of Inkjet Recording Ink

Examples of compositions suitable for inkjet recording inks are shown in Table 2 below. An inkjet recording ink of the invention was prepared and evaluated in the same manner as in Example A-1 by using dispersion A4 prepared by the above-mentioned method and mixing with vehicle components shown in Table 2.

(4) Rubbing Resistance Test and Dry Cleaning Test

Using the ink of Example A-4, the rubbing resistance test and the dry cleaning test were made in the same manner and by the same evaluation method as in Example A-1. The results of the rubbing resistance test and the dry cleaning test are shown in Table 1.

(5) Measurement of Discharge Stability

Using the ink of Example A-4, the discharge stability was measured in the same manner and by the same evaluation method as in Example A-1. The measurement results of the discharge stability are shown in Table 1.

(Comparative Example A-1)

In Comparative Example A-1, an ink was prepared and evaluated in the same manner as in Example A-1 with the exception that polymer fine particles having a glass transition temperature of 0°C, which were obtained by changing a part of ethyl acrylate to styrene, were used. An emulsion prepared using the polymer fine particles was taken as emulsion B (EM-B). An ink composition is shown in Table 2. The rubbing resistance test, the dry cleaning test and the discharge stability test were made in the same manner as in Example A-1. The results thereof are shown in Table 1.

(Comparative Example A-2)

In Comparative Example A-2, an ink was prepared and evaluated in the same manner as in Example A-2 with the exception that polymer fine particles having a glass transition temperature of 10°C, which were obtained by changing parts of ethyl acrylate and butyl acrylate to styrene, were used. An emulsion prepared using the polymer fine particles was taken as emulsion C (EM-C). An ink composition is shown in Table 2. The rubbing resistance test, the dry cleaning test and the discharge stability test were made in the same manner as in Example A-1. The results thereof are shown in Table 1.

(Comparative Example A-3)

In Comparative Example A-3, inks were prepared and evaluated in the same manner as in Example A-3 with the exception that dispersions having pigment particle sizes of 350 nm and 45 nm were prepared. The particle size was measured by the same method as in Example A-1. The dispersion having a particle size of 350 nm was taken as pigment dispersion A3A, and the dispersion having a particle size of 45 nm was taken as pigment dispersion A3B. Ink compositions are shown in Table 2. The rubbing resistance test, the dry cleaning test and the discharge stability test were made in the same manner as in Example A-1. The results thereof are shown in Table 1.

(Comparative Example A-4)

In Comparative Example A-4, inks were prepared and evaluated in the same manner as in Example A-4 with the exception that the acid value of the polymer fine particles to be added was changed to 150 mg KOH/g and 150 mg KOH/g. An emulsion prepared by using the polymer fine particles having an acid value of 120 mg KOH/g was taken as emulsion D (EM-D), and an emulsion prepared by using the polymer fine particles having an acid value of 120 mg KOH/g was taken as emulsion E (EM-E). Ink compositions are shown in Table 2. The rubbing resistance test, the dry cleaning test and the discharge stability test were made in the same manner as in Example A-1. The results thereof are shown in Table 1.

[Table 1]

Table 1: Results of Rubbing Resistance, Dry Cleaning and Discharge Stability in Examples A-1 to A-4 and Comparative Examples A-1 to A-4

| | Tg | Particle Size | Acid Value | Rubbing Resistance | | Dry Cleaning | Discharge Stability |
|---|---|---|---|---|---|---|---|
| | | | | Dry | Wet | | |
| Example A-1 | -15 | 110 | 20 | 4 | 4 | 4 | A |

(continued)

| | Tg | Particle Size | Acid Value | Rubbing Resistance | | Dry Cleaning | Discharge Stability |
|---|---|---|---|---|---|---|---|
| | | | | Dry | Wet | | |
| Example A-2 | -17 | 80 | 20 | 4/5 | 4 | 4/5 | A |
| Example A-3 | -17 | 90 | 20 | 5 | 5 | 4/5 | A |
| Example A-4 | -17 | 115 | 20 | 5 | 5 | 5 | A |
| Comparative Example A-1 | 0 | 110 | 20 | 3 | 2 | 2/3 | A |
| Comparative Example A-2 | 10 | 80 | 20 | 2/3 | 1/2 | 2 | A |
| Comparative Example A-3 | -17 | 350 | 20 | 2 | 2 | 2/3 | D |
| | -17 | 45 | 20 | 4 | 3/4 | 4 | C |
| Comparative Example A-4 | -17 | 115 | 120 | 3 | 3 | 3 | A |
| | -17 | 115 | 150 | 2/3 | 2/3 | 2/3 | B |
| Tg is in °C; the particle size is the average particle size (nm) of the pigment: and the acid value is in mg KOH/g. | | | | | | | |

The rubbing resistance and dry cleaning are based on the evaluation standards of JIS.

[Table 2]

Table 2: Ink Compositions wt% of Examples A-1 to A-4 and Comparative Examples A-1 to A-4

| | Example | | | | Comparative Example | | | | | |
|---|---|---|---|---|---|---|---|---|---|---|
| | A-1 | A-2 | A-3 | A-4 | A-1 | A-2 | A-3 | | A-4 | |
| Dispersion A1 | 4.5 | - | - | - | 4.5 | - | - | - | - | - |
| Dispersion A2 | - | 3.5 | - | - | - | 3.5 | - | - | - | - |
| Dispersion A3 | - | - | 4.5 | - | - | - | - | - | - | - |
| Dispersion A4 | - | - | - | 4.5 | - | - | - | - | 4.5 | 4.5 |
| Dispersion A3A | - | - | - | - | - | - | 4.5 | - | - | - |
| Dispersion A3B | - | - | - | - | - | - | | 4.5 | - | - |
| EM-A | 6 | 5 | 6 | 6 | - | - | 6 | 6 | - | - |
| EM-B | - | - | - | - | 6 | - | - | - | - | - |
| EM-C | - | - | - | - | - | 5 | - | - | - | - |
| EM-D | - | - | - | - | - | - | - | - | 6 | - |
| EM-E | - | - | - | - | - | - | - | - | - | 6 |
| 1,2-HD | 2.0 | 3.0 | 3.0 | 2.0 | 2.0 | 3.0 | 3.0 | 3.0 | 2.0 | 2.0 |
| 1,2-PD | - | - | - | 1.0 | - | - | - | - | 1.0 | 1.0 |
| TEGmBE | 2.0 | 1.0 | 1.0 | 2.0 | 2.0 | 1.0 | 1.0 | 1.0 | 2.0 | 2.0 |
| S-104 | 0.3 | 0.3 | 0.3 | 0.3 | 0.3 | 0.3 | 0.3 | 0.3 | 0.3 | 0.3 |
| S-465 | 0.5 | 0.5 | 0.3 | 0.5 | 0.5 | 0.5 | 0.3 | 0.3 | 0.5 | 0.5 |
| S-61 | - | - | 0.2 | - | - | - | 0.2 | 0.2 | -- | |
| Glycerin | 10 | 12 | 10 | 10 | 10 | 12 | 10 | 10 | 10 | 10 |
| TMP | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 |
| 2-P | 1.0 | - | - | - | 1.0 | - | - | - | - | - |
| TEA | 1.0 | 1.0 | 1.0 | 1.0 | 1.0 | 1.0 | 1.0 | 1.0 | 1.0 | 1.0 |

(continued)

| | Example | | | | Comparative Example | | | | | |
|---|---|---|---|---|---|---|---|---|---|---|
| | A-1 | A-2 | A-3 | A-4 | A-1 | A-2 | A-3 | | A-4 | |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

(Example A-5) (not according to the present invention)

(1) Production of Pigment Dispersion A5

In pigment dispersion A5, MA100 manufactured by Mitsubishi Chemical Corporation was used as carbon black (PBk7). A surface of the carbon black was oxidized in the same manner as in JP-A-8-3498 to make it dispersible in water, thereby preparing pigment dispersion A5. The particle size was measured by the same method as in Example A-1. As a result, it was 120 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 15 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of butyl acrylate, 16 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion G (EM-G). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -19°C. The molecular weight was measured in the same manner as in Example A-1. As a result, it was 180,000. The acid value was 18 mg KOH/g. The acid value was measured by the same method as in Example A-1.

(3) Preparation of Inkjet Recording Ink

Examples of compositions suitable for inkjet recording inks are shown in Table 4 below. An inkjet recording ink of the invention was prepared and evaluated in the same manner as in Example A-1 by using dispersion A5 prepared by the above-mentioned method and mixing with vehicle components shown in Table 4.

(4) Rubbing Resistance Test and Dry Cleaning Test

Using the ink of Example A-5, the rubbing resistance test and the dry cleaning test were made in the same manner and by the same evaluation method as in Example A-1. The results of the rubbing resistance test and the dry cleaning test are shown in Table 3.

(5) Measurement of Discharge Stability

Using the ink of Example A-5, the discharge stability was measured in the same manner and by the same evaluation method as in Example A-1. The measurement results of the discharge stability are shown in Table 3.

(Example A-6) (not according to the present invention)

(1) Production of Pigment Dispersion A6

First, in pigment dispersion A6, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 45 parts of styrene, 30 parts of polyethylene glycol (400) acrylate, 10 parts of benzyl acrylate, 2 parts of acrylic acid and 0.3 part of t-dodecyl mercaptan were placed therein and heated to 70°C. Then, 150 parts of styrene, 100 parts of polyethylene glycol (400) acrylate, 15 parts of acrylic acid, 5 parts of butyl acrylate, 1 part of t-dodecyl mercaptan and 5 parts of sodium persulfate, which were separately prepared, were placed in the dripping funnel, and a polymerization reaction of a dispersion polymer was conducted while adding them dropwise to the reaction vessel, taking 4 hours. Then, water was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry

Co., Ltd.). As a result, it was 45°C.

Further, 40 parts of the above-mentioned dispersion polymer solution and 30 parts of Pigment Blue 15:3 and 100 parts of a 0.1 mol/L aqueous sodium hydroxide solution were mixed, followed by dispersion using an Eiger mill using zirconia beads, taking 2 hours. Thereafter, the dispersed mixture was transferred to another vessel, and 300 parts of ion-exchange water was added, followed by further stirring for one hour. Then, the pH was adjusted to 9 by neutralization with a 0.1 mol/L sodium hydroxide solution. Then, filtration through a 0.3-μm membrane filter was performed to prepare pigment dispersion A6 having a solid content (the dispersion polymer and Pigment Blue 15:3) of 20%. The particle size was measured by the same method as in Example A-1. As a result, it was 100 nm. The molecular weight was measured in the same manner as in Example A-1. As a result, it was 210,000.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 25 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 20 parts of ethyl acrylate, 20 parts of butyl acrylate, 20 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion F (EM-F). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -21°C. The molecular weight was measured in the same manner as in Example A-1. As a result, it was 200,000. The acid value was 18 mg KOH/g. The acid value was measured by the same method as in Example A-1.

(3) Preparation of Inkjet Recording Ink

Examples of compositions suitable for inkjet recording inks are shown in Table 4 below. An inkjet recording ink of the invention was prepared and evaluated in the same manner as in Example A-1 by using dispersion A6 prepared by the above-mentioned method and mixing with vehicle components shown in Table 4.

(4) Rubbing Resistance Test and Dry Cleaning Test

Using the ink of Example A-6, the rubbing resistance test and the dry cleaning test were made in the same manner and by the same evaluation method as in Example A-1. The results of the rubbing resistance test and the dry cleaning test are shown in Table 3.

(5) Measurement of Discharge Stability

Using the ink of Example A-6, the discharge stability was measured in the same manner and by the same evaluation method as in Example A-1. The measurement results of the discharge stability are shown in Table 3.

(Example A-7) (not according to the present invention)

(1) Production of Pigment Dispersion A7

First, using Pigment Red 122 (dimethylquinacridone pigment: manufactured by Clariant Corporation), pigment dispersion A7 was prepared in the same manner as pigment dispersion A2. The particle size was measured by the same method as in Example A-1. As a result, it was 80 nm.

(2) Preparation of Polymer Fine Particles

The same polymer fine particles as in Example A-6 were used.

(3) Preparation of Inkjet Recording Ink

Examples of compositions suitable for inkjet recording inks are shown in Table 4 below. An inkjet recording ink of the invention was prepared and evaluated in the same manner as in Example A-1 by using dispersion A7 prepared by the above-mentioned method and mixing with vehicle components shown in Table 4.

(4) Rubbing Resistance Test and Dry Cleaning Test

Using the ink of Example A-7, the rubbing resistance test and the dry cleaning test were made in the same manner and by the same evaluation method as in Example A-1. The results of the rubbing resistance test and the dry cleaning test are shown in Table 3.

(5) Measurement of Discharge Stability

Using the ink of Example A-7, the discharge stability was measured in the same manner and by the same evaluation method as in Example A-1. The measurement results of the discharge stability are shown in Table 3.

(Example A-8) (not according to the present invention)

(1) Production of Pigment Dispersion A8

First, using Pigment Yellow 180 (benzimidazolone disazo pigment: manufactured by Clariant Corporation), pigment dispersion A8 was prepared in the same manner as pigment dispersion A2. The particle size was measured by the same method as in Example A-1. As a result, it was 130 nm.

(2) Preparation of Polymer Fine Particles

The same polymer fine particles as in Example A-6 were used.

(3) Preparation of Inkjet Recording Ink

Examples of compositions suitable for inkjet recording inks are shown in Table 4 below. An inkjet recording ink of the invention was prepared and evaluated in the same manner as in Example A-1 by using dispersion A8 prepared by the above-mentioned method and mixing with vehicle components shown in Table 4.

(4) Rubbing Resistance Test and Dry Cleaning Test

Using the ink of Example A-8, the rubbing resistance test and the dry cleaning test were made in the same manner and by the same evaluation method as in Example A-1. The results of the rubbing resistance test and the dry cleaning test are shown in Table 3.

(5) Measurement of Discharge Stability

Using the ink of Example A-8, the discharge stability was measured in the same manner and by the same evaluation method as in Example A-1. The measurement results of the discharge stability are shown in Table 3.

(Reference Example A-5)

In Reference Example A-5, inks were prepared and evaluated in the same manner as in Example A-5 with the exception that the molecular weight of the polymer fine particles to be added was changed to 90,000 and 1,100,000. An emulsion having a molecular weight of 90,000 was taken as emulsion H (EM-H), and an emulsion having a molecular weight of 1,100,000 was taken as emulsion I (EM-I). Ink compositions are shown in Table 4. The rubbing resistance test, the dry cleaning test and the discharge stability test were made in the same manner as in Example A-5. The results thereof are shown in Table 3. The measurement of the particle size of the polymer fine particles was made in the same manner as in Example A-1.

(Reference Example A-6)

In Reference Example A-6, an ink was prepared and evaluated in the same manner as in Example A-6 with the exception that 1,2-hexanediol as a 1,2-alkylene glycol was replaced by glycerin. An ink composition is shown in Table 4. The rubbing resistance test, the dry cleaning test and the discharge stability test were made in the same manner as in Example A-5. The results thereof are shown in Table 3.

(Reference Example A-7)

In Reference Example A-7, an ink was prepared and evaluated in the same manner as in Example A-7 with the exception that the acetylene glycol-based surfactant and the acetylene alcohol-based surfactant were replaced by glycerin. An ink composition is shown in Table 4. The rubbing resistance test, the dry cleaning test and the discharge stability test were made in the same manner as in Example A-5. The results thereof are shown in Table 3.

(Reference Example A-8)

In Reference Example A-8, inks were prepared and evaluated in the same manner as in Example A-8 with the exception that the amount of the polymer fine particles to be added was changed to 80% and 50%, by the ratio to the pigment. Ink compositions are shown in Table 4. The rubbing resistance test, the dry cleaning test and the discharge stability test were made in the same manner as in Example A-5. The results thereof are shown in Table 3.

[Table 3]

Table 3: Results of Rubbing Resistance, Dry Cleaning and Discharge Stability in Examples A-5 to A-8 and Reference Examples A-5 to A-8

| | Tg | Particle Size | Acid Value | Molecular Weight | Ratio to Pigment | Rubbing Resistance | | Dry Cleaning | Discharge Stability |
|---|---|---|---|---|---|---|---|---|---|
| | | | | | | Dry | Wet | | |
| Example A-5 | -19 | 120 | 18 | 1.8 | 120 | 4/5 | 4/5 | 5 | A |
| Example A-6 | -21 | 100 | 18 | 2.0 | 150 | 5 | 4/5 | 5 | A |
| Example A-7 | -21 | 80 | 18 | 2.0 | 100 | 5 | 4/5 | 5 | A |
| Example A-8 | -21 | 130 | 18 | 2.0 | 120 | 5 | 5 | 5 | A |
| Reference Example A-5 | -19 | 120 | 18 | 0.9 | 120 | 3 | 3 | 2 | A |
| | -19 | 120 | 18 | 11.0 | 120 | 3 | 2/3 | 3 | D |
| Reference Example A-6 | -21 | 100 | 18 | 2.0 | 150 | 5 | 4/5 | 5 | C |
| Reference Example A-7 | -21 | 80 | 18 | 2.0 | 100 | 4/5 | 4/5 | 5 | C |
| Reference Example A-8 | -21 | 130 | 18 | 2.0 | 80 | 3 | 3 | 3 | A |
| | -21 | 130 | 18 | 2.0 | 50 | 2 | 2 | 2 | A |

Tg is in °C; the particle size is the average particle size (nm) of the pigment; the acid value is in mg KOH/g; and the molecular weight in Table 3 is in $\times 10^5$.

The ratio to the pigment is indicated by % of the polymer fine particles to the pigment.

The rubbing resistance and dry cleaning are based on the evaluation standards of JIS.

[Table 4]

Table 4: Ink Compositions wt% of Examples A-5 to A-8 and Reference Examples A-5 to A-8

| | Example | | | | Reference Example | | | | | |
|---|---|---|---|---|---|---|---|---|---|---|
| | A-5 | A-6 | A-7 | A-8 | A-5 | | A-6 | A-7 | A-8 | |
| Dispersion A5 | 4.0 | - | - | - | 4.0 | 4.0 | - | - | - | - |
| Dispersion A6 | - | 3.2 | - | - | - | - | 3.2 | - | - | - |
| Dispersion A7 | - | - | 4.0 | - | - | - | - | 4.0 | - | - |
| Dispersion A8 | - | - | - | 4.0 | - | - | - | - | 4.0 | 4.0 |
| EM-F | 5.0 | - | - | - | - | - | - | - | - | - |
| EM-G | - | 4.8 | 4.0 | 5.0 | - | - | 4.8 | 4.0 | 3.2 | 2 |
| EM-H | - | - | - | - | 5.0 | - | - | - | - | - |
| EM-I | - | - | - | - | - | 5.0 | - | - | 6 | - |
| 1,2-HD | 2.0 | 3.0 | 3.0 | 2.0 | 2.0 | 2.0 | - | 3.0 | 2.0 | 2.0 |
| 1,2-PD | - | - | - | 1.0 | - | - | - | - | 1.0 | 1.0 |
| TEGmBE | 2.0 | 1.0 | 1.0 | 2.0 | 2.0 | 2.0 | 1.0 | 1.0 | 2.0 | 2.0 |
| S-104 | 0.3 | 0.3 | 0.3 | 0.3 | 0.3 | 0.3 | 0.3 | - | 0.3 | 0.3 |
| S-465 | 0.5 | 0.5 | 0.3 | 0.5 | 0.5 | 0.5 | 0.3 | - | 0.5 | 0.5 |
| S-61 | - | - | 0.2 | - | - | - | 0.2 | - | -- | |
| Glycerin | 10 | 12 | 10 | 10 | 10 | 12 | 15 | 11 | 10 | 10 |
| TMP | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 |
| 2-P | 1.0 | - | - | - | 1.0 | - | - | - | - | - |
| TEA | 1.0 | 1.0 | 1.0 | 1.0 | 1.0 | 1.0 | 1.0 | 1.0 | 1.0 | 1.0 |

(continued)

| | Example | | | | Reference Example | | | | | |
|---|---|---|---|---|---|---|---|---|---|---|
| | A-5 | A-6 | A-7 | A-8 | A-5 | | A-6 | A-7 | A-8 | |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

Examples of the other preferred embodiments according to the invention will be described below.

[Example B] (not according to the present invention)

(Example B-1) (not according to the present invention)

(1) Production of Pigment Dispersion B1

In pigment dispersion B1, Monarch 880 manufactured by Cabot Corporation was used as carbon black (Pigment Black 7). A surface of the carbon black was oxidized in the same manner as in JP-A-8-3498 to make it dispersible in water, thereby preparing pigment dispersion B1. The particle size was measured by using a Microtrac size distribution analyzer, UPA250 (manufactured by Nikkiso Co., Ltd.). As a result, it was 110 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 4 parts of glycidoxy acrylate, 15 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 6 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -15°C. The styrene conversion molecular weight was 150,000, when measured using gel permeation chromatography (GPC) of 7100 system manufactured by Hitachi, Ltd. and using THF as a solvent. The acid value by the titration method was 20 mg KOH/g.

(3) Preparation of Inkjet Recording Ink

Examples of compositions suitable for inkjet recording inks will be shown in Table 6 below. An inkjet recording ink of the invention was prepared by using dispersion B1 prepared by the above-mentioned method and mixing with vehicle components shown in Table 6. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)·2Na salt for reducing the effects of metal ions in the ink system were each added to ion-exchange water.

(4) Rubbing Resistance Test and Dry Cleaning Test

Using the ink of Example B-1, and using PX-V600 manufactured by Seiko Epson Corporation as an inkjet printer, a sample in which solid printing was made on a cotton cloth was prepared, and heat treated at 150°C for 5 minutes. That sample was subjected to a rubbing fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 5.

(5) Measurement of Discharge Stability

Using PX-V600 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink which caused no print distortion at all was evaluated as AA, one which caused a print distortion at one place as A, one

which caused print distortions at 2 to 3 places as B, one which caused print distortions at 4 to 5 places as C, and one which caused print distortions at 6 or more places as D. The results are shown in Table 5.

(Example B-2) (not according to the present invention)

(1) Production of Pigment Dispersion B2

First, in pigment dispersion B2, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 75 parts of benzyl acrylate, 2 parts of acrylic acid, and 0.3 part of t-dodecyl mercaptan were placed therein and heated to 70°C. Then, 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were placed in the dripping funnel, and a polymerization reaction of a dispersion polymer was conducted while adding them dropwise to the reaction vessel, taking 4 hours. Then, methyl ethyl ketone was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As a result, it was 40°C.

Further, 40 parts of the above-mentioned dispersion polymer solution, 30 parts of Pigment Blue 15:3, 100 parts of a 0.1 mol/L aqueous sodium hydroxide solution and 30 parts of methyl ethyl ketone were mixed, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Then, the entire amount of methyl ethyl ketone and a part of the water were distilled off using a rotary evaporator, and the pH was adjusted to 9 by neutralization with a 0.1 mol/L sodium hydroxide solution. Then, filtration through a 0.3-μm membrane filter and adjustment with ion-exchange water were performed to prepare pigment dispersion B2 having a pigment concentration of 15%. The particle size was measured by the same method as in Example B-1. As a result, it was 80 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 19 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 16 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion B (EM-B). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -17°C. The molecular weight was measured in the same manner as in Example B-1. As a result, it was 200,000. The acid value by the titration method was 20 mg KOH/g.

(3) Preparation of Inkjet Recording Ink

Examples of compositions suitable for inkjet recording inks are shown in Table 6 below. An inkjet recording ink of the invention was prepared in the same manner as in Example B-1 by using dispersion B2 prepared by the above-mentioned method and mixing with vehicle components shown in Table 6.

(4) Rubbing Resistance Test and Dry Cleaning Test

Using the ink of Example B-2, the rubbing resistance test and the dry cleaning test were made in the same manner and by the same evaluation method as in Example B-1. The results of the rubbing resistance test and the dry cleaning test are shown in Table 5.

(5) Measurement of Discharge Stability

Using the ink of Example B-2, the discharge stability was measured in the same manner and by the same evaluation method as in Example B-1. The measurement results of the discharge stability are shown in Table 5.

(Example B-3) (not according to the present invention)

(1) Production of Pigment Dispersion B3

First, using Pigment Violet 19 (quinacridone pigment: manufactured by Clariant Corporation), a pigment dispersion was prepared in the same manner as pigment dispersion B2, and this was taken as pigment dispersion B3. The particle size was measured by the same method as in Example B-1. As a result, it was 90 nm.

(2) Preparation of Polymer Fine Particles

The same polymer fine particles as in Example B-2 were used.

(3) Preparation of Inkjet Recording Ink

Examples of compositions suitable for inkjet recording inks are shown in Table 6 below. An inkjet recording ink of the invention was prepared and evaluated in the same manner as in Example B-1 by using dispersion B3 prepared by the above-mentioned method and mixing with vehicle components shown in Table 6.

(4) Rubbing Resistance Test and Dry Cleaning Test

Using the ink of Example B-3, the rubbing resistance test and the dry cleaning test were made in the same manner and by the same evaluation method as in Example B-1. The results of the rubbing resistance test and the dry cleaning test are shown in Table 5.

(5) Measurement of Discharge Stability

Using the ink of Example B-3, the discharge stability was measured in the same manner and by the same evaluation method as in Example B-1. The measurement results of the discharge stability are shown in Table 5.

(Example B-4) (not according to the present invention)

(1) Production of Pigment Dispersion B4

First, using Pigment Yellow 14 (azo pigment: manufactured by Clariant Corporation), a pigment dispersion was prepared in the same manner as pigment dispersion B2, and this was taken as pigment dispersion B4. The particle size was measured by the same method as in Example B-1. As a result, it was 115 nm.

(2) Preparation of Polymer Fine Particles

The same polymer fine particles as in Example B-2 were used.

(3) Preparation of Inkjet Recording Ink

Examples of compositions suitable for inkjet recording inks are shown in Table 6 below. An inkjet recording ink of the invention was prepared and evaluated in the same manner as in Example B-1 by using dispersion B4 prepared by the above-mentioned method and mixing with vehicle components shown in Table 6.

(4) Rubbing Resistance Test and Dry Cleaning Test

Using the ink of Example B-4, the rubbing resistance test and the dry cleaning test were made in the same manner and by the same evaluation method as in Example B-1. The results of the rubbing resistance test and the dry cleaning test are shown in Table 5.

(5) Measurement of Discharge Stability

Using the ink of Example B-4, the discharge stability was measured in the same manner and by the same evaluation method as in Example B-1. The measurement results of the discharge stability are shown in Table 5.

(Comparative Example B-1)

In Comparative Example B-1, an ink was prepared and evaluated in the same manner as in Example B-1 with the exception that polymer fine particles having a glass transition temperature of 0°C, which were obtained by changing the total amount (45 parts) of ethyl acrylate to 45 parts of benzyl methacrylate, were used. An emulsion prepared using the polymer fine particles was taken as emulsion C (EM-C). An ink composition is shown in Table 6. The rubbing resistance test, the dry cleaning test and the discharge stability test were made in the same manner as in Example B-1. The results thereof are shown in Table 5.

(Comparative Example B-2)

In Comparative Example B-2, an ink was prepared and evaluated in the same manner as in Example B-2 with the exception that polymer fine particles having a glass transition temperature of 10°C, which were obtained by changing the total amount (49 parts) of ethyl acrylate to benzyl methacrylate and 10 parts of butyl acrylate to 10 parts of benzyl methacrylate, were used. An emulsion prepared using the polymer fine particles was taken as emulsion D (EM-D). An ink composition is shown in Table 6. The rubbing resistance test, the dry cleaning test and the discharge stability test were made in the same manner as in Example B-1. The results thereof are shown in Table 5.

(Comparative Example B-3)

In Comparative Example B-3, inks were prepared and evaluated in the same manner as in Example B-3 with the exception that dispersions having pigment particle sizes of 350 nm and 45 nm were prepared. The particle size was measured by the same method as in Example B-1. The dispersion having a particle size of 350 nm was taken as pigment dispersion B3A, and the dispersion having a particle size of 45 nm was taken as pigment dispersion B3B. Ink compositions are shown in Table 6. The rubbing resistance test, the dry cleaning test and the discharge stability test were made in the same manner as in Example B-1. The results thereof are shown in Table 5.

(Comparative Example B-4)

In Comparative Example B-4, inks were prepared and evaluated in the same manner as in Example B-4 with the exception that the acid value of the polymer fine particles to be added was changed to 120 mg KOH/g and 150 mg KOH/g. An emulsion prepared by using the polymer fine particles having an acid value of 120 mg KOH/g was taken as emulsion E (EM-E), and an emulsion prepared by using the polymer fine particles having an acid value of 150 mg KOH/g was taken as emulsion F (EM-F). Ink compositions are shown in Table 6. The rubbing resistance test, the dry cleaning test and the discharge stability test were made in the same manner as in Example B-1. The results thereof are shown in Table 5.

(Reference Example B-5)

In Reference Example B-5, an ink was prepared and evaluated in the same manner as in Example B-2 with the exception that polymer fine particles not containing 70% by weight or more of an alkyl (meth)acrylate and/or a cyclic alkyl (meth)acrylate as constituents thereof (containing 65.3% by weight) were prepared by changing 42 parts of ethyl acrylate to 42 parts of styrene, changing the total amount of butyl methacrylate and 15 parts of methyl acrylate to 2-ethylhexyl acrylate, and adjusting the amount added so as to have a glass transition temperature of -17°C. An emulsion prepared by using the polymer fine particles was taken as emulsion G (EM-G). An ink composition is shown in Table 6. The rubbing resistance test, the dry cleaning test and the discharge stability test were made in the same manner as in Example B-1. The results thereof are shown in Table 5.

(Reference Example B-6)

In Reference Example B-6, an ink was prepared and evaluated in the same manner as in Example B-2 with the exception that polymer fine particles not containing 70% by weight or more of an alkyl (meth)acrylate and/or a cyclic alkyl (meth)acrylate as constituents thereof (containing 66.9% by weight) were prepared by changing 40 parts of ethyl

acrylate to 40 parts of styrene, changing the total amount of methyl acrylate to lauryl acrylate, also changing 15 parts of butyl acrylate to 15 parts of lauryl acrylate, and adjusting the amount added so as to have a glass transition temperature of -17°C. An emulsion prepared by using the polymer fine particles was taken as emulsion H (EM-H). An ink composition is shown in Table 6. The rubbing resistance test, the dry cleaning test and the discharge stability test were made in the same manner as in Example B-1. The results thereof are shown in Table 5.

[Table 5]

Table 5: Results of Rubbing Resistance, Dry Cleaning and Discharge Stability in Examples B-1 to B-4, Comparative Examples B-1 to B-4 and Reference Examples B-5 and B-6

| | Tg | Particle Size | Acid Value | Ac Amount (%) | Rubbing Resistance | | Dry Cleaning | Discharge Stability |
|---|---|---|---|---|---|---|---|---|
| | | | | | Dry | Wet | | |
| Example B-1 | -15 | 110 | 20 | 95.5 | 4/5 | 4/5 | 4/5 | A |
| Example B-2 | -17 | 80 | 20 | 95.8 | 5 | 4/5 | 5 | A |
| Example B-3 | -17 | 90 | 20 | 95.8 | 5 | 5 | 5 | A |
| Example B-4 | -17 | 115 | 20 | 95.8 | 5 | 5 | 5 | A |
| Comparative Example B-1 | 0 | 110 | 20 | 95.8 | 3 | 2 | 2/3 | A |
| Comparative Example B-2 | 10 | 80 | 20 | 95.8 | 2/3 | 1/2 | 2 | A |
| Comparative Example B-3 | -17 | 350 | 20 | 95.8 | 2 | 2 | 2/3 | D |
| | -17 | 45 | 20 | 95.8 | 4 | 3/4 | 4 | C |
| Comparative Example B-4 | -17 | 115 | 120 | 95.8 | 3 | 3 | 3 | A |
| | -17 | 115 | 150 | 95.8 | 2/3 | 2/3 | 3/4 | B |
| Reference Example B-5 | -17 | 80 | 20 | 65.3 | 3 | 2/3 | 5 | A |
| Reference Example B-6 | -17 | 80 | 20 | 66.9 | 3 | 2/3 | 5 | A |

The unit of is °C; the particle size is the average particle size of the pigment, and the unit thereof is nm; and the unit of the acid value is mg KOH/g.

The Ac amount (%) indicates the amount (% by weight) of an alkyl (meth)acrylate and/or a cyclic alkyl (meth)acrylate in the polymer fine particles.

The rubbing resistance and dry cleaning are based on the evaluation standards of JIS.

[Table 6] Table 6: Ink Compositions (wt%) of Examples B-1 to B-4 Comparative Examples B-1 to B-4 and Reference Examples B-5 and B-6

| | Example | | | | Comparative Example | | | | | | Reference Example | |
|---|---|---|---|---|---|---|---|---|---|---|---|---|
| | B-1 | B-2 | B-3 | B-4 | B-1 | B-2 | B-3 | | B-4 | | B-5 | B-6 |
| Dispersion B1 | 4.5 | - | - | - | 4.5 | - | - | - | - | - | - | - |
| Dispersion B2 | - | 3.5 | - | - | - | 3.5 | - | - | - | - | 3.5 | 3.5 |
| Dispersion B3 | - | - | 4.5 | - | - | - | - | - | - | - | - | - |
| Dispersion B4 | - | - | - | 4.5 | - | - | - | - | 4.5 | 4.5 | - | - |
| Dispersion B3A | - | - | - | - | - | - | 4.5 | - | - | - | - | - |
| Dispersion B3B | - | - | - | - | - | - | - | 4.5 | - | - | - | - |
| EM-A | 6.0 | - | - | - | - | - | - | - | - | - | - | - |
| EM-B | - | 5.0 | 6.0 | 6.0 | - | - | 6.0 | 6.0 | - | - | - | - |
| EM-C | - | - | - | - | 6.0 | - | - | - | - | - | - | - |
| EM-D | - | - | - | - | - | 6.0 | - | - | - | - | - | - |
| EM-E | - | - | - | - | - | - | - | - | 6.0 | - | - | - |
| EM-F | - | - | - | - | - | - | - | - | - | 6.0 | - | - |
| EM-G | - | - | - | - | - | - | - | - | - | - | 6.0 | - |
| EM-H | - | - | - | - | - | - | - | - | - | - | - | 6.0 |
| 1,2-HD | 2.0 | 3.0 | 3.0 | 2.0 | 2.0 | 3.0 | 3.0 | 3.0 | 2.0 | 2.0 | 3.0 | 3.0 |
| 1,2-PD | - | - | - | 1.0 | - | - | - | - | 1.0 | 1.0 | - | - |
| TEGmBE | 2.0 | 1.0 | 1.0 | 2.0 | 2.0 | 1.0 | 1.0 | 1.0 | 2.0 | 2.0 | 1.0 | 1.0 |
| S-104 | 0.3 | 0.3 | 0.3 | 0.3 | 0.3 | 0.3 | 0.3 | 0.3 | 0.3 | 0.3 | 0.3 | 0.3 |
| S-465 | 0.5 | 0.5 | 0.3 | 0.5 | 0.5 | 0.5 | 0.3 | 0.3 | 0.5 | 0.5 | 0.5 | 0.5 |
| S-61 | - | - | 0.2 | - | - | - | 0.2 | 0.2 | - | - | - | - |
| Glycerin | 10.0 | 12.0 | 10.0 | 10.0 | 10.0 | 12.0 | 10.0 | 10.0 | 10.0 | 10.0 | 12.0 | 12.0 |
| TMP | 3.0 | 3.0 | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 | 5.0 | 5.0 |
| 2-P | 1.0 | - | - | - | 1.0 | - | - | - | - | - | - | - |

(continued)

| | Example | | | | Comparative Example | | | | | | Reference Example | |
|---|---|---|---|---|---|---|---|---|---|---|---|---|
| | B-1 | B-2 | B-3 | B-4 | B-1 | B-2 | B-3 | | B-4 | | B-5 | B-6 |
| TEA | 1.0 | 1.0 | 1.0 | 1.0 | 1.0 | 1.0 | 1.0 | 1.0 | 1.0 | 1.0 | 1.0 | 1.0 |
| Ion-Exchange Water | Balance | Balance | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

(Example B-5) (not according to the present invention)

(1) Production of Pigment Dispersion B5

In pigment dispersion B5, MA100 manufactured by Mitsubishi Chemical Corporation was used as carbon black (PBk7). A surface of the carbon black was oxidized in the same manner as in JP-A-8-3498 to make it dispersible in water, thereby preparing dispersion B5. The particle size was measured by the same method as in Example B-1. As a result, it was 120 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 15 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of butyl acrylate, 16 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion I (EM-I). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -19°C. The molecular weight was measured in the same manner as in Example B-1. As a result, it was 180,000. The acid value by the titration method was 18 mg KOH/g.

(3) Preparation of Inkjet Recording Ink

Examples of compositions suitable for inkjet recording inks are shown in Table 8 below. An inkjet recording ink of the invention was prepared and evaluated in the same manner as in Example B-1 by using dispersion B5 prepared by the above-mentioned method and mixing with vehicle components shown in Table 8.

(4) Rubbing Resistance Test and Dry Cleaning Test

Using the ink of Example B-5, the rubbing resistance test and the dry cleaning test were made in the same manner and by the same evaluation method as in Example B-1. The results of the rubbing resistance test and the dry cleaning test are shown in Table 7.

(5) Measurement of Discharge Stability

Using the ink of Example B-5, the discharge stability was measured in the same manner and by the same evaluation method as in Example B-1. The measurement results of the discharge stability are shown in Table 7.

(Example B-6)

(1) Production of Pigment Dispersion B6

In pigment dispersion B6, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 45 parts of styrene, 30 parts of polyethylene glycol (400) acrylate, 10 parts of benzyl acrylate, 2 parts of acrylic acid, and 0.3 part of t-dodecyl mercaptan were placed therein and heated to 70°C. Then, 150 parts of styrene, 100 parts of polyethylene glycol (400) acrylate, 15 parts of acrylic acid, 5 parts of butyl acrylate, 1 part of t-dodecyl mercaptan and 5 parts of sodium persulfate, which were separately prepared, were placed in the dripping funnel, and a polymerization reaction of a dispersion polymer was conducted while adding them dropwise to the reaction vessel, taking 4 hours. Then, water was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As

a result, it was 45°C.

Further, 40 parts of the above-mentioned dispersion polymer solution, 30 parts of Pigment Blue 15:3 and 100 parts of a 0.1 mol/L aqueous sodium hydroxide solution were mixed, followed by dispersion using an Eiger mill using zirconia beads, taking 2 hours. Thereafter, the dispersed mixture was transferred to another vessel, and 300 parts of ion-exchange water was added, followed by further stirring for one hour. Then, the pH was adjusted to 9 by neutralization with a 0.1 mol/L sodium hydroxide solution. Then, filtration through a 0.3-μm membrane filter was performed to prepare dispersion B6 having a solid content (the dispersion polymer and Pigment Blue 15:3) of 20%. The particle size was measured by the same method as in Example B-1. As a result, it was 100 nm. The molecular weight was measured in the same manner as in Example B-1. As a result, it was 210,000.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 25 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 20 parts of ethyl acrylate, 20 parts of butyl acrylate, 20 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion J (EM-J). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -21°C. Further, the acid value by the titration method was 18 mg KOH/g.

(3) Preparation of Inkjet Recording Ink

Examples of compositions suitable for inkjet recording inks are shown in Table 8 below. An inkjet recording ink of the invention was prepared and evaluated in the same manner as in Example B-1 by using dispersion B6 prepared by the above-mentioned method and mixing with vehicle components shown in Table 8.

(4) Rubbing Resistance Test and Dry Cleaning Test

Using the ink of Example B-6, the rubbing resistance test and the dry cleaning test were made in the same manner and by the same evaluation method as in Example B-1. The results of the rubbing resistance test and the dry cleaning test are shown in Table 7.

(5) Measurement of Discharge Stability

Using the ink of Example B-6, the discharge stability was measured in the same manner and by the same evaluation method as in Example B-1. The measurement results of the discharge stability are shown in Table 7.

(Example B-7) (not according to the present invention)

(1) Production of Pigment Dispersion B7

First, using Pigment Red 122 (dimethylquinacridone pigment: manufactured by Clariant Corporation), pigment dispersion B7 was prepared in the same manner as pigment dispersion B2. The particle size was measured by the same method as in Example B-1. As a result, it was 80 nm.

(2) Preparation of Polymer Fine Particles

The same polymer fine particles as in Example B-6 were used.

(3) Preparation of Inkjet Recording Ink

Examples of compositions suitable for inkjet recording inks are shown in Table 8 below. An inkjet recording ink of the invention was prepared and evaluated in the same manner as in Example B-1 by using dispersion B7 prepared by the above-mentioned method and mixing with vehicle components shown in Table 8.

(4) Rubbing Resistance Test and Dry Cleaning Test

Using the ink of Example B-7, the rubbing resistance test and the dry cleaning test were made in the same manner and by the same evaluation method as in Example B-1. The results of the rubbing resistance test and the dry cleaning test are shown in Table 7.

(5) Measurement of Discharge Stability

Using the ink of Example B-7, the discharge stability was measured in the same manner and by the same evaluation method as in Example B-1. The measurement results of the discharge stability are shown in Table 7.

(Example B-8) (not according to the present invention)

(1) Production of Pigment Dispersion B8

First, using Pigment Yellow 180 (benzimidazolone disazo pigment: manufactured by Clariant Corporation), pigment dispersion B8 was prepared in the same manner as pigment dispersion B2. The particle size was measured by the same method as in Example B-1. As a result, it was 130 nm.

(2) Preparation of Polymer Fine Particles

The same polymer fine particles as in Example B-6 were used.

(3) Preparation of Inkjet Recording Ink

Examples of compositions suitable for inkjet recording inks are shown in Table 8 below. An inkjet recording ink of the invention was prepared and evaluated in the same manner as in Example B-1 by using dispersion B8 prepared by the above-mentioned method and mixing with vehicle components shown in Table 8.

(4) Rubbing Resistance Test and Dry Cleaning Test

Using the ink of Example B-8, the rubbing resistance test and the dry cleaning test were made in the same manner and by the same evaluation method as in Example B-1. The results of the rubbing resistance test and the dry cleaning test are shown in Table 7.

(5) Measurement of Discharge Stability

Using the ink of Example B-8, the discharge stability was measured in the same manner and by the same evaluation method as in Example B-1. The measurement results of the discharge stability are shown in Table 7.

(Reference Example B-7)

In Reference Example B-7, inks were prepared and evaluated in the same manner as in Example B-5 with the exception that the molecular weight of the polymer fine particles to be added was changed to 90,000 and 1,100,000. An emulsion having a molecular weight of 90,000 was taken as emulsion K (EM-K), and an emulsion having a molecular weight of 1,100,000 was taken as emulsion L (EM-L). Ink compositions are shown in Table 8. The rubbing resistance test, the dry cleaning test and the discharge stability test were made in the same manner as in Example B-5. The results thereof are shown in Table 7. The measurement of the particle size of the polymer fine particles was made in the same manner as in Example B-1.

(Reference Example B-8)

In Reference Example B-8, an ink was prepared and evaluated in the same manner as in Example B-6 with the exception that 1,2-hexanediol as a 1,2-alkylene glycol was replaced by glycerin. An ink composition is shown in Table 8. The rubbing resistance test, the dry cleaning test and the discharge stability test were made in the same manner as in Example B-5. The results thereof are shown in Table 7.

(Reference Example B-9)

In Reference Example B-9, an ink was prepared and evaluated in the same manner as in Example B-7 with the exception that the acetylene glycol-based surfactant and the acetylene alcohol-based surfactant were replaced by glycerin. An ink composition is shown in Table 8. The rubbing resistance test, the dry cleaning test and the discharge stability test were made in the same manner as in Example B-5. The results thereof are shown in Table 7.

(Reference Example B-10)

In Reference Example B-10, inks were prepared and evaluated in the same manner as in Example B-8 with the exception that the amount of the polymer fine particles to be added was changed to 80% and 50%, by the ratio to the pigment. Ink compositions are shown in Table 8. The rubbing resistance test, the dry cleaning test and the discharge stability test were made in the same manner as in Example B-5. The results thereof are shown in Table 7.

[Table 7]

Table 7: Results of Rubbing Resistance, Dry Cleaning and Discharge Stability in Examples B-5 to B-8 and Reference Examples B-7 to B-10

| | Tg | Particle Size | Acid Value | Molecular Weight | Ac Amount (%) | Ratio to Pigment | Rubbing Resistance | | Dry Cleaning | Discharge Stability |
|---|---|---|---|---|---|---|---|---|---|---|
| | | | | | | | Dry | Wet | | |
| Example B-5 | -19 | 120 | 18 | 1.8 | 95.9 | 120 | 5 | 5 | 5 | A |
| Example B-6 | -21 | 100 | 18 | 2.0 | 95.9 | 150 | 5 | 5 | 5 | A |
| Example B-7 | -21 | 80 | 18 | 2.0 | 95.9 | 100 | 5 | 5 | 5 | A |
| Example B-8 | -21 | 130 | 18 | 2.0 | 95.9 | 120 | 5 | 5 | 5 | A |
| Reference Example B-7 | -19 | 120 | 18 | 0.9 | 95.9 | 120 | 3 | 3 | 2 | A |
| | -19 | 120 | 18 | 11.0 | 95.9 | 120 | 3 | 2/3 | 3 | D |
| Reference Example B-8 | -21 | 100 | 18 | 2.0 | 95.9 | 150 | 5 | 4/5 | 5 | C |
| Reference Example B-9 | -21 | 80 | 18 | 2.0 | 95.9 | 100 | 4/5 | 4/5 | 5 | C |
| Reference Example B-10 | -21 | 130 | 18 | 2.0 | 95.9 | 80 | 3 | 3 | 3 | A |
| | -21 | 130 | 18 | 2.0 | 95.9 | 50 | 2 | 2 | 2 | A |

The unit of Tg is °C; the particle size is the average particle size of the pigment, and the unit thereof is nm; the unit of the acid value is mg KOH/g; and the molecular weight in Table 7 is in $\times 10^5$.
The Ac amount indicates the amount of an alkyl (meth)acrylate and/or a cyclic alkyl (meth)acrylate in the polymer fine particles.
The ratio to the pigment is indicated by % of the polymer fine particles to the pigment.
The rubbing resistance and dry cleaning are based on the evaluation standards of JIS.

[Table 8]

Table 8: Ink Compositions wt% of Examples B-5 to B-8 and Reference Examples B-7 to B-10

| | Example | | | | Reference Example | | | | | |
|---|---|---|---|---|---|---|---|---|---|---|
| | B-5 | B-6 | B-7 | B-8 | B-7 | | B-8 | B-9 | B-10 | |
| Dispersion B5 | 4.0 | - | - | - | 4.0 | 4.0 | - | - | - | - |
| Dispersion B6 | - | 3.2 | - | - | - | - | 3.2 | - | - | - |
| Dispersion B7 | - | - | 4.0 | - | - | - | - | 4.0 | - | - |
| Dispersion B8 | - | - | - | 4.0 | - | - | - | - | 4.0 | 4.0 |
| EM-I | 5.0 | - | - | - | - | - | - | - | - | - |
| EM-J | - | 4.8 | 4.0 | 5.0 | - | - | 4.8 | 4.0 | 3.2 | 2 |
| EM-K | - | - | - | - | 5.0 | - | - | - | - | - |
| EM-L | - | - | - | - | - | 5.0 | - | - | 6 | - |
| 1,2-HD | 2.0 | 3.0 | 3.0 | 2.0 | 2.0 | 2.0 | - | 3.0 | 2.0 | 2.0 |
| 1,2-PD | - | - | - | 1.0 | - | - | - | - | 1.0 | 1.0 |
| TEGmBE | 2.0 | 1.0 | 1.0 | 2.0 | 2.0 | 2.0 | 1.0 | 1.0 | 2.0 | 2.0 |
| S-104 | 0.3 | 0.3 | 0.3 | 0.3 | 0.3 | 0.3 | 0.3 | - | 0.3 | 0.3 |
| S-465 | 0.5 | 0.5 | 0.3 | 0.5 | 0.5 | 0.5 | 0.3 | - | 0.5 | 0.5 |
| S-61 | - | - | 0.2 | - | - | - | 0.2 | - | -- | |
| Glycerin | 10.0 | 12.0 | 10.0 | 10.0 | 10.0 | 12.0 | 13.0 | 11.0 | 10.0 | 10.0 |
| TMP | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 |
| 2-P | 1.0 | - | - | - | 1.0 | - | - | - | - | - |
| TEA | 1.0 | 1.0 | 1.0 | 1.0 | 1.0 | 1.0 | 1.0 | 1.0 | 1.0 | 1.0 |

(continued)

| | Example | | | | Reference Example | | | | | |
|---|---|---|---|---|---|---|---|---|---|---|
| | B-5 | B-6 | B-7 | B-8 | B-7 | | B-8 | B-9 | B-10 | |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

[Example C]

The following Example C corresponds to an embodiment according to the present invention..

(Example C-1)

(1) Production of Pigment Dispersion C1

In pigment dispersion C1, Monarch 880 manufactured by Cabot Corporation was used as carbon black (Pigment Black 7). A surface of the carbon black was oxidized in the same manner as in JP-A-8-3498 to make it dispersible in water, thereby preparing dispersion C1. The particle size was measured by using a Microtrac size distribution analyzer, UPA250 (manufactured by Nikkiso Co., Ltd.). As a result, it was 110 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 15 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 15 parts of 2-ethylhexyl acrylate, 10 parts of styrene, 6 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was - 15°C. The styrene conversion molecular weight was 150,000, when measured using gel permeation chromatography (GPC) of 7100 system manufactured by Hitachi, Ltd. and using THF as a solvent. Further, the acid value by the titration method was 20 mg KOH/g. The ratio of styrene in the solid matter of this emulsion A is 9.3%.

(3) Preparation of Inkjet Recording Ink

Examples of compositions suitable for inkjet recording inks will be shown in Table 10 below. An inkjet recording ink of the invention was prepared by using dispersion C1 prepared by the above-mentioned method and mixing with vehicle components shown in Table 10. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)·2Na salt for reducing the effects of metal ions in the ink system were each added to ion-exchange water.

(4) Rubbing Resistance Test and Dry Cleaning Test

Using the ink of Example C-1, and using PX-V600 manufactured by Seiko Epson Corporation as an inkjet printer, a sample in which solid printing was made on a cotton cloth was prepared, and heat treated at 150°C for 5 minutes. That sample was subjected to a rubbing fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 9.

(5) Measurement of Discharge Stability

Using PX-V600 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink

which caused no print distortion at all was evaluated as AA, one which caused a print distortion at one place as A, one which caused print distortions at 2 to 3 places as B, one which caused print distortions at 4 to 5 places as C, and one which caused print distortions at 6 or more places as D. The results are shown in Table 9.

(Example C-2)

(1) Production of Pigment Dispersion C2

First, in pigment dispersion C2, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 75 parts of benzyl acrylate, 2 parts of acrylic acid, and 0.3 part of t-dodecyl mercaptan were placed therein and heated to 70°C. Then, 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were placed in the dripping funnel, and a polymerization reaction of a dispersion polymer was conducted while adding them dropwise to the reaction vessel, taking 4 hours. Then, methyl ethyl ketone was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As a result, it was 40°C.

Further, 40 parts of the above-mentioned dispersion polymer solution, 30 parts of Pigment Blue 15:3, 100 parts of a 0.1 mol/L aqueous sodium hydroxide solution and 30 parts of methyl ethyl ketone were mixed, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Then, the entire amount of methyl ethyl ketone and a part of the water were distilled off using a rotary evaporator, and the pH was adjusted to 9 by neutralization with a 0.1 mol/L sodium hydroxide solution. Then, filtration through a 0.3-μm membrane filter and adjustment with ion-exchange water were performed to prepare pigment dispersion C2 having a pigment concentration of 15%. The particle size was measured by the same method as in Example C-1. As a result, it was 80 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 9 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 15 parts of 2-ethylhexyl acrylate, 10 parts of styrene, 16 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion B (EM-B). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was - 17°C. The molecular weight was measured in the same manner as in Example C-1. As a result, it was 200,000. The acid value by the titration method was 20 mg KOH/g. The ratio of styrene in the solid matter of this emulsion B is 9.0 %.

(3) Preparation of Inkjet Recording Ink

Examples of compositions suitable for inkjet recording inks are shown in Table 10 below. An inkjet recording ink of the invention was prepared in the same manner as in Example C-1 by using dispersion C2 prepared by the above-mentioned method and mixing with vehicle components shown in Table 10.

(4) Rubbing Resistance Test and Dry Cleaning Test

Using the ink of Example C-2, the rubbing resistance test and the dry cleaning test were made in the same manner and by the same evaluation method as in Example C-1. The results of the rubbing resistance test and the dry cleaning test are shown in Table 9.

(5) Measurement of Discharge Stability

Using the ink of Example C-2, the discharge stability was measured in the same manner and by the same evaluation method as in Example C-1. The measurement results of the discharge stability are shown in Table 9.

(Example C-3)

(1) Production of Pigment Dispersion C3

First, using Pigment Violet 19 (quinacridone pigment: manufactured by Clariant Corporation), a pigment dispersion was prepared in the same manner as pigment dispersion C2, and this was taken as pigment dispersion C3. The particle size was measured by the same method as in Example C-1. As a result, it was 90 nm.

(2) Preparation of Polymer Fine Particles

The same polymer fine particles as in Example C-2 were used.

(3) Preparation of Inkjet Recording Ink

Examples of compositions suitable for inkjet recording inks are shown in Table 10 below. An inkjet recording ink of the invention was prepared and evaluated in the same manner as in Example C-1 by using dispersion C3 prepared by the above-mentioned method and mixing with vehicle components shown in Table 10.

(4) Rubbing Resistance Test and Dry Cleaning Test

Using the ink of Example C-3, the rubbing resistance test and the dry cleaning test were made in the same manner and by the same evaluation method as in Example C-1. The results of the rubbing resistance test and the dry cleaning test are shown in Table 9.

(5) Measurement of Discharge Stability

Using the ink of Example C-3, the discharge stability was measured in the same manner and by the same evaluation method as in Example C-1. The measurement results of the discharge stability are shown in Table 9.

(Example C-4)

(1) Production of Pigment Dispersion C4

First, using Pigment Yellow 14 (azo pigment: manufactured by Clariant Corporation), a pigment dispersion was prepared in the same manner as pigment dispersion C2, and this was taken as pigment dispersion C4. The particle size was measured by the same method as in Example C-1. As a result, it was 115 nm.

(2) Preparation of Polymer Fine Particles

The same polymer fine particles as in Example C-2 were used.

(3) Preparation of Inkjet Recording Ink

Examples of compositions suitable for inkjet recording inks are shown in Table 10 below. An inkjet recording ink of the invention was prepared and evaluated in the same manner as in Example C-1 by using dispersion C4 prepared by the above-mentioned method and mixing with vehicle components shown in Table 10.

(4) Rubbing Resistance Test and Dry Cleaning Test

Using the ink of Example C-4, the rubbing resistance test and the dry cleaning test were made in the same manner and by the same evaluation method as in Example C-1. The results of the rubbing resistance test and the dry cleaning test are shown in Table 9.

(5) Measurement of Discharge Stability

Using the ink of Example C-4, the discharge stability was measured in the same manner and by the same evaluation method as in Example C-1. The measurement results of the discharge stability are shown in Table 9.

(Comparative Example C-1)

In Comparative Example C-1, an ink was prepared and evaluated in the same manner as in Example C-1 with the exception that polymer fine particles having a glass transition temperature of 0°C, which were obtained by changing the total amount (45 parts) of ethyl acrylate to 45 parts of benzyl methacrylate, were used. An emulsion prepared using the polymer fine particles was taken as emulsion C (EM-C). An ink composition is shown in Table 10. The rubbing resistance test, the dry cleaning test and the discharge stability test were made in the same manner as in Example C-1. The results thereof are shown in Table 9.

(Comparative Example C-2)

In Comparative Example C-2, an ink was prepared and evaluated in the same manner as in Example C-2 with the exception that polymer fine particles having a glass transition temperature of 10°C, which were obtained by changing the total amount (49 parts) of ethyl acrylate to benzyl methacrylate and 10 parts of butyl acrylate to 10 parts of benzyl methacrylate, were used. An emulsion prepared using the polymer fine particles was taken as emulsion D (EM-D). An ink composition is shown in Table 10. The rubbing resistance test, the dry cleaning test and the discharge stability test were made in the same manner as in Example C-1. The results thereof are shown in Table 9.

(Comparative Example C-3)

In Comparative Example C-3, inks were prepared and evaluated in the same manner as in Example C-3 with the exception that dispersions having pigment particle sizes of 350 nm and 45 nm were prepared. The particle size was measured by the same method as in Example C-1. The dispersion having a particle size of 350 nm was taken as pigment dispersion C3A, and the dispersion having a particle size of 45 nm was taken as pigment dispersion C3B. Ink compositions are shown in Table 10. The rubbing resistance test, the dry cleaning test and the discharge stability test were made in the same manner as in Example C-1. The results thereof are shown in Table 9.

(Comparative Example C-4)

In Comparative Example C-4, inks were prepared and evaluated in the same manner as in Example C-4 with the exception that the acid value of the polymer fine particles to be added was changed to 120 mg KOH/g and 150 mg KOH/g. An emulsion prepared by using the polymer fine particles having an acid value of 120 mg KOH/g was taken as emulsion E (EM-E), and an emulsion prepared by using the polymer fine particles having an acid value of 150 mg KOH/g was taken as emulsion F (EM-F). Ink compositions are shown in Table 10. The rubbing resistance test, the dry cleaning test and the discharge stability test were made in the same manner as in Example C-1. The results thereof are shown in Table 9.

(Reference Example C-5)

In Reference Example C-5, an ink was prepared and evaluated in the same manner as in Example C-2 with the exception that polymer fine particles were prepared by changing the total amount of ethyl acrylate and a part of butyl acrylate to 30 parts of styrene, changing the total amount of butyl methacrylate and a part of methyl acrylate to 2-ethylhexyl acrylate, and adjusting the amount added so as to have a glass transition temperature of -17°C. An emulsion prepared by using the polymer fine particles was taken as emulsion G (EM-G). An ink composition is shown in Table 10. The rubbing resistance test, the dry cleaning test and the discharge stability test were made in the same manner as in Example C-1. The results thereof are shown in Table 9. The ratio of styrene in the solid matter of this emulsion G is 36.0 %.

(Reference Example C-6)

In Reference Example C-6, an ink was prepared and evaluated in the same manner as in Example C-2 with the exception that polymer fine particles were prepared by changing 10 parts of styrene to 5 parts of styrene and 5 parts of methyl methacrylate, also changing a part of butyl acrylate to ethyl acrylate, and adjusting the amount added so as

to have a glass transition temperature of -17°C. An emulsion prepared by using the polymer fine particles was taken as emulsion H (EM-H). An ink composition is shown in Table 10. The rubbing resistance test, the dry cleaning test and the discharge stability test were made in the same manner as in Example C-1. The results thereof are shown in Table 9. The ratio of styrene in the solid matter of this emulsion H is 4.5 %.

[Table 9] Table 9: Results of Rubbing Resistance, Dry Cleaning and Discharge Stability in Examples C-1 to C-4, Comparative Examples C-1 to C-4 and Reference Examples C-5 and C-6

| | Tg | Particle Size | Acid Value | Ac Amount (%) | Styrene Amount (%) | Rubbing Resistance | | Dry Cleaning | Discharge Stability |
|---|---|---|---|---|---|---|---|---|---|
| | | | | | | Dry | Wet | | |
| Example C-1 | -15 | 110 | 20 | 86.0 | 9.3 | 4/5 | 4/5 | 4/5 | A |
| Example C-2 | -17 | 80 | 20 | 86.4 | 9.0 | 5 | 4/5 | 5 | A |
| Example C-3 | -17 | 90 | 20 | 86.4 | 9.0 | 5 | 5 | 5 | A |
| Example C-4 | -17 | 115 | 20 | 86.4 | 9.0 | 5 | 5 | 5 | A |
| Comparative Example C-1 | 0 | 110 | 20 | 86.4 | 9.0 | 3 | 2 | 2/3 | A |
| Comparative Example C-2 | 10 | 80 | 20 | 86.4 | 9.0 | 2/3 | 1/2 | 2 | A |
| Comparative Example C-3 | -17 | 350 | 20 | 86.4 | 9.0 | 2 | 2 | 2/3 | D |
| | -17 | 45 | 20 | 86.4 | 9.0 | 4 | 3/4 | 4 | C |
| Comparative Example C-4 | -17 | 115 | 120 | 86.4 | 9.0 | 3 | 3 | 3 | A |
| | -17 | 115 | 150 | 86.4 | 9.0 | 2/3 | 2/3 | 3/4 | B |
| Reference Example C-5 | -17 | 80 | 20 | 59.5 | 36.0 | 3 | 2/3 | 5 | A |
| Reference Example C-6 | -17 | 80 | 20 | 59.5 | 4.5 | 4 | 3/4 | 5 | A |

The unit of Tg is °C; the particle size is the average particle size of the pigment, and the unit thereof is nm; and the unit of the acid value is mg KOH/g.

The rubbing resistance and dry cleaning are based on the evaluation standards of JIS.

The Ac amount (%) indicates the amount (% by weight) of an alkyl (meth)acrylate and/or a cyclic alkyl (meth)acrylate in the polymer fine particles.

The styrene amount is the ratio (% by weight) of styrene in the polymer fine particles.

[Table 10] Compositions (wt%) of Examples C-1 to C-4. Comparative Examples C-1 to C-4 and Reference Examples C-5 and C-6

| | Example | | | | Comparative Example | | | | | | Reference Example | |
|---|---|---|---|---|---|---|---|---|---|---|---|---|
| | C-1 | C-2 | C-3 | C-4 | C-1 | C-2 | C-3 | | C-4 | | C-5 | C-6 |
| Dispersion C1 | 4.5 | - | - | - | 4.5 | - | - | - | - | - | - | - |
| Dispersion C2 | - | 3.5 | - | - | - | 3.5 | - | - | - | - | 3.5 | 3.5 |
| Dispersion C3 | - | - | 4.5 | - | - | - | - | - | - | - | - | - |
| Dispersion C4 | - | - | - | 4.5 | - | - | - | - | 4.5 | 4.5 | - | - |
| Dispersion C3A | - | - | - | - | - | - | 4.5 | - | - | - | - | - |
| Dispersion C3B | - | - | - | - | - | - | - | 4.5 | - | - | - | - |
| EM-A | 6.0 | - | - | - | - | - | - | - | - | - | - | - |
| EM-B | - | 5.0 | 6.0 | 6.0 | - | - | 6.0 | 6.0 | - | - | - | - |
| EM-C | - | - | - | - | 6.0 | - | - | - | - | - | - | - |
| EM-D | - | - | - | - | - | 6.0 | - | - | - | - | - | - |
| EM-E | - | - | - | - | - | - | - | - | 6.0 | - | - | - |
| EM-F | - | - | - | - | - | - | - | - | - | 6.0 | - | - |
| EM-G | - | - | - | - | - | - | - | - | - | - | 6.0 | - |
| EM-H | - | - | - | - | - | - | - | - | - | - | - | 6.0 |
| 1,2-HD | 2.0 | 3.0 | 3.0 | 2.0 | 2.0 | 3.0 | 3.0 | 3.0 | 2.0 | 2.0 | 3.0 | 3.0 |
| 1,2-PD | - | - | - | 1.0 | - | - | - | - | 1.0 | 1.0 | - | - |
| TEGmBE | 2.0 | 1.0 | 1.0 | 2.0 | 2.0 | 1.0 | 1.0 | 1.0 | 2.0 | 2.0 | 1.0 | 1.0 |
| S-104 | 0.3 | 0.3 | 0.3 | 0.3 | 0.3 | 0.3 | 0.3 | 0.3 | 0.3 | 0.3 | 0.3 | 0.3 |
| S-465 | 0.5 | 0.5 | 0.3 | 0.5 | 0.5 | 0.5 | 0.3 | 0.3 | 0.5 | 0.5 | 0.5 | 0.5 |
| S-61 | - | - | 0.2 | - | - | - | 0.2 | 0.2 | - | - | - | - |
| Glycerin | 10.0 | 12.0 | 10.0 | 10.0 | 10.0 | 12.0 | 10.0 | 10.0 | 10.0 | 10.0 | 12.0 | 12.0 |
| TMP | 3.0 | 3.0 | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 | 5.0 | 5.0 |
| 2-P | 1.0 | - | - | - | 1.0 | - | - | - | - | - | - | - |

(continued)

| | Example | | | | Comparative Example | | | | | | Reference Example | |
|---|---|---|---|---|---|---|---|---|---|---|---|---|
| | C-1 | C-2 | C-3 | C-4 | C-1 | C-2 | C-3 | | C-4 | | C-5 | C-6 |
| TEA | 1.0 | 1.0 | 1.0 | 1.0 | 1.0 | 1.0 | 1.0 | 1.0 | 1.0 | 1.0 | 1.0 | 1.0 |
| Ion-Exchange Water | Balance | Balance | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

(Example C-5)

(1) Production of Pigment Dispersion C5

In pigment dispersion C5, MA100 manufactured by Mitsubishi Chemical Corporation was used as carbon black (PBk7). A surface of the carbon black was oxidized in the same manner as in JP-A-8-3498 to make it dispersible in water, thereby preparing dispersion C5. The particle size was measured by the same method as in Example C-1. As a result, it was 120 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 15 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 15 parts of 2-ethylhexyl acrylate, 10 parts of styrene, 16 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion I (EM-I). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -19°C. The molecular weight was measured in the same manner as in Example C-1. As a result, it was 180,000. The acid value by the titration method was 18 mg KOH/g. The ratio of styrene in the solid matter of this emulsion A is 8.2 %.

(3) Preparation of Inkjet Recording Ink

Examples of compositions suitable for inkjet recording inks are shown in Table 12 below. An inkjet recording ink of the invention was prepared and evaluated in the same manner as in Example C-1 by using dispersion C5 prepared by the above-mentioned method and mixing with vehicle components shown in Table 12.

(4) Rubbing Resistance Test and Dry Cleaning Test

Using the ink of Example C-5, the rubbing resistance test and the dry cleaning test were made in the same manner and by the same evaluation method as in Example C-1. The results of the rubbing resistance test and the dry cleaning test are shown in Table 11.

(5) Measurement of Discharge Stability

Using the ink of Example C-5, the discharge stability was measured in the same manner and by the same evaluation method as in Example C-1. The measurement results of the discharge stability are shown in Table 11.

(Example C-6)

(1) Production of Pigment Dispersion C6

First, in pigment dispersion C6, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 45 parts of styrene, 30 parts of polyethylene glycol (400) acrylate, 10 parts of benzyl acrylate, 2 parts of acrylic acid and 0.3 part of t-dodecyl mercaptan were placed therein and heated to 70°C. Then, 150 parts of styrene, 100 parts of polyethylene glycol (400) acrylate, 15 parts of acrylic acid, 5 parts of butyl acrylate, 1 part of t-dodecyl mercaptan and 5 parts of sodium persulfate, which were separately prepared, were placed in the dripping funnel, and a polymerization reaction of a dispersion polymer was conducted while adding them dropwise to the reaction vessel, taking 4 hours. Then, water was added to the reaction vessel to prepare a dispersion polymer solution having a concentration of 40%. After taking and drying a part of this polymer, the glass transition temperature

was measured by using a differential operating calorimeter (EXSTAR 6000DSC manufactured by Seiko Electron Industry Co., Ltd.). As a result, it was 45°C.

Further, 40 parts of the above-mentioned dispersion polymer solution, 30 parts of Pigment Blue 15:3 and 100 parts of a 0.1 mol/L aqueous sodium hydroxide solution were mixed, followed by dispersion using an Eiger mill using zirconia beads, taking 2 hours. Thereafter, the dispersed mixture was transferred to another vessel, and 300 parts of ion-exchange water was added, followed by further stirring for one hour. Then, the pH was adjusted to 9 by neutralization with a 0.1 mol/L sodium hydroxide solution. Then, filtration through a 0.3-μm membrane filter was performed to prepare dispersion C6 having a solid content (the dispersion polymer and Pigment Blue 15:3) of 20%. The particle size was measured by the same method as in Example C-1. As a result, it was 100 nm. The molecular weight was measured in the same manner as in Example C-1. As a result, it was 210,000.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 25 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 20 parts of ethyl acrylate, 15 parts of 2-ethylhexyl acrylate, 10 parts of styrene, 15 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion J (EM-J). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -21°C. Further, the acid value by the titration method was 18 mg KOH/g. The ratio of styrene in the solid matter of this emulsion J is 9.0%.

(3) Preparation of Inkjet Recording Ink

Examples of compositions suitable for inkjet recording inks are shown in Table 12 below. An inkjet recording ink of the invention was prepared and evaluated in the same manner as in Example C-1 by using dispersion C6 prepared by the above-mentioned method and mixing with vehicle components shown in Table 12.

(4) Rubbing Resistance Test and Dry Cleaning Test

Using the ink of Example C-6, the rubbing resistance test and the dry cleaning test were made in the same manner and by the same evaluation method as in Example C-1. The results of the rubbing resistance test and the dry cleaning test are shown in Table 11.

(5) Measurement of Discharge Stability

Using the ink of Example C-6, the discharge stability was measured in the same manner and by the same evaluation method as in Example C-1. The measurement results of the discharge stability are shown in Table 11.

(Example C-7)

(1) Production of Pigment Dispersion C7

First, using Pigment Red 122 (dimethylquinacridone pigment: manufactured by Clariant Corporation), pigment dispersion C7 was prepared in the same manner as pigment dispersion C2. The particle size was measured by the same method as in Example C-1. As a result, it was 80 nm.

(2) Preparation of Polymer Fine Particles

The same polymer fine particles as in Example C-6 were used.

(3) Preparation of Inkjet Recording Ink

Examples of compositions suitable for inkjet recording inks are shown in Table 12 below. An inkjet recording ink of the invention was prepared and evaluated in the same manner as in Example C-1 by using dispersion C7 prepared by the above-mentioned method and mixing with vehicle components shown in Table 12.

(4) Rubbing Resistance Test and Dry Cleaning Test

Using the ink of Example C-7, the rubbing resistance test and the dry cleaning test were made in the same manner and by the same evaluation method as in Example C-1. The results of the rubbing resistance test and the dry cleaning test are shown in Table 11.

(5) Measurement of Discharge Stability

Using the ink of Example C-7, the discharge stability was measured in the same manner and by the same evaluation method as in Example C-1. The measurement results of the discharge stability are shown in Table 11.

(Example C-8)

(1) Production of Pigment Dispersion C8

First, using Pigment Yellow 180 (benzimidazolone disazo pigment: manufactured by Clariant Corporation), pigment dispersion C8 was prepared in the same manner as pigment dispersion C2. The particle size was measured by the same method as in Example C-1. As a result, it was 130 nm.

(2) Preparation of Polymer Fine Particles

The same polymer fine particles as in Example C-6 were used.

(3) Preparation of Inkjet Recording Ink

Examples of compositions suitable for inkjet recording inks are shown in Table 12 below. An inkjet recording ink of the invention was prepared and evaluated in the same manner as in Example C-1 by using dispersion C8 prepared by the above-mentioned method and mixing with vehicle components shown in Table 12.

(4) Rubbing Resistance Test and Dry Cleaning Test

Using the ink of Example C-8, the rubbing resistance test and the dry cleaning test were made in the same manner and by the same evaluation method as in Example C-1. The results of the rubbing resistance test and the dry cleaning test are shown in Table 11.

(5) Measurement of Discharge Stability

Using the ink of Example C-8, the discharge stability was measured in the same manner and by the same evaluation method as in Example C-1. The measurement results of the discharge stability are shown in Table 11.

(Reference Example C-7)

In Reference Example C-7, inks were prepared and evaluated in the same manner as in Example C-5 with the exception that the molecular weight of the polymer fine particles to be added was changed to 90,000 and 1,100,000. An emulsion having a molecular weight of 90,000 was taken as emulsion K (EM-K), and an emulsion having a molecular weight of 1,100,000 was taken as emulsion L (EM-L). Ink compositions are shown in Table 12. The rubbing resistance test, the dry cleaning test and the discharge stability test were made in the same manner as in Example C-5. The results thereof are shown in Table 11. The measurement of the particle size of the polymer fine particles was made in the same manner as in Example C-1.

(Reference Example C-8)

In Reference Example C-8, an ink was prepared and evaluated in the same manner as in Example C-6 with the exception that 1,2-hexanediol as a 1,2-alkylene glycol was replaced by glycerin. An ink composition is shown in Table 12. The rubbing resistance test, the dry cleaning test and the discharge stability test were made in the same manner as in Example C-5. The results thereof are shown in Table 11.

(Reference Example C-9)

In Reference Example C-9, an ink was prepared and evaluated in the same manner as in Example C-7 with the exception that the acetylene glycol-based surfactant and the acetylene alcohol-based surfactant were replaced by glycerin. An ink composition is shown in Table 12. The rubbing resistance test, the dry cleaning test and the discharge stability test were made in the same manner as in Example C-5. The results thereof are shown in Table 11.

(Reference Example C-10)

In Reference Example C-10, inks were prepared and evaluated in the same manner as in Example C-8 with the exception that the amount of the polymer fine particles to be added was changed to 80% and 50%, by the ratio to the pigment. Ink compositions are shown in Table 12. The rubbing resistance test, the dry cleaning test and the discharge stability test were made in the same manner as in Example C-5. The results thereof are shown in Table 11.

[Table 11]

Table 11: Results of Rubbing Resistance, Dry Cleaning and Discharge Stability in Examples C-5 to C-8 and Reference Examples C-7 to C-10

| | Tg | Particle Size | Acid Value | Molecular Weight | Ratio to Pigment | Ac Amount (%) | Styrene Amount (%) | Rubbing Resistance | | Dry Cleaning | Discharge Stability |
|---|---|---|---|---|---|---|---|---|---|---|---|
| | | | | | | | | Dry | Wet | | |
| Example C-5 | -19 | 120 | 18 | 1.8 | 120 | 87.7 | 8.2 | 5 | 5 | 5 | A |
| Example C-6 | -21 | 100 | 18 | 2.0 | 150 | 86.5 | 9.0 | 5 | 5 | 5 | A |
| Example C-7 | -21 | 80 | 18 | 2.0 | 100 | 86.5 | 9.0 | 5 | 5 | 5 | A |
| Example C-8 | -21 | 130 | 18 | 2.0 | 120 | 86.5 | 9.0 | 5 | 5 | 5 | A |
| Reference Example C-7 | -19 | 120 | 18 | 0.9 | 120 | 87.7 | 9.0 | 3 | 3 | 2 | A |
| | -19 | 120 | 18 | 11.0 | 120 | 87.7 | 9.0 | 3 | 2/3 | 3 | D |
| Reference Example C-8 | -21 | 100 | 18 | 2.0 | 150 | 86.5 | 9.0 | 5 | 4/5 | 5 | C |
| Reference Example C-9 | -21 | 80 | 18 | 2.0 | 100 | 86.5 | 9.0 | 4/5 | 4/5 | 5 | C |
| Reference Example C-10 | -21 | 130 | 18 | 2.0 | 80 | 86.5 | 9.0 | 3 | 3 | 3 | A |
| | -21 | 130 | 18 | 2.0 | 50 | 86.5 | 9.0 | 2 | 2 | 2 | A |

The unit of Tg is °C; the particle size is the average particle size of the pigment, and the unit thereof is nm; the unit of the acid value is mg KOH/g; and the molecular weight in Table 11 is in $\times 10^5$.

The ratio to the pigment is indicated by % of the polymer fine particles to the pigment.

The Ac amount indicates the amount of an alkyl (meth)acrylate and/or a cyclic alkyl (meth)acrylate in the polymer fine particles.

The rubbing resistance and dry cleaning are based on the evaluation standards of JIS.

The styrene amount is the ratio (% by weight) of styrene in the polymer fine particles.

[Table 12]

Table 12: Ink Compositions wt% of Examples C-5 to C-8 and Reference Examples C-7 to C-10

| | Example | | | | Reference Example | | | | | |
|---|---|---|---|---|---|---|---|---|---|---|
| | C-5 | C-6 | C-7 | C-8 | C-7 | | C-8 | C-9 | C-10 | |
| Dispersion C5 | 4.0 | - | - | - | 4.0 | 4.0 | - | - | - | - |
| Dispersion C6 | - | 3.2 | - | - | - | - | 3.2 | - | - | - |
| Dispersion C7 | - | - | 4.0 | - | - | - | - | 4.0 | - | - |
| Dispersion C8 | - | - | - | 4.0 | - | - | - | - | 4.0 | 4.0 |
| EM-I | 5.0 | - | - | - | - | - | - | - | - | - |
| EM-J | - | 4.8 | 4.0 | 5.0 | - | - | 4.8 | 4.0 | 3.2 | 2 |
| EM-K | - | - | - | - | 5.0 | - | - | - | - | - |
| EM-L | - | - | - | - | - | 5.0 | - | - | 6 | - |
| 1,2-HD | 2.0 | 3.0 | 3.0 | 2.0 | 2.0 | 2.0 | - | 3.0 | 2.0 | 2.0 |
| 1,2-PD | - | - | - | 1.0 | - | - | - | - | 1.0 | 1.0 |
| TEGmBE | 2.0 | 1.0 | 1.0 | 2.0 | 2.0 | 2.0 | 1.0 | 1.0 | 2.0 | 2.0 |
| S-104 | 0.3 | 0.3 | 0.3 | 0.3 | 0.3 | 0.3 | 0.3 | - | 0.3 | 0.3 |
| S-465 | 0.5 | 0.5 | 0.3 | 0.5 | 0.5 | 0.5 | 0.3 | - | 0.5 | 0.5 |
| S-61 | - | - | 0.2 | - | - | - | 0.2 | - | -- | |
| Glycerin | 10.0 | 12.0 | 10.0 | 10.0 | 10.0 | 12.0 | 13.0 | 11.0 | 10.0 | 10.0 |
| TMP | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 |
| 2-P | 1.0 | - | - | - | 1.0 | - | - | - | - | - |
| TEA | 1.0 | 1.0 | 1.0 | 1.0 | 1.0 | 1.0 | 1.0 | 1.0 | 1.0 | 1.0 |

(continued)

| | Example | | | | Reference Example | | | | | |
|---|---|---|---|---|---|---|---|---|---|---|
| | C-5 | C-6 | C-7 | C-8 | C-7 | | C-8 | C-9 | C-10 | |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

[Example D] (not according to the present invention)

(Example D-1) (not according to the present invention)

(1) Production of Pigment Dispersion D1

In pigment dispersion D1, Monarch 880 manufactured by Cabot Corporation was used as carbon black (Pigment Black 7). A surface of the carbon black was oxidized in the same manner as in JP-A-8-3498 to make it dispersible in water, thereby preparing dispersion D1. The particle size was measured by using a Microtrac size distribution analyzer, UPA250 (manufactured by Nikkiso Co., Ltd.). As a result, it was 110 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 4 parts of glycidoxy acrylate, 15 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 6 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -15°C. The styrene conversion molecular weight was 150,000, when measured using gel permeation chromatography (GPC) of 7100 system manufactured by Hitachi, Ltd. and using THF as a solvent. The acid value was 20 mg KOH/g. The acid value was measured by the following method. The above-mentioned aqueous dispersion of polymer fine particles is collected in a state prior to neutralization with sodium hydroxide, and the solid concentration thereof is exactly measured by a thermobalance (TG-2121 manufactured by Seiko Electron Industry Co., Ltd.). Then, about 10 g of this aqueous dispersion of polymer fine particles is accurately weighed and taken in a stoppered conical flask, and 100 ml of a 2-propanol-tetrahydrofuran mixed solution (1:2) is added to dissolve the polymer fine particles. This is titrated with a 0.1 mol/L 2-propanol solution of potassium hydroxide using a phenolphthalein reagent until a pink color continuing for 30 seconds is shown, thereby performing measurement. The acid value is determined by formula (1):

$$\text{Acid value (mg KOH/g)} = (5.611 \times a \times f)/S \qquad (1)$$

S: The collection quantity of the sample
a: The amount of consumption (ml) of the 0.1 mol/L 2-propanol solution of potassium hydroxide
f: The factor of the 0.1 mol/L 2-propanol solution of potassium hydroxide
Incidentally, a is the titration value (ml) minus the blank value (ml).

Further, Nopcoat PEM-17 (a polyalkylene wax manufactured by San Nopco Ltd.) was used as a polyalkylene wax. The melting point thereof is 103°C.

(3) Preparation of Inkjet Recording Ink

Compositions of inkjet recording inks will be shown in Table 14 below. An inkjet recording ink of the invention was prepared by using dispersion D1 prepared by the above-mentioned method and mixing with vehicle components shown in Table 14. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)·2Na salt for reducing the effects of metal ions in the ink system were each added to ion-exchange water.

(4) Rubbing Resistance Test and Dry Cleaning Test

Using the ink of Example D-1, and using PX-V600 manufactured by Seiko Epson Corporation as an inkjet printer, a sample in which solid printing was made on cotton was prepared. That sample was subjected to a rubbing fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 13.

(5) Measurement of Discharge Stability

Using PX-V600 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink which caused no print distortion at all was evaluated as AA, one which caused a print distortion at one place as A, one which caused print distortions at 2 to 3 places as B, one which caused print distortions at 4 to 5 places as C, and one which caused print distortions at 6 or more places as D. The results are shown in Table 13.

(Example D-2) (not according to the present invention)

(1) Production of Pigment Dispersion D2

First, in pigment dispersion D2, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 75 parts of benzyl acrylate, 2 parts of acrylic acid, and 0.3 part of t-dodecyl mercaptan were placed therein and heated to 70°C. Then, 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were placed in the dripping funnel, and a polymerization reaction of a dispersion polymer was conducted while adding them dropwise to the reaction vessel, taking 4 hours. Then, methyl ethyl ketone was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As a result, it was 40°C.

Further, 40 parts of the above-mentioned dispersion polymer solution, 30 parts of Pigment Blue 15:3, 100 parts of a 0.1 mol/L aqueous sodium hydroxide solution and 30 parts of methyl ethyl ketone were mixed, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Then, the entire amount of methyl ethyl ketone and a part of the water were distilled off using a rotary evaporator, and the pH was adjusted to 9 by neutralization with a 0.1 mol/L sodium hydroxide solution. Then, filtration through a 0.3-μm membrane filter and adjustment with ion-exchange water were performed to prepare pigment dispersion D2 having a pigment concentration of 15%. The particle size was measured by the same method as in Example D-1. As a result, it was 80 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 19 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 16 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion B (EM-B). After taking and drying a part of this aqueous dispersion of polymer fine particles, the glass transition temperature was measured by using a differential operating calorimeter (EXSTAR 6000DSC manufactured by Seiko Electron Industry

Co., Ltd.). As a result, it was -17°C. The molecular weight was measured in the same manner as in Example D-1. As a result, it was 200,000. The acid value was 20 mg KOH/g. The acid value was measured by the same method as in Example D-1. Further, Mitsui Hiwax 2203A (a polyalkylene wax manufactured by Mitsui Chemicals, Inc.) was used as a polyalkylene wax. The melting point thereof is 117°C.

(3) Preparation of Inkjet Recording Ink

Examples of compositions suitable for inkjet recording inks are shown in Table 14 below. An inkjet recording ink of the invention was prepared in the same manner as in Example D-1 by using dispersion D2 prepared by the above-mentioned method and mixing with vehicle components shown in Table 14.

(4) Rubbing Resistance Test and Dry Cleaning Test

Using the ink of Example D-2, the rubbing resistance test and the dry cleaning test were made in the same manner and by the same evaluation method as in Example D-1. The results of the rubbing resistance test and the dry cleaning test are shown in Table 13.

(5) Measurement of Discharge Stability

Using the ink of Example D-2, the discharge stability was measured in the same manner and by the same evaluation method as in Example D-1. The measurement results of the discharge stability are shown in Table 13.

(Example D-3) (not according to the present invention)

(1) Production of Pigment Dispersion D3

First, using Pigment Violet 19 (quinacridone pigment: manufactured by Clariant Corporation), a pigment dispersion was prepared in the same manner as pigment dispersion D2, and this was taken as pigment dispersion D3. The particle size was measured by the same method as in Example D-1. As a result, it was 90 nm.

(2) Preparation of Polymer Fine Particles

The same polymer fine particles as in Example D-2 were used.

(3) Preparation of Inkjet Recording Ink

Examples of compositions suitable for inkjet recording inks are shown in Table 14 below. An inkjet recording ink of the invention was prepared and evaluated in the same manner as in Example D-1 by using dispersion D3 prepared by the above-mentioned method and mixing with vehicle components shown in Table 14.

(4) Rubbing Resistance Test and Dry Cleaning Test

Using the ink of Example D-3, the rubbing resistance test and the dry cleaning test were made in the same manner and by the same evaluation method as in Example D-1. The results of the rubbing resistance test and the dry cleaning test are shown in Table 13.

(5) Measurement of Discharge Stability

Using the ink of Example D-3, the discharge stability was measured in the same manner and by the same evaluation method as in Example D-1. The measurement results of the discharge stability are shown in Table 13.

(Example D-4) (not according to the present invention)

(1) Production of Pigment Dispersion D4

First, using Pigment Yellow 14 (azo pigment: manufactured by Clariant Corporation), a pigment dispersion was prepared in the same manner as pigment dispersion D2, and this was taken as pigment dispersion D4. The particle size was measured by the same method as in Example D-1. As a result, it was 115 nm.

(2) Preparation of Polymer Fine Particles

The same polymer fine particles as in Example D-2 were used.

(3) Preparation of Inkjet Recording Ink

Examples of compositions suitable for inkjet recording inks are shown in Table 14 below. An inkjet recording ink of the invention was prepared and evaluated in the same manner as in Example D-1 by using dispersion D4 prepared by the above-mentioned method and mixing with vehicle components shown in Table 14.

(4) Rubbing Resistance Test and Dry Cleaning Test

Using the ink of Example D-4, the rubbing resistance test and the dry cleaning test were made in the same manner and by the same evaluation method as in Example D-1. The results of the rubbing resistance test and the dry cleaning test are shown in Table 13.

(5) Measurement of Discharge Stability

Using the ink of Example D-4, the discharge stability was measured in the same manner and by the same evaluation method as in Example D-1. The measurement results of the discharge stability are shown in Table 13.

(Comparative Example D-1)

In Comparative Example D-1, an ink was prepared and evaluated in the same manner as in Example D-1 with the exceptions that polymer fine particles having a glass transition temperature of 0°C, which were obtained by changing a part of ethyl acrylate to styrene, were used, and that no polyethylene wax was added. An emulsion prepared using the polymer fine particles was taken as emulsion B (EM-B). An ink composition is shown in Table 14. The rubbing resistance test, the dry cleaning test and the discharge stability test were made in the same manner as in Example D-1. The results thereof are shown in Table 13.

(Comparative Example D-2)

In Comparative Example D-2, an ink was prepared and evaluated in the same manner as in Example D-2 with the exceptions that polymer fine particles having a glass transition temperature of 10°C, which were obtained by changing parts of ethyl acrylate and butyl acrylate to styrene, were used, and that no ethylene wax was added. An emulsion prepared using the polymer fine particles was taken as emulsion C (EM-C). An ink composition is shown in Table 14. The rubbing resistance test, the dry cleaning test and the discharge stability test were made in the same manner as in Example D-1. The results thereof are shown in Table 13.

(Comparative Example D-3)

In Comparative Example D-3, inks were prepared and evaluated in the same manner as in Example D-3 with the exceptions that dispersions having pigment particle sizes of 350 nm and 45 nm were prepared, and that no polyethylene wax was added. The particle size was measured by the same method as in Example D-1. The dispersion having a particle size of 350 nm was taken as pigment dispersion D3A, and the dispersion having a particle size of 45 nm was taken as pigment dispersion D3B. Ink compositions are shown in Table 14. The rubbing resistance test, the dry cleaning test and the discharge stability test were made in the same manner as in Example D-1. The results thereof are shown in Table 13.

(Comparative Example D-4)

In Comparative Example D-4, inks were prepared and evaluated in the same manner as in Example D-4 with the exceptions that the acid value of the polymer fine particles to be added was changed to 120 mg KOH/g and 150 mg KOH/g, and that no polyethylene wax was added. An emulsion prepared by using the polymer fine particles having an acid value of 120 mg KOH/g was taken as emulsion D (EM-D), and an emulsion prepared by using the polymer fine particles having an acid value of 150 mg KOH/g was taken as emulsion E (EM-E). Ink compositions are shown in Table 14. The rubbing resistance test, the dry cleaning test and the discharge stability test were made in the same manner as in Example D-1. The results thereof are shown in Table 13.

[Table 13]

Table 13: Results of Rubbing Resistance, Dry Cleaning and Discharge Stability in Examples D-1 to D-4 and Comparative Examples D-1 to D-4

| | Tg | Particle Size | Acid Value | Melting Point | Rubbing Resistance | | Dry Cleaning | Discharge Stability |
|---|---|---|---|---|---|---|---|---|
| | | | | | Dry | Wet | | |
| Example D-1 | -15 | 110 | 20 | 106 | 4/5 | 4/5 | 4/5 | A |
| Example D-2 | -17 | 80 | 20 | 117 | 5 | 4/5 | 5 | A |
| Example D-3 | -17 | 90 | 20 | 106 | 5 | 5 | 5 | A |
| Example D-4 | -17 | 115 | 20 | 117 | 5 | 5 | 5 | A |
| Comparative Example D-1 | 0 | 110 | 20 | - | 3 | 2 | 2/3 | A |
| Comparative Example D-2 | 10 | 80 | 20 | - | 2/3 | 1/2 | 2 | A |
| Comparative Example D-3 | -17 | 350 | 20 | - | 2 | 2 | 2/3 | D |
| | -17 | 45 | 20 | - | 4 | 3/4 | 4 | C |
| Comparative Example D-4 | -17 | 115 | 120 | - | 3 | 3 | 3 | A |
| | -17 | 115 | 150 | - | 2/3 | 2/3 | 3/4 | B |

The unit of Tg is °C; the particle size is the average particle size of the pigment, and the unit thereof is nm; the unit of the acid value is mg KOH/g; and the melting point is the melting point of the polyalkylene wax, and the unit thereof is °C.

The rubbing resistance and dry cleaning are based on the evaluation standards of JIS.

[Table 14]

Table 14: Ink Compositions wt% of Examples D-1 to D-4 and Comparative Examples D-1 to D-4

| | Example | | | | Comparative Example | | | | | |
|---|---|---|---|---|---|---|---|---|---|---|
| | D-1 | D-2 | D-3 | D-4 | D-1 | D-2 | D-3 | | D-4 | |
| Dispersion D1 | 4.5 | - | - | - | 4.5 | - | - | - | - | - |
| Dispersion D2 | - | 3.5 | - | - | - | 3.5 | - | - | - | - |
| Dispersion D3 | - | - | 4.5 | - | - | - | - | - | - | - |
| Dispersion D4 | - | - | - | 4.5 | - | - | - | - | 4.5 | 4.5 |
| Dispersion D3A | - | - | - | - | - | - | 4.5 | - | - | - |
| Dispersion D3B | - | - | - | - | - | - | - | 4.5 | - | - |
| EM-A | 6.0 | 5.0 | 6.0 | 6.0 | - | - | 6.0 | 6.0 | - | - |
| EM-B | - | - | - | - | 6.0 | - | - | - | - | - |
| EM-C | - | - | - | - | - | 6.0 | - | - | - | - |
| EM-D | - | - | - | - | - | - | - | - | 6.0 | - |
| EM-E | - | - | - | - | - | - | - | - | - | 6.0 |
| PEM-17 | 1.0 | - | 1.0 | - | - | - | - | - | | |
| 2203A | - | 1.0 | - | 1.0 | - | - | - | - | - | - |
| 1,2-HD | 2.0 | 3.0 | 3.0 | 2.0 | 2.0 | 3.0 | 3.0 | 3.0 | 2.0 | 2.0 |
| 1,2-PD | - | - | - | 1.0 | - | - | - | - | 1.0 | 1.0 |
| TEGmBE | 2.0 | 1.0 | 1.0 | 2.0 | 2.0 | 1.0 | 1.0 | 1.0 | 2.0 | 2.0 |
| S-104 | 0.3 | 0.3 | 0.3 | 0.3 | 0.3 | 0.3 | 0.3 | 0.3 | 0.3 | 0.3 |
| S-465 | 0.5 | 0.5 | 0.3 | 0.5 | 0.5 | 0.5 | 0.3 | 0.3 | 0.5 | 0.5 |
| S-61 | - | - | 0.2 | - | - | - | 0.2 | 0.2 | - | - |
| Glycerin | 10.0 | 12.0 | 10.0 | 10.0 | 10.0 | 12.0 | 10.0 | 10.0 | 10.0 | 10.0 |
| TMP | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 |
| 2-P | 1.0 | - | - | - | 1.0 | - | - | - | - | - |

(continued)

| | Example | | | | Comparative Example | | | | | |
|---|---|---|---|---|---|---|---|---|---|---|
| | D-1 | D-2 | D-3 | D-4 | D-1 | D-2 | D-3 | | D-4 | |
| TEA | 1.0 | 1.0 | 1.0 | 1.0 | 1.0 | 1.0 | 1.0 | 1.0 | 1.0 | 1.0 |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine
PEM-17: Nopcoat PEM-17 (a polyalkylene wax manufactured by San Nopco Ltd.)
2203A: Mitsui Hiwax 2203A (a polyalkylene wax manufactured by Mitsui Chemicals, Inc.)

(Example D-5) (not according to the present invention)

(1) Production of Pigment Dispersion D5

In pigment dispersion D5, MA100 manufactured by Mitsubishi Chemical Corporation was used as carbon black (PBk7). A surface of the carbon black was oxidized in the same manner as in JP-A-8-3498 to make it dispersible in water, thereby preparing dispersion D5. The particle size was measured by the same method as in Example D-1. As a result, it was 120 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 15 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of butyl acrylate, 16 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion G (EM-G). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -19°C. The molecular weight was measured in the same manner as in Example D-1. As a result, it was 180,000. The acid value was 18 mg KOH/g. The acid value was measured by the same method as in Example D-1.

(3) Preparation of Inkjet Recording Ink

Examples of compositions suitable for inkjet recording inks are shown in Table 16 below. An inkjet recording ink of the invention was prepared and evaluated in the same manner as in Example D-1 by using dispersion D5 prepared by the above-mentioned method and mixing with vehicle components shown in Table 16.

(4) Rubbing Resistance Test and Dry Cleaning Test

Using the ink of Example D-5, the rubbing resistance test and the dry cleaning test were made in the same manner and by the same evaluation method as in Example D-1. The results of the rubbing resistance test and the dry cleaning test are shown in Table 15.

(5) Measurement of Discharge Stability

Using the ink of Example D-5, the discharge stability was measured in the same manner and by the same evaluation method as in Example D-1. The measurement results of the discharge stability are shown in Table 15.

(Example D-6) (not according to the present invention)

(1) Production of Pigment Dispersion D6

First, in pigment dispersion D6, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 45 parts of styrene, 30 parts of polyethylene glycol (400) acrylate, 10 parts of benzyl acrylate, 2 parts of acrylic acid, and 0.3 part of t-dodecyl mercaptan were placed therein and heated to 70°C. Then, 150 parts of styrene, 100 parts of polyethylene glycol (400) acrylate, 15 parts of acrylic acid, 5 parts of butyl acrylate, 1 part of t-dodecyl mercaptan and 5 parts of sodium persulfate, which were separately prepared, were placed in the dripping funnel, and a polymerization reaction of a dispersion polymer was conducted while adding them dropwise to the reaction vessel, taking 4 hours. Then, water was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry

Co., Ltd.). As a result, it was 45°C.

Further, 40 parts of the above-mentioned dispersion polymer solution, 30 parts of Pigment Blue 15:3 and 100 parts of a 0.1 mol/L aqueous sodium hydroxide solution were mixed, followed by dispersion using an Eiger mill using zirconia beads, taking 2 hours. Thereafter, the dispersed mixture was transferred to another vessel, and 300 parts of ion-exchange water was added, followed by further stirring for one hour. Then, the pH was adjusted to 9 by neutralization with a 0.1 mol/L sodium hydroxide solution. Then, filtration through a 0.3-μm membrane filter was performed to prepare dispersion D6 having a solid content (the dispersion polymer and Pigment Blue 15:3) of 20%. The particle size was measured by the same method as in Example D-1. As a result, it was 100 nm. The molecular weight was measured in the same manner as in Example D-1. As a result, it was 210,000.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 25 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 20 parts of ethyl acrylate, 20 parts of butyl acrylate, 20 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion F (EM-F). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -21°C. The molecular weight was measured in the same manner as in Example D-1. As a result, it was 200,000. The acid value was 18 mg KOH/g. The acid value was measured by the same method as in Example D-1.

(3) Preparation of Inkjet Recording Ink

Examples of compositions suitable for inkjet recording inks are shown in Table 16 below. An inkjet recording ink of the invention was prepared and evaluated in the same manner as in Example D-1 by using dispersion D6 prepared by the above-mentioned method and mixing with vehicle components shown in Table 16.

(4) Rubbing Resistance Test and Dry Cleaning Test

Using the ink of Example D-6, the rubbing resistance test and the dry cleaning test were made in the same manner and by the same evaluation method as in Example D-1. The results of the rubbing resistance test and the dry cleaning test are shown in Table 15.

(5) Measurement of Discharge Stability

Using the ink of Example D-6, the discharge stability was measured in the same manner and by the same evaluation method as in Example D-1. The measurement results of the discharge stability are shown in Table 15.

(Example D-7) (not according to the present invention)

(1) Production of Pigment Dispersion D7

First, using Pigment Red 122 (dimethylquinacridone pigment: manufactured by Clariant Corporation), pigment dispersion D7 was prepared in the same manner as pigment dispersion D2. The particle size was measured by the same method as in Example D-1. As a result, it was 80 nm.

(2) Preparation of Polymer Fine Particles

The same polymer fine particles as in Example D-6 were used.

(3) Preparation of Inkjet Recording Ink

Examples of compositions suitable for inkjet recording inks are shown in Table 16 below. An inkjet recording ink of the invention was prepared and evaluated in the same manner as in Example D-1 by using dispersion D7 prepared by the above-mentioned method and mixing with vehicle components shown in Table 16.

(4) Rubbing Resistance Test and Dry Cleaning Test

Using the ink of Example D-7, the rubbing resistance test and the dry cleaning test were made in the same manner and by the same evaluation method as in Example D-1. The results of the rubbing resistance test and the dry cleaning test are shown in Table 15.

(5) Measurement of Discharge Stability

Using the ink of Example D-7, the discharge stability was measured in the same manner and by the same evaluation method as in Example D-1. The measurement results of the discharge stability are shown in Table 15.

(Example D-8) (not according to the present invention)

(1) Production of Pigment Dispersion D8

First, using Pigment Yellow 180 (benzimidazolone disazo pigment: manufactured by Clariant Corporation), pigment dispersion D8 was prepared in the same manner as pigment dispersion D2. The particle size was measured by the same method as in Example D-1. As a result, it was 130 nm.

(2) Preparation of Polymer Fine Particles

The same polymer fine particles as in Example D-6 were used.

(3) Preparation of Inkjet Recording Ink

Examples of compositions suitable for inkjet recording inks are shown in Table 16 below. An inkjet recording ink of the invention was prepared and evaluated in the same manner as in Example D-1 by using dispersion D8 prepared by the above-mentioned method and mixing with vehicle components shown in Table 16.

(4) Rubbing Resistance Test and Dry Cleaning Test

Using the ink of Example D-8, the rubbing resistance test and the dry cleaning test were made in the same manner and by the same evaluation method as in Example D-1. The results of the rubbing resistance test and the dry cleaning test are shown in Table 15.

(5) Measurement of Discharge Stability

Using the ink of Example D-8, the discharge stability was measured in the same manner and by the same evaluation method as in Example D-1. The measurement results of the discharge stability are shown in Table 15.

(Reference Example D-5)

In Reference Example D-5, inks were prepared and evaluated in the same manner as in Example D-5 with the exceptions that the molecular weight of the polymer fine particles to be added was changed to 90,000 and 1,100,000, and that no polyethylene wax was added. An emulsion having a molecular weight of 90,000 was taken as emulsion H (EM-H), and an emulsion having a molecular weight of 1,100,000 was taken as emulsion I (EM-I). Ink compositions are shown in Table 16. The rubbing resistance test, the dry cleaning test and the discharge stability test were made in the same manner as in Example D-5. The results thereof are shown in Table 15. The measurement of the particle size of the polymer fine particles was made in the same manner as in Example D-1.

(Reference Example D-6)

In Reference Example D-6, an ink was prepared and evaluated in the same manner as in Example D-6 with the exceptions that 1,2-hexanediol as a 1,2-alkylene glycol was replaced by glycerin, and that no polyethylene wax was added. An ink composition is shown in Table 16. The rubbing resistance test, the dry cleaning test and the discharge stability test were made in the same manner as in Example D-5. The results thereof are shown in Table 15.

(Reference Example D-7)

In Reference Example D-7, an ink was prepared and evaluated in the same manner as in Example D-7 with the exceptions that the acetylene glycol-based surfactant and the acetylene alcohol-based surfactant were replaced by glycerin, and that no polyethylene wax was added. An ink composition is shown in Table 16. The rubbing resistance test, the dry cleaning test and the discharge stability test were made in the same manner as in Example D-5. The results thereof are shown in Table 15.

(Reference Example D-8)

In Reference Example D-8, inks were prepared and evaluated in the same manner as in Example D-8 with the exceptions that the amount of the polymer fine particles to be added was changed to 80% and 50%, by the ratio to the pigment. Ink compositions are shown in Table 16. The rubbing resistance test, the dry cleaning test and the discharge stability test were made in the same manner as in Example D-5. The results thereof are shown in Table 15.

(Reference Example D-9)

In Reference Example D-9, two levels of inks were prepared in the same manner as in Example D-2 with the exception that commercially available waxes having melting points of 43°C (wax A) and 68°C (wax B) were added. The results thereof are shown in Table 15.

[Table 15]

Table 15: Results of Rubbing Resistance Dry Cleaning and Discharge Stability in Examples D-5 to D-8 and Reference Examples D-5 to D-9

| | Tg | Particle Size | Acid Value | Molecular Weight | Melting Point | Ratio to Pigment | Rubbing Resistance | | Dry Cleaning | Discharge Stability |
|---|---|---|---|---|---|---|---|---|---|---|
| | | | | | | | Dry | Wet | | |
| Example D-5 | -19 | 120 | 18 | 1.8 | 103 | 120 | 5 | 5 | 5 | A |
| Example D-6 | -21 | 100 | 18 | 2.0 | 117 | 150 | 5 | 5 | 5 | A |
| Example D-7 | -21 | 80 | 18 | 2.0 | 103 | 100 | 5 | 5 | 5 | A |
| Example D-8 | -21 | 130 | 18 | 2.0 | 117 | 120 | 5 | 5 | 5 | A |
| Reference Example D-5 | -19 | 120 | 18 | 0.9 | - | 120 | 3 | 3 | 2 | A |
| | -19 | 120 | 18 | 11.0 | - | 120 | 3 | 2/3 | 3 | D |
| Reference Example D-6 | -21 | 100 | 18 | 2.0 | - | 150 | 5 | 4/5 | 5 | C |
| Reference Example D-7 | -21 | 80 | 18 | 2.0 | - | 100 | 4/5 | 4/5 | 5 | C |
| Reference Example D-8 | -21 | 130 | 18 | 2.0 | - | 80 | 3 | 3 | 3 | A |
| | -21 | 130 | 18 | 2.0 | - | 50 | 2 | 2 | 2 | A |
| Reference Example D-9 | -21 | 80 | 20 | 1.5 | 43 | 143 | 4/5 | 4 | 5 | A |
| | -21 | 80 | 20 | 1.5 | 68 | 143 | 4/5 | 4 | 5 | A |

The unit of Tg is °C; the particle size is the average particle size of the pigment, and the unit thereof is nm; the unit of the acid value is mg KOH/g; and the melting point is the melting point of the polyethylene wax, and the unit thereof is °C.
The molecular weight in Table 7 is in $\times 10^5$.
The ratio to the pigment is indicated by % of the polymer fine particles to the pigment.
The rubbing resistance and dry cleaning are based on the evaluation standards of JIS.

[Table 16]

Table 16: Ink Compositions (wt%) of Examples D-5 to D-8 and Reference Examples D-5 to D-9

| | Example | | | | Reference Example | | | | | | | |
|---|---|---|---|---|---|---|---|---|---|---|---|---|
| | D-5 | D-6 | D-7 | D-8 | D-5 | | D-6 | D-7 | D-8 | | D-9 | |
| Dispersion D5 | 4.0 | - | - | - | 4.0 | 4.0 | - | - | - | - | - | - |
| Dispersion D6 | - | 3.2 | - | - | - | - | 3.2 | - | - | - | 3.5 | 3.5 |
| Dispersion D7 | - | - | 4.0 | - | - | - | - | 4.0 | - | - | - | - |
| Dispersion D8 | - | - | - | 4.0 | - | - | - | - | 4.0 | 4.0 | - | - |
| EM-F | 5.0 | - | - | - | - | - | - | - | - | - | - | - |
| EM-G | - | 4.8 | 4.0 | 5.0 | - | - | 4.8 | 4.0 | 3.2 | 2 | - | - |
| EM-H | - | - | - | - | 5.0 | - | - | - | - | - | - | - |
| EM-I | - | - | - | - | - | 5.0 | - | - | - | - | - | - |
| PEM-17 | 1.0 | - | 1.0 | - | - | - | - | - | - | - | - | - |
| 2203A | - | 1.0 | - | 1.0 | - | - | - | - | - | - | - | - |
| Wax A | - | - | - | - | - | - | - | - | - | - | 1.0 | - |
| Wax B | - | - | - | - | - | - | - | - | - | - | - | 1.0 |
| 1,2-HD | 2.0 | 3.0 | 3.0 | 2.0 | 2.0 | 2.0 | - | 3.0 | 2.0 | 2.0 | 2.0 | 3.0 |
| 1,2-PD | - | - | - | 1.0 | - | - | - | - | 1.0 | 1.0 | - | - |
| TEGmBE | 2.0 | 1.0 | 1.0 | 2.0 | 2.0 | 2.0 | 1.0 | 1.0 | 2.0 | 2.0 | 2.0 | 1.0 |
| S-104 | 0.3 | 0.3 | 0.3 | 0.3 | 0.3 | 0.3 | 0.3 | - | 0.3 | 0.3 | 0.3 | 0.3 |
| S-465 | 0.5 | 0.5 | 0.3 | 0.5 | 0.5 | 0.5 | 0.3 | - | 0.5 | 0.5 | 0.5 | 0.5 |
| S-61 | - | - | 0.2 | - | - | - | 0.2 | - | - | - | - | - |
| Glycerin | 10.0 | 12.0 | 10.0 | 10.0 | 10.0 | 12.0 | 13.0 | 11.0 | 10.0 | 10.0 | 12.0 | 12.0 |
| TMP | 3.0 | 3.0 | 3.0 | 3.0 | 3.0 | 3.0 | 3.0 | 3.0 | 3.0 | 3.0 | 3.0 | 3.0 |
| TEG | 3.0 | 5.0 | 4.0 | 4.0 | 4.0 | 4.0 | 4.0 | 4.0 | 4.0 | 4.0 | 5.0 | 5.0 |
| 2-P | 1.0 | - | - | - | 1.0 | - | - | - | - | - | - | - |
| TEA | 1.0 | 1.0 | 1.0 | 1.0 | 1.0 | 1.0 | 1.0 | 1.0 | 1.0 | 1.0 | 1.0 | 1.0 |

(continued)

| | Example | | | | Reference Example | | | | | | | |
|---|---|---|---|---|---|---|---|---|---|---|---|---|
| | D-5 | D-6 | D-7 | D-8 | D-5 | | D-6 | D-7 | D-8 | | D-9 | |
| Ion-Exchange Water | Balance | Balance | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine
PEM-17: Nopcoat PEM-17 (a polyalkylene wax manufactured by San Nopco Ltd.)
2203A: Mitsui Hiwax 2203A (a polyalkylene wax manufactured by Mitsui Chemicals, Inc.)
Wax A: A wax having a melting point of 43°C
Wax B: A wax having a melting point of 68°C

[Example E] (not according to the present invention)

(Example E-1) (not according to the present invention)

(1) Production of Pigment Dispersion E1

In pigment dispersion E1, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 75 parts of benzyl acrylate, 2 parts of acrylic acid and 0.3 part of t-dodecyl mercaptan were placed therein and heated to 70°C. Then, 150 parts of benzyl acrylate, 15 parts of acrylic acid, 5 parts of butyl acrylate, 1 part of t-dodecyl mercaptan, 20 parts of methyl ethyl ketone and 1 part of sodium persulfate, which were separately prepared, were placed in the dripping funnel, and a polymerization reaction of a dispersion polymer was conducted while adding them dropwise to the reaction vessel, taking 4 hours. Then, methyl ethyl ketone was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As a result, it was 40°C.

Further, 40 parts of the above-mentioned dispersion polymer solution, 30 parts of Pigment Blue 15:3, 100 parts of a 0.1 mol/L aqueous sodium hydroxide solution and 30 parts of methyl ethyl ketone were mixed, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Then, the entire amount of methyl ethyl ketone and a part of the water were distilled off using a rotary evaporator, and the pH was adjusted to 9 by neutralization with a 0.1 mol/L sodium hydroxide solution. Then, filtration through a 0.3-μm membrane filter and adjustment with ion-exchange water were performed to prepare pigment dispersion E1 having a pigment concentration of 15%. The particle size was measured by using a Microtrac size distribution analyzer, UPA250 (manufactured by Nikkiso Co., Ltd.). As a result, it was 80 nm.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 0.05 part of sodium lauryl sulfate, 19 parts of ethyl acrylate, 15 parts of butyl acrylate, 6 parts of tetrahydrofurfuryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 30 parts of ethyl acrylate, 25 parts of methyl acrylate, 16 parts of butyl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -27°C. The styrene conversion molecular weight was 200,000, when measured using gel permeation chromatography (GPC) of 7100 system manufactured by Hitachi, Ltd. and using THF as a solvent.

(3) Preparation of Inkjet Recording Ink

Examples of compositions suitable for inkjet recording inks will be shown in Table 18 below. An inkjet recording ink of the invention was prepared by using dispersion E1 prepared by the above-mentioned method and mixing with vehicle components shown in Table 18. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)·2Na salt for reducing the effects of metal ions in the ink system were each added to ion-exchange water.

(4) Rubbing Resistance Test and Dry Cleaning Test

Using the ink of Example E-1, and using PX-V630 manufactured by Seiko Epson Corporation as an inkjet printer, a sample in which solid printing was made on cotton was prepared. That sample was subjected to a rubbing

fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 17.

(5) Measurement of Discharge Stability

Using the ink of Example E-1, and using PX-V630 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink which caused no print distortion at all was evaluated as AA, one which caused a print distortion at one place as A, one which caused print distortions at 2 to 3 places as B, one which caused print distortions at 4 to 5 places as C, and one which caused print distortions at 6 or more places as D. The results are shown in Table 17.

(Example E-2) (not according to the present invention)

(1) Production of Pigment Dispersion E2

First, using Pigment Violet 19 (quinacridone pigment: manufactured by Clariant Corporation), a pigment dispersion was prepared in the same manner as pigment dispersion E1, and this was taken as pigment dispersion E2. The particle size was measured by the same method as in Example E-1. As a result, it was 90 nm.

(2) Preparation of Polymer Fine Particles

The same polymer fine particles as in Example E-1 were used.

(3) Preparation of Inkjet Recording Ink

Examples of compositions suitable for inkjet recording inks are shown in Table 18 below. An inkjet recording ink of the invention was prepared and evaluated in the same manner as in Example E-1 by using dispersion E2 prepared by the above-mentioned method and mixing with vehicle components shown in Table 18.

(4) Rubbing Resistance Test and Dry Cleaning Test

Using the ink of Example E-2, the rubbing resistance test and the dry cleaning test were made in the same manner and by the same evaluation method as in Example E-1. The results of the rubbing resistance test and the dry cleaning test are shown in Table 17.

(5) Measurement of Discharge Stability

Using the ink of Example E-2, the discharge stability was measured in the same manner and by the same evaluation method as in Example E-1. The measurement results of the discharge stability are shown in Table 17.

(Example E-3) (not according to the present invention)

(1) Production of Pigment Dispersion E3

First, using Pigment Yellow 14 (azo pigment: manufactured by Clariant Corporation), a pigment dispersion was prepared in the same manner as pigment dispersion E1, and this was taken as pigment dispersion E3. The particle size was measured by the same method as in Example E-1. As a result, it was 115 nm.

(2) Preparation of Polymer Fine Particles

The same polymer fine particles as in Example E-1 were used.

(3) Preparation of Inkjet Recording Ink

Examples of compositions suitable for inkjet recording inks are shown in Table 18 below. An inkjet recording ink of the invention was prepared and evaluated in the same manner as in Example E-1 by using dispersion E3 prepared by the above-mentioned method and mixing with vehicle components shown in Table 18.

(4) Rubbing Resistance Test and Dry Cleaning Test

Using the ink of Example E-3, the rubbing resistance test and the dry cleaning test were made in the same manner and by the same evaluation method as in Example E-1. The results of the rubbing resistance test and the dry cleaning test are shown in Table 17.

(5) Measurement of Discharge Stability

Using the ink of Example E-3, the discharge stability was measured in the same manner and by the same evaluation method as in Example E-1. The measurement results of the discharge stability are shown in Table 17.

(Comparative Example E-1)

In Comparative Example E-1, an ink was prepared and evaluated in the same manner as in Example E-1 with the exception that polymer fine particles having a glass transition temperature of -10°C, which were obtained by changing a part of ethyl acrylate to styrene, were used. An emulsion prepared using the polymer fine particles was taken as emulsion B (EM-B). An ink composition is shown in Table 18. The rubbing resistance test, the dry cleaning test and the discharge stability test were made in the same manner as in Example E-1. The results thereof are shown in Table 17.

(Comparative Example E-2)

In Comparative Example E-2, an ink was prepared and evaluated in the same manner as in Example E-2 with the exception that a dispersion having a pigment particle size of 350 nm was prepared. The dispersion having a particle size of 350 nm was taken as pigment dispersion E2A. An ink composition is shown in Table 18. The rubbing resistance test, the dry cleaning test and the discharge stability test were made in the same manner as in Example E-1. The results thereof are shown in Table 17.

(Comparative Example E-3)

In Comparative Example E-3, inks were prepared and evaluated in the same manner as in Example E-3 with the exception that the acid value of the polymer fine particles to be added was changed to 120 mg KOH/g and 150 mg KOH/g. An emulsion prepared by using the polymer fine particles having an acid value of 120 mg KOH/g was taken as emulsion C (EM-C), and an emulsion prepared by using the polymer fine particles having an acid value of 150 mg KOH/g was taken as emulsion D (EM-D). Ink compositions are shown in Table 18. The rubbing resistance test, the dry cleaning test and the discharge stability test were made in the same manner as in Example E-1. The results thereof are shown in Table 17.

[Table 17]

Table 13: Results of Rubbing Resistance, Dry Cleaning and Discharge Stability in Examples E-1 to E-3 and Comparative Examples E-1 to E-3

| | Tg | Particle Size | Acid Value | Rubbing Resistance | | Dry Cleaning | Discharge Stability |
|---|---|---|---|---|---|---|---|
| | | | | Dry | Wet | | |
| Example E-1 | -27 | 80 | 20 | 4/5 | 4 | 4/5 | A |
| Example E-2 | -27 | 90 | 20 | 4/5 | 5 | 4/5 | A |
| Example E-3 | -27 | 115 | 20 | 5 | 5 | 5 | A |

(continued)

| | Tg | Particle Size | Acid Value | Rubbing Resistance | | Dry Cleaning | Discharge Stability |
|---|---|---|---|---|---|---|---|
| | | | | Dry | Wet | | |
| Comparative Example E-1 | -10 | 80 | 20 | 2 | 1/2 | 2 | A |
| Comparative Example E-2 | -27 | 350 | 20 | 2/3 | 2 | 2/3 | D |
| Comparative Example E-3 | -27 | 115 | 120 | 3 | 3 | 3 | A |
| | -27 | 115 | 150 | 3/4 | 2/3 | 3/4 | B |

The particle size is the average particle size of the pigment.

The rubbing resistance and dry cleaning are based on the evaluation standards of JIS.

[Table 18]

Table 18: Ink Compositions (wt%) of Examples E-1 to E-3 and Comparative Examples E-1 to E-3

| | Example | | | Comparative Example | | | |
|---|---|---|---|---|---|---|---|
| | E-1 | E-2 | E-3 | E-1 | E-2 | E-3 | |
| Dispersion E1 | 3.5 | - | - | 3.5 | - | - | - |
| Dispersion E2 | - | 4.5 | - | - | - | - | - |
| Dispersion E3 | - | - | 4.5 | - | - | 4.5 | 4.5 |
| Dispersion E2A | - | - | - | - | 4.5 | - | - |
| EM-A | 5 | 6 | 6 | - | 6 | - | - |
| EM-B | - | - | - | 5 | - | - | - |
| EM-C | - | - | - | - | - | 6 | - |
| EM-D | - | - | - | - | - | - | 6 |
| 1,2-HD | 3.0 | 3.0 | 2.0 | 3.0 | 3.0 | 2.0 | 2.0 |
| 1,2-PD | - | - | 1.0 | - | - | 1.0 | 1.0 |
| TEGmBE | 1.0 | 1.0 | 2.0 | 1.0 | 1.0 | 2.0 | 2.0 |
| S-104 | 0.3 | 0.3 | 0.3 | 0.3 | 0.3 | 0.3 | 0.3 |
| S-465 | 0.5 | 0.3 | 0.5 | 0.5 | 0.3 | 0.5 | 0.5 |
| S-61 | - | 0.2 | - | - | 0.2 | - | - |
| Glycerin | 12 | 10 | 10 | 12 | 10 | 10 | 10 |
| TMP | 3.0 | 3.0 | 3.0 | 3.0 | 3.0 | 3.0 | 3.0 |
| TEG | 5.0 | 4.0 | 4.0 | 4.0 | 4.0 | 4.0 | 4.0 |
| 2-P | - | - | - | - | - | - | - |
| TEA | 1.0 | 1.0 | 1.0 | 1.0 | 1.0 | 1.0 | 1.0 |

(continued)

| | Example | | | Comparative Example | | | |
|---|---|---|---|---|---|---|---|
| | E-1 | E-2 | E-3 | E-1 | E-2 | E-3 | |
| Ion-Exchange Water | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol mono butyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
2-P: 2-Pyrrolidone
TEA: Triethanolamine

(Example E-4) (not according to the present invention)

(1) Production of Pigment Dispersion E4

First, in pigment dispersion E4, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 80 parts of benzyl acrylate, 5 parts of methacrylic acid, 2 parts of acrylic acid and 0.3 part of t-dodecyl mercaptan were placed therein and heated to 70°C. Then, 150 parts of benzyl acrylate, 15 parts of methacrylic acid, 5 parts of acrylic acid, 1 part of t-dodecyl mercaptan and 5 parts of sodium persulfate, which were separately prepared, were placed in the dripping funnel, and a polymerization reaction of a dispersion polymer was conducted while adding them dropwise to the reaction vessel, taking 4 hours. Then, water was added to the reaction vessel to prepare a dispersion polymer solution having a concentration of 40%. After taking and drying a part of this polymer, the glass transition temperature was measured by using a differential operating calorimeter (EXSTAR 6000DSC manufactured by Seiko Electron Industry Co., Ltd.). As a result, it was 45°C.

Further, 40 parts of the above-mentioned dispersion polymer solution, 30 parts of Pigment Blue 15:3 (copper phthalocyanine pigment: manufactured by Clariant Corporation) and 100 parts of a 0.1 mol/L aqueous sodium hydroxide solution were mixed, followed by dispersion using an Eiger mill using zirconia beads, taking 2 hours. Thereafter, the dispersed mixture was transferred to another vessel, and 300 parts of ion-exchange water was added, followed by further stirring for one hour. Then, the pH was adjusted to 9 by neutralization with a 0.1 mol/L sodium hydroxide solution. Then, filtration through a 0.3-μm membrane filter was performed to prepare dispersion E4 having a solid content (the dispersion polymer and the pigment) of 20%. The particle size was measured by the same method as in Example E-1. As a result, it was 100 nm. The molecular weight was measured in the same manner as in Example E-1. As a result, it was 210,000.

(2) Preparation of Polymer Fine Particles

A reaction vessel was equipped with a dripping device, a thermometer, a water-cooled reflux condenser and a stirrer. Then, 100 parts of ion-exchange water was placed therein, and 0.3 part of potassium persulfate as a polymerization initiator was added with stirring at 70°C under a nitrogen atmosphere. A monomer solution in which 0.05 part of sodium lauryl sulfate, 20 parts of ethyl acrylate, 25 parts of butyl acrylate, 6 parts of lauryl acrylate, 5 parts of butyl methacrylate and 0.02 part of t-dodecyl mercaptan were added to 7 parts of ion-exchange water was added dropwise at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, 20 parts of ethyl acrylate, 20 parts of butyl acrylate, 20 parts of lauryl acrylate, 5 parts of acrylic acid and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion E (EM-E). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -31°C.

(3) Preparation of Inkjet Recording Ink

Examples of compositions suitable for inkjet recording inks are shown in Table 20 below. An inkjet recording ink of the invention was prepared and evaluated in the same manner as in Example E-1 by using dispersion E4 prepared by the above-mentioned method and mixing with vehicle components shown in Table 20.

(4) Rubbing Resistance Test and Dry Cleaning Test

Using the ink of Example E-4, the rubbing resistance test and the dry cleaning test were made in the same manner and by the same evaluation method as in Example E-1. The results of the rubbing resistance test and the dry cleaning test are shown in Table 19.

(5) Measurement of Discharge Stability

Using the ink of Example E-4, the discharge stability was measured in the same manner and by the same evaluation method as in Example E-1. The measurement results of the discharge stability are shown in Table 19.

(Example E-5) (not according to the present invention)

(1) Production of Pigment Dispersion E5

First, using Pigment Red 122 (dimethylquinacridone pigment: manufactured by Clariant Corporation), pigment dispersion E5 was prepared in the same manner as pigment dispersion E4. The particle size was measured by the same method as in Example E-1. As a result, it was 80 nm.

(2) Preparation of Polymer Fine Particles

The same polymer fine particles as in Example E-4 were used.

(3) Preparation of Inkjet Recording Ink

Examples of compositions suitable for inkjet recording inks are shown in Table 20 below. An inkjet recording ink of the invention was prepared and evaluated in the same manner as in Example E-1 by using dispersion E5 prepared by the above-mentioned method and mixing with vehicle components shown in Table 20.

(4) Rubbing Resistance Test and Dry Cleaning Test

Using the ink of Example E-5, the rubbing resistance test and the dry cleaning test were made in the same manner and by the same evaluation method as in Example E-1. The results of the rubbing resistance test and the dry cleaning test are shown in Table 19.

(5) Measurement of Discharge Stability

Using the ink of Example E-5, the discharge stability was measured in the same manner and by the same evaluation method as in Example E-1. The measurement results of the discharge stability are shown in Table 19.

(Example E-6) (not according to the present invention)

(1) Production of Pigment Dispersion E6

First, using Pigment Yellow 180 (benzimidazolone disazo pigment: manufactured by Clariant Corporation), pigment dispersion E6 was prepared in the same manner as pigment dispersion E4. The particle size was measured by the same method as in Example E-1. As a result, it was 130 nm.

(2) Preparation of Polymer Fine Particles

The same polymer fine particles as in Example E-4 were used.

(3) Preparation of Inkjet Recording Ink

Examples of compositions suitable for inkjet recording inks are shown in Table 20 below. An inkjet recording ink of the invention was prepared and evaluated in the same manner as in Example E-1 by using dispersion E6 prepared by the above-mentioned method and mixing with vehicle components shown in Table 20.

(4) Rubbing Resistance Test and Dry Cleaning Test

Using the ink of Example E-6, the rubbing resistance test and the dry cleaning test were made in the same manner and by the same evaluation method as in Example E-1. The results of the rubbing resistance test and the dry cleaning test are shown in Table 19.

(5) Measurement of Discharge Stability

Using the ink of Example E-6, the discharge stability was measured in the same manner and by the same evaluation method as in Example E-1. The measurement results of the discharge stability are shown in Table 19.

(Reference Example E-4)

(1) Production of Pigment Dispersion E7

First, in pigment dispersion E7, Pigment Blue 15:3 (copper phthalocyanine pigment: manufactured by Clariant Corporation) was used. After the air in a reaction vessel equipped with a stirrer, a thermometer, a reflux tube and a dripping funnel was replaced by nitrogen, 45 parts of styrene, 30 parts of polyethylene glycol (400) acrylate, 10 parts of benzyl acrylate, 2 parts of acrylic acid, and 0.3 part of t-dodecyl mercaptan were placed therein and heated to 70°C. Then, 150 parts of styrene, 100 parts of polyethylene glycol (400) acrylate, 15 parts of acrylic acid, 5 parts of butyl acrylate, 1 part of t-dodecyl mercaptan and 5 parts of sodium persulfate, which were separately prepared, were placed in the dripping funnel, and a polymerization reaction of a dispersion polymer was conducted while adding them dropwise to the reaction vessel, taking 4 hours. Then, water was added to the reaction vessel to prepare a dispersion polymer solution having a concentration of 40%.

Further, 40 parts of the above-mentioned dispersion polymer solution, 30 parts of Pigment Blue 15:3 (copper phthalocyanine pigment: manufactured by Clariant Corporation) and 100 parts of a 0.1 mol/L aqueous sodium hydroxide solution were mixed, followed by dispersion using an Eiger mill using zirconia beads, taking 2 hours. Thereafter, the dispersed mixture was transferred to another vessel, and 300 parts of ion-exchange water was added, followed by further stirring for one hour. Then, the pH was adjusted to 9 by neutralization with a 0.1 mol/L sodium hydroxide solution. Then, filtration through a 0.3-μm membrane filter was performed to prepare dispersion E7 having a solid content (the dispersion polymer and the pigment) of 20%. The particle size was measured by the same method as in Example E-1. As a result, it was 100 nm.

(2) Preparation of Polymer Fine Particles

The same polymer fine particles as in Example E-4 were used.

(3) Preparation of Inkjet Recording Ink

An inkjet recording ink was prepared and evaluated in the same manner as in Example E-1 by using dispersion E7 prepared by the above-mentioned method and mixing with vehicle components shown in Table 20.

(4) Rubbing Resistance Test and Dry Cleaning Test

Using the ink of Example E-4, the rubbing resistance test and the dry cleaning test were made in the same manner and by the same evaluation method as in Example E-1. The results of the rubbing resistance test and the dry cleaning test are shown in Table 19.

(5) Measurement of Discharge Stability

Using the ink of Example E-4, the discharge stability was measured in the same manner and by the same evaluation method as in Example E-1. The measurement results of the discharge stability are shown in Table 19.

(Reference Example E-5)

In Reference Example E-5, an ink was prepared and evaluated in the same manner as in Reference Example E-4 with the exception that pigment dispersion E8 prepared using Pigment Red 122 (dimethylquinacridone pigment: manufactured by Clariant Corporation) in the same manner as pigment dispersion E7 was used. An ink composition is shown in Table 20. The rubbing resistance test, the dry cleaning test and the discharge stability test were made in the same manner as in Example E-1. The results thereof are shown in Table 19.

(Reference Example E-6)

In Reference Example E-6, an ink was prepared and evaluated in the same manner as in Reference Example E-4 with the exception that pigment dispersion E9 prepared using Pigment Yellow 180 (benzimidazolone disazo pigment: manufactured by Clariant Corporation) in the same manner as pigment dispersion E7 was used. An ink composition is shown in Table 20. The rubbing resistance test, the dry cleaning test and the discharge stability test were made in the same manner as in Example E-1. The results thereof are shown in Table 19.

(Reference Example E-7)

In Reference Example E-7, an ink was prepared and evaluated in the same manner as in Example E-4 with the exception that the molecular weight of the polymer fine particles to be added was changed to 90,000. An emulsion having a molecular weight of 90,000 was taken as emulsion F (EM-F). An ink composition is shown in Table 20. The rubbing resistance test, the dry cleaning test and the discharge stability test were made in the same manner as in Example E-1. The results thereof are shown in Table 19. The measurement of the particle size of the polymer fine particles was made in the same manner as in Example E-1.

(Reference Example E-8)

In Reference Example E-8, an ink was prepared and evaluated in the same manner as in Example E-5 with the exception that the molecular weight of the polymer fine particles to be added was changed to 1,100,000. An emulsion having a molecular weight of 1,100,000 was taken as emulsion G (EM-G). An ink composition is shown in Table 20. The rubbing resistance test, the dry cleaning test and the discharge stability test were made in the same manner as in Example E-1. The results thereof are shown in Table 19. The measurement of the particle size of the polymer fine particles was made in the same manner as in Example E-1.

[Table 19]

Table 19: Results of Rubbing Resistance, Dry Cleaning and Discharge Stability in Examples E-4 to E-6 and Reference Examples E-4 to E-8

| | Particle Size | Molecular Weight | Ratio to Pigment | Rubbing Resistance | | Dry Cleaning | Discharge Stability |
|---|---|---|---|---|---|---|---|
| | | | | Dry | Wet | | |
| Example E-4 | 100 | 2.0 | 120 | 4/5 | 4/5 | 5 | A |
| Example E-5 | 80 | 2.0 | 110 | 4/5 | 5 | 5 | A |
| Example E-6 | 130 | 2.0 | 120 | 4/5 | 5 | 5 | A |
| Reference Example E-4 | 100 | 2.0 | 150 | 5 | 4/5 | 5 | C |
| Reference Example E-5 | 80 | 2.0 | 100 | 4/5 | 4/5 | 5 | C |
| Reference Example E-6 | 130 | 2.0 | 100 | 2 | 2 | 2 | A |
| Reference Example E-7 | 120 | 0.9 | 120 | 3 | 3 | 2 | A |

(continued)

| | Particle Size | Molecular Weight | Ratio to Pigment | Rubbing Resistance | | Dry Cleaning | Discharge Stability |
|---|---|---|---|---|---|---|---|
| | | | | Dry | Wet | | |
| Reference Example E-8 | 120 | 11 | 120 | 3 | 2/3 | 3 | D |

The particle size is the average particle size of the pigment.
The molecular weight in Table 19 is in $\times 10^5$.
The ratio to the pigment is indicated by % of the polymer fine particles to the pigment.
The rubbing resistance and dry cleaning are based on the evaluation standards of JIS.

[Table 20]

Table 20: Ink Compositions (wt%) of Examples E-4 to E-6 and Reference Examples E-4 to E-8

| | Example | | | Reference Example | | | | |
|---|---|---|---|---|---|---|---|---|
| | E-4 | E-5 | E-6 | E-4 | E-5 | E-6 | E-7 | E-8 |
| Dispersion E4 | 3.2 | - | - | - | - | - | 3.2 | - |
| Dispersion E5 | - | 4.0 | - | - | - | - | - | 4.0 |
| Dispersion E6 | - | - | 4.0 | - | - | - | - | - |
| Dispersion E7 | - | - | - | 3.2 | - | - | - | - |
| Dispersion E8 | - | - | - | - | 4.0 | - | - | - |
| Dispersion E9 | - | - | - | - | - | 4.0 | - | - |
| EM-E | 4.8 | 4.0 | 5.0 | 4.8 | 4.0 | 5.0 | - | - |
| EM-F | - | - | - | - | - | - | 4.8 | - |
| EM-G | - | - | - | - | - | - | - | 4.0 |
| 1,2-HD | 3.0 | 3.0 | 2.0 | 3.0 | 3.0 | 2.0 | 3.0 | 3.0 |
| 1,2-PD | - | - | 1.0 | - | - | 1.0 | - | - |
| TEGmBE | 1.0 | 1.0 | 2.0 | 1.0 | 1.0 | 2.0 | 1.0 | 1.0 |
| S-104 | 0.3 | 0.3 | 0.3 | 0.3 | 0.3 | 0.3 | 0.3 | 0.3 |
| S-465 | 0.5 | 0.3 | 0.5 | 0.5 | 0.3 | 0.5 | 0.5 | 0.3 |
| S-61 | - | 0.2 | - | - | 0.2 | - | - | 0.2 |
| Glycerin | 12 | 10 | 10 | 12 | 10 | 10 | 12 | 10 |
| TMP | 3.0 | 3.0 | 3.0 | 3.0 | 3.0 | 3.0 | 3.0 | 3.0 |
| TEG | 5.0 | 4.0 | 4.0 | 5.0 | 4.0 | 4.0 | 5.0 | 4.0 |
| 2-P | - | - | - | - | - | - | - | - |
| TEA | 1.0 | 1.0 | 1.0 | 1.0 | 1.0 | 1.0 | 1.0 | 1.0 |

(continued)

| | Example | | | Reference Example | | | | |
|---|---|---|---|---|---|---|---|---|
| | E-4 | E-5 | E-6 | E-4 | E-5 | E-6 | E-7 | E-8 |
| Ion-Exchange Water | Balance | Balance | Balance | Balance | Balance | Balance | Balance | Balance |
| Each pigment concentration is indicated by the pigment solid concentration.<br>1,2-HD: 1,2-Hexanediol<br>1,2-PD: 1,2-Pentanediol<br>TEGmBE: Triethylene glycol mono butyl ether<br>S-104: Surfynol 104 (an acetylene glycol-based surfactant manufactured by Nisshin Chemical Industry Co., Ltd.)<br>S-465: Surfynol 465 (an acetylene glycol-based surfactant manufactured by Nisshin Chemical Industry Co., Ltd.)<br>S-61: Surfynol 61 (an acetylene alcohol-based surfactant manufactured by Nisshin Chemical Industry Co., Ltd.)<br>TMP: Trimethylolpropane<br>TEG: Triethylene glycol<br>2-P: 2-Pyrrolidone<br>TEA: Triethanolamine | | | | | | | | |

[Example F]

The following Example F corresponds to a preferred embodiment (f).

(Example F-1)

(1) Production of Polymer (A-1)

After the air in a reaction vessel equipped with a stirrer, a thermometer, a reflux tube and a dripping funnel was thoroughly replaced by nitrogen, 10% of a total of 100 parts of respective monomers of 11 parts of methacrylic acid, 10 parts of styrene macromer AS-6 (S) (Toagosei Co., Ltd.), 39 parts of styrene, 10 parts of benzyl methacrylate and 30 parts of Blemmer PP-800 (NOF Corp.) was added to 20 parts by weight (hereinafter sometimes simply referred to as "parts") of methyl ethyl ketone and 0.03 part of a polymerization chain transfer agent (2-mercaptoethanol), followed by stirring to obtain a mixed solution.

Then, the remaining 99 percent of the above-mentioned monomers was placed in the dripping funnel, and 0.27 part of the above-mentioned polymerization chain transfer agent, 60 parts of methyl ethyl ketone and 1.2 parts of a radical polymerization initiator (2,2'-bisazo(2,4-dimethylvaleronitrile) were placed therein, followed by mixing and thorough nitrogen replacement to obtain a mixed solution.

Under a nitrogen atmosphere, the temperature was elevated to 65°C while stirring the mixed solution in the reaction vessel, and the mixed solution in the dripping funnel was gradually added dropwise taking 3 hours. After the dropping was finished, the temperature was maintained at 65°C for 2 hours, and a solution in which 0.3 part of the above-mentioned radical polymerization initiator was dissolved in 5 parts of methyl ethyl ketone was added thereto, followed by further aging at 65°C for 2 hours and at 70°C for 2 hours to obtain a polymer solution (A-1).

(2) Production of Pigment Dispersion F1

Forty parts of the above-mentioned polymer solution (A-1), 30 parts of Pigment Blue 15:3 (copper phthalocyanine pigment: manufactured by Clariant Corporation), 100 parts of a 0.1 mol/L aqueous sodium hydroxide solution and 30 parts of methyl ethyl ketone were mixed, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Then, the entire amount of methyl ethyl ketone and a part of the water were distilled off using a rotary evaporator, and the pH was adjusted to 9 by neutralization with a 0.1 mol/L sodium hydroxide solution. Then, filtration through a 0.3-μm membrane filter and adjustment with ion-exchange water were performed to prepare pigment dispersion F1 having a pigment concentration of 15%. The particle size was measured by using a Microtrac size distribution analyzer, UPA250 (manufactured by Nikkiso Co., Ltd.). As a result, it was 100 nm.

(3) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 7 parts of ion-exchange water, 0.05 part of sodium lauryl sulfate and 0.02 part of t-dodecyl mercaptan were added dropwise to 40% of a total of 100 parts of respective monomers of 16 parts of styrene, 71 parts of ethyl acrylate, 11.5 parts of butyl acrylate and 1.5 parts of methacrylic acid were added to 7 parts of ion-exchange water at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, the remaining 60 percent of the above-mentioned monomers and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -15°C. The styrene conversion molecular weight was 200,000, when measured using gel permeation chromatography (GPC) of 7100 system manufactured by Hitachi, Ltd. and using THF as a solvent.

Further, the acid value was measured by the following method. The above-mentioned aqueous dispersion of polymer fine particles is collected in a state prior to neutralization with sodium hydroxide, and the solid concentration thereof is exactly measured by a thermobalance (TG-2121 manufactured by Seiko Electron Industry Co., Ltd.). Then, about 10 g of this aqueous dispersion of polymer fine particles is accurately weighed and taken in a stoppered conical flask, and 100 ml of a 2-propanol-tetrahydrofuran mixed solution (1:2) is added to dissolve the polymer fine particles. This is titrated with a 0.1 mol/L 2-propanol solution of potassium hydroxide using a phenolphthalein reagent until a pink color continuing for 30 seconds is shown, thereby performing measurement. The acid value is determined by formula (1):

$$\text{Acid value (mg KOH/g)} = (5.611 \times a \times f)/S \qquad (1)$$

S: The collection quantity of the sample.
a: The amount of consumption (ml) of the 0.1 mol/L 2-propanol solution of potassium hydroxide
f: The factor of the 0.1 mol/L 2-propanol solution of potassium hydroxide
Incidentally, a is the titration value (ml) minus the blank value (ml).

The acid value of EM-A determined by the above-mentioned method was 10 mg KOH/g.

(4) Preparation of Inkjet Recording Ink

Examples of compositions suitable for inkjet recording inks will be shown in Table 22 below. An inkjet recording ink of the invention was prepared by using dispersion F1 prepared by the above-mentioned method and mixing with vehicle components shown in Table 22. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)·2Na salt for reducing the effects of metal ions in the ink system were each added to ion-exchange water.

(5) Rubbing Resistance Test and Dry Cleaning Test

Using the ink of Example F-1, and using PX-V630 manufactured by Seiko Epson Corporation as an inkjet printer, a sample in which solid printing was made on cotton was prepared. That sample was subjected to a rubbing fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 21.

(6) Measurement of Discharge Stability

Using the ink of Example F-1, and using PX-V630 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink which caused no print distortion at all was evaluated as AA, one which caused a print distortion at one place as A, one which caused print distortions at 2 to 3 places as B, one which caused print distortions at 4 to 5 places as C, and one which caused print distortions at 6 or more places as D. The results are shown in Table 21.

(Example F-2)

In Example F-2, an ink was prepared and evaluated, adding EM-A, in the same manner as in Example F-1 with the exception that pigment dispersion F2 prepared using Pigment Violet 19 (quinacridone pigment: manufactured by Clariant Corporation) in the same manner as pigment dispersion F1 was used. The particle size of pigment dispersion F2 was measured by the same method as in Example F-1. As a result, it was 110 nm. An ink composition is shown in Table 22. The rubbing resistance test, the dry cleaning test and the discharge stability test were made in the same manner as in Example F-1. The results thereof are shown in Table 21.

(Example F-3)

In Example F-3, an ink was prepared and evaluated, adding EM-A, in the same manner as in Example F-1 with the exception that pigment dispersion F3 prepared using Pigment Yellow 14 (azo pigment: manufactured by Clariant Corporation) in the same manner as pigment dispersion F1 was used. The particle size of pigment dispersion F3 was measured by the same method as in Example F-1. As a result, it was 140 nm. An ink composition is shown in Table 22. The rubbing resistance test, the dry cleaning test and the discharge stability test were made in the same manner as in Example F-1. The results thereof are shown in Table 21.

(Example F-4)

In Example F-4, an ink was prepared and evaluated in the same manner as in Example F-1 with the exception that emulsion B (EM-B) of polymer fine particles which were prepared by changing the raw material monomer constitution of the polymer fine particles to 16 parts of styrene, 66 parts of ethyl acrylate, 7 parts of butyl acrylate, 2 parts of methacrylic acid and 9 parts of ethyl carbitol acrylate was used. The glass transition temperature of the polymer fine particles of emulsion B was -16°C. Further, the acid value determined by the same method as in Example F-1 was 10 mg KOH/g. An ink composition is shown in Table 22. The rubbing resistance test, the dry cleaning test and the discharge stability test were made in the same manner as in Example F-1. The results thereof are shown in Table 21.

(Example F-5)

In Example F-5, an ink was prepared and evaluated in the same manner as in Example F-2 with the exception that emulsion C (EM-C) of polymer fine particles which were prepared by changing the raw material monomer constitution of the polymer fine particles to 16 parts of styrene, 68 parts of ethyl acrylate, 11.5 parts of butyl acrylate and 4.5 parts of methacrylic acid was used. The glass transition temperature of the polymer fine particles of emulsion C was -11°C. Further, the acid value determined by the same method as in Example F-1 was 30 mg KOH/g. An ink composition is shown in Table 22. The rubbing resistance test, the dry cleaning test and the discharge stability test were made in the same manner as in Example F-1. The results thereof are shown in Table 21.

(Example F-6)

In Example F-6, an ink was prepared and evaluated in the same manner as in Example F-1 with the exception that emulsion D (EM-D) of polymer fine particles which were prepared by changing the raw material monomer constitution of the polymer fine particles to 5 parts of styrene, 85 parts of ethyl acrylate, 8 parts of butyl acrylate and 2 parts of methacrylic acid was used. The glass transition temperature of the polymer fine particles of emulsion B was -21°C. Further, the acid value determined by the same method as in Example F-1 was 10 mg KOH/g. An ink composition is shown in Table 22. The rubbing resistance test, the dry cleaning test and the discharge stability test were made in the same manner as in Example F-1. The results thereof are shown in Table 21.

(Comparative Example F-1)

In Comparative Example F-1, an ink was prepared and evaluated in the same manner as in Example F-1 with the exception that emulsion E (EM-E) of polymer fine particles which were prepared by changing the raw material monomer constitution of the polymer fine particles to 16 parts of styrene, 66 parts of ethyl acrylate, 6 parts of butyl acrylate and 12 parts of 2-hydroxyethyl methacrylate was used. The glass transition temperature of the polymer fine particles of emulsion E was -6°C. Further, the acid value determined by the same method as in Example F-1 was 10 mg KOH/g. An ink composition is shown in Table 22. The rubbing resistance test, the dry cleaning test and the discharge stability test were made in the same manner as in Example F-1. The results thereof are shown in Table 21.

(Comparative Example F-2)

In Comparative Example F-2, an ink was prepared and evaluated, adding EM-A, in the same manner as in Example F-2 with the exception that a pigment dispersion having a particle size of 350 nm was prepared and used. The dispersion having a particle size of 350 nm was taken as pigment dispersion F2A. An ink composition is shown in Table 22. The rubbing resistance test, the dry cleaning test and the discharge stability test were made in the same manner as in Example F-1. The results thereof are shown in Table 21.

(Comparative Example F-3)

In Comparative Example F-3, an ink was prepared and evaluated in the same manner as in Example F-2 with the exception that emulsion H (EM-H) of polymer fine particles which were prepared by changing the raw material monomer constitution of the polymer fine particles to 40 parts of styrene, 47 parts of ethyl acrylate, 6 parts of butyl acrylate and 7 parts of methacrylic acid was used. The glass transition temperature of the polymer fine particles of emulsion H was 13°C. Further, the acid value determined by the same method as in Example F-1 was 10 mg KOH/g. An ink composition is shown in Table 22. The rubbing resistance test, the dry cleaning test and the discharge stability test were made in the same manner as in Example F-1. The results thereof are shown in Table 21.

(Comparative Example F-4)

In Comparative Example F-4, an ink was prepared and evaluated in the same manner as in Example F-1 with the exception that no polymer fine particles were used. An ink composition is shown in Table 22. The rubbing resistance test, the dry cleaning test and the discharge stability test were made in the same manner as in Example F-1. The results thereof are shown in Table 21.

[Table 21]

Table 21: Results of Rubbing Resistance, Dry Cleaning and Discharge Stability in Examples F-1 to F-6 and Comparative Examples F-1 to F-4

| | Tg | Particle Size | Acid Value | Rubbing Resistance | | Dry Cleaning | Discharge Stability |
|---|---|---|---|---|---|---|---|
| | | | | Dry | Wet | | |
| Example F-1 | -15 | 100 | 10 | 4/5 | 4/5 | 4/5 | A |
| Example F-2 | -15 | 110 | 10 | 4/5 | 5 | 4/5 | A |
| Example F-3 | -15 | 140 | 10 | 5 | 5 | 5 | A |
| Example F-4 | -16 | 100 | 10 | 4/5 | 4/5 | 5 | A |
| Example F-5 | -11 | 110 | 30 | 4/5 | 4/5 | 5 | A |
| Example F-6 | -21 | 110 | 10 | 4 | 4/5 | 4/5 | A |
| Comparative Example F-1 | -6 | 100 | 10 | 2 | 2 | 3/4 | A |
| Comparative Example F-2 | -15 | 350 | 10 | 3/4 | 4 | 4 | D |

(continued)

| | Tg | Particle Size | Acid Value | Rubbing Resistance | | Dry Cleaning | Discharge Stability |
|---|---|---|---|---|---|---|---|
| | | | | Dry | Wet | | |
| Comparative Example F-3 | 13 | 110 | 10 | 2/3 | 2 | 3 | A |
| Comparative Example F-4 | - | 110 | - | 1/2 | 1/2 | 2 | A |

The particle size is the average particle size of the pigment.

The rubbing resistance and dry cleaning are based on the evaluation standards of JIS.

[Table 22]

Table 22: Ink Compositions (wt%) of Examples F-1 to F-6 and Comparative Examples F-1 to F-4

| | Example | | | | | | Comparative Example | | | |
|---|---|---|---|---|---|---|---|---|---|---|
| | F-1 | F-2 | F-3 | F-4 | F-5 | F-6 | F-1 | F-2 | F-3 | F-4 |
| Dispersion F1 | 3.5 | - | - | 3.5 | - | 3.5 | 3.5 | - | - | 3.5 |
| Dispersion F2 | - | 4.5 | - | - | 4.5 | - | - | - | 4.5 | - |
| Dispersion F2A | - | - | - | - | - | - | - | 4.5 | - | - |
| Dispersion F3 | - | - | 4.5 | - | - | - | - | - | - | - |
| EM-A | 5 | 6 | 6 | - | - | - | - | 6 | - | - |
| EM-B | - | - | - | 5 | - | - | - | - | - | - |
| EM-C | - | - | - | - | 6 | - | - | - | - | - |
| EM-D | - | - | - | - | - | 5 | - | - | - | - |
| EM-E | - | - | - | - | - | - | 5 | - | - | - |
| EM-F | - | - | - | - | - | - | - | - | - | |
| EM-G | - | - | - | - | - | - | - | - | - | - |
| EM-H | - | - | - | - | - | - | - | - | 6 | - |
| 1,2-HD | 3.0 | 3.0 | 2.0 | 3.0 | 3.0 | 3.0 | 3.0 | 3.0 | 3.0 | 3.5 |
| 1,2-PD | - | - | 1.0 | - | - | - | - | - | - | - |
| TEGmBE | 1.0 | 1.0 | 2.0 | 1.0 | 1.0 | 1.0 | 1.0 | 1.0 | 1.0 | 1.5 |
| S-104 | 0.3 | 0.3 | 0.3 | 0.3 | 0.3 | 0.3 | 0.3 | 0.3 | 0.3 | 0.3 |
| S-465 | 0.5 | 0.3 | 0.3 | 0.5 | 0.3 | 0.5 | 0.5 | 0.3 | 0.3 | 0.5 |
| S-61 | - | 0.2 | - | - | 0.2 | - | - | 0.2 | 0.2 | - |
| Glycerin | 12 | 10 | 10 | 12 | 10 | 12 | 12 | 10 | 10 | 20 |
| TMP | 3.0 | 3.0 | 3.0 | 3.0 | 3.0 | 3.0 | 3.0 | 3.0 | 3.0 | 4.0 |
| TEG | 4.0 | 4.0 | 4.0 | 4.0 | 4.0 | 4.0 | 4.0 | 4.0 | 4.0 | 4.0 |
| TEA | 1.0 | 1.0 | 1.0 | 1.0 | 1.0 | 1.0 | 1.0 | 1.0 | 1.0 | 1.0 |

(continued)

| | Example | | | | | | Comparative Example | | | |
|---|---|---|---|---|---|---|---|---|---|---|
| | F-1 | F-2 | F-3 | F-4 | F-5 | F-6 | F-1 | F-2 | F-3 | F-4 |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
TEA: Triethanolamine

[Example G]

The following Example G corresponds to another preferred embodiment (g).

(Example G-1)

(1) Production of Pigment Dispersion G1

Thirty parts of Pigment Blue 15:3 (copper phthalocyanine pigment: manufactured by Clariant Corporation) was mixed with 3 parts of an anionic polymerizable surfactant, KH-10 (Daiichi Kogyo Seiyaku Co., Ltd.) and ion-exchange water, followed by dispersion through 15 passes at 200 MPa using an ultrahigh-pressure homogenizer (Ultimaizer HJP-25005 manufactured by Sugino Machine Limited). Thereafter, the dispersed mixture was transferred to another vessel, and 300 parts of ion-exchange water was added, followed by further stirring for one hour. Fifty parts of 2-ethylhexyl methacrylate, 20 parts of benzyl methacrylate and 10 parts of butyl acrylate were added thereto, followed by stirring and mixing. This was put into a reaction vessel equipped with a stirrer, a thermometer, a reflux tube and a dripping funnel, the air in which was thoroughly replaced by nitrogen. After the internal temperature of the reaction vessel was elevated to 80°C, an aqueous solution in which 0.4 g of potassium persulfate was dissolved as a polymerization initiator in 20 g of ion-exchange water was added dropwise, followed by reaction at 80°C for 6 hours while introducing nitrogen into the reaction vessel. After the reaction was finished, the pH was adjusted to 8 with a 1 mol/L sodium hydroxide solution. Then, this was ultrafiltered by a cross-flow method using an ultrafilter, and thereafter, the pigment concentration was adjusted to 15% with ion-exchange water to prepare pigment dispersion G1. The particle size was measured by using a Microtrac size distribution analyzer, UPA250 (manufactured by Nikkiso Co., Ltd.). As a result, it was 105 nm.

(3) Preparation of Polymer Fine Particles

A reaction vessel was equipped with a dripping device, a thermometer, a water-cooled reflux condenser and a stirrer. Then, 100 parts of ion-exchange water was placed therein, and 0.2 part of potassium persulfate as a polymerization initiator was added with stirring at 70°C under a nitrogen atmosphere. A monomer solution in which 7 parts of ion-exchange water, 0.05 part of sodium lauryl sulfate and 0.02 part of t-dodecyl mercaptan were added dropwise to 40% of a total of 100 parts of respective monomers of 16 parts of styrene, 71 parts of ethyl acrylate, 11.5 parts of butyl acrylate and 1.5 parts of methacrylic acid were added to 7 parts of ion-exchange water at 70°C to conduct a reaction, thereby preparing a primary material. To the primary material, 2 parts of a 10% ammonium persulfate solution was added, followed by stirring, and a reaction solution comprising 30 parts of ion-exchange water, 0.2 part of potassium lauryl sulfate, the remaining 60 percent of the above-mentioned monomers and 0.5 part of t-dodecyl mercaptan was further added with stirring at 70°C to conduct a polymerization reaction, followed by neutralization with sodium hydroxide to pH 8 to 8.5 and filtration through a 0.3-μm filter to prepare an aqueous dispersion of polymer fine particles. This was taken as emulsion A (EM-A). After taking and drying a part of this aqueous dispersion of polymer fine particles, the glass transition temperature was measured by using a differential operating calorimeter (EXSTAR 6000DSC manufactured by Seiko Electron Industry Co., Ltd.). As a result, it was -15°C. The styrene conversion molecular weight was 200,000, when measured using gel permeation chromatography (GPC) of 7100 system manufactured by Hitachi, Ltd. and using THF as a solvent.

Further, the acid value was measured by the following method. The above-mentioned aqueous dispersion of polymer fine particles is collected in a state prior to neutralization with sodium hydroxide, and the solid concentration thereof is exactly measured by a thermobalance (TG-2121 manufactured by Seiko Electron Industry Co., Ltd.). Then, about 10 g of this aqueous dispersion of polymer fine particles is accurately weighed and taken in a stoppered conical flask, and 100 ml of a 2-propanol-tetrahydrofuran mixed solution (1:2) is added to dissolve the polymer fine particles. This is titrated with a 0.1 mol/L 2-propanol solution of potassium hydroxide using a phenolphthalein reagent until a pink color continuing for 30 seconds is shown, thereby performing measurement. The acid value is determined by formula (1):

$$\text{Acid value (mg KOH/g)} = (5.611 \times a \times f)/S \qquad (1)$$

S: The collection quantity of the sample.
a: The amount of consumption (ml) of the 0.1 mol/L 2-propanol solution of potassium hydroxide
f: The factor of the 0.1 mol/L 2-propanol solution of potassium hydroxide
Incidentally, a is the titration value (ml) minus the blank value (ml).

The acid value of EM-A determined by the above-mentioned method was 10 mg KOH/g.

(4) Preparation of Inkjet Recording Ink

Examples of compositions suitable for inkjet recording inks will be shown in Table 24 below. An inkjet recording ink of the invention was prepared by using dispersion G1 prepared by the above-mentioned method and mixing with vehicle components shown in Table 24. Incidentally, as water of the balance in Examples of the invention and Comparative Examples, there was used one in which 0.05% of Topside 240 (manufactured by Permachem Asia Ltd.) for preventing corrosion of the ink, 0.02% of benzotriazole for preventing corrosion of ink-jet head members and 0.04% of EDTA (ethylenediaminetetraacetic acid)·2Na salt for reducing the effects of metal ions in the ink system were each added to ion-exchange water.

(5) Rubbing Resistance Test and Dry Cleaning Test

Using the ink of Example G-1, and using PX-V630 manufactured by Seiko Epson Corporation as an inkjet printer, a sample in which solid printing was made on cotton was prepared. That sample was subjected to a rubbing fastness test in which rubbing was performed 100 times at a load of 200 g using a "Gakushin" type rubbing fastness tester, AB-301S manufactured by Tester Sangyo Co., Ltd. Evaluation was made at two levels of dry and wet by Japanese Industrial Standard (JIS) JIS L0849 for confirming the degree of ink peeling. Further, similarly, a dry cleaning test was evaluated by JIS L0860, Method B. The results of the rubbing resistance test and the dry cleaning test are shown in Table 23.

(6) Measurement of Discharge Stability

Using the ink of Example G-1, and using PX-V630 manufactured by Seiko Epson Corporation as an inkjet printer, printing was made using Microsoft Word at a standard of a character size of 11 and MSP Gothic, on 100 pages of A4-size Xerox P paper manufactured by Fuji Xerox Co., Ltd. at a rate of 4,000 letters/page in an atmosphere of 35°C and 35%, followed by evaluation. An ink which caused no print distortion at all was evaluated as AA, one which caused a print distortion at one place as A, one which caused print distortions at 2 to 3 places as B, one which caused print distortions at 4 to 5 places as C, and one which caused print distortions at 6 or more places as D. The results are shown in Table 23.

(Example G-2)

In Example G-2, an ink was prepared and evaluated, adding EM-A, in the same manner as in Example G-1 with the exception that pigment dispersion G2 prepared using Pigment Violet 19 (quinacridone pigment: manufactured by Clariant Corporation) in the same manner as pigment dispersion G1 was used. The particle size of pigment dispersion G2 was measured by the same method as in Example G-1. As a result, it was 120 nm. An ink composition is shown in Table 24. The rubbing resistance test, the dry cleaning test and the discharge stability test were made in the same manner as in Example G-1. The results thereof are shown in Table 23.

(Example G-3)

In Example G-3, an ink was prepared and evaluated, adding EM-A, in the same manner as in Example G-1 with the exception that pigment dispersion G3 prepared using Pigment Yellow 14 (azo pigment: manufactured by Clariant Corporation) in the same manner as pigment dispersion G1 was used. The particle size of pigment dispersion G3 was measured by the same method as in Example G-1. As a result, it was 145 nm. An ink composition is shown in Table 24. The rubbing resistance test, the dry cleaning test and the discharge stability test were made in the same manner as in Example G-1. The results thereof are shown in Table 23.

(Example G-4)

In Example G-4, an ink was prepared and evaluated in the same manner as in Example G-1 with the exception that emulsion B (EM-B) of polymer fine particles which were prepared by changing the raw material monomer constitution of the polymer fine particles to 16 parts of styrene, 66 parts of ethyl acrylate, 7 parts of butyl acrylate, 2 parts of methacrylic acid and 9 parts of ethyl carbitol acrylate was used. The glass transition temperature of the polymer fine particles of emulsion B was -16°C. Further, the acid value determined by the same method as in Example G-1 was 10 mg KOH/g. An ink composition is shown in Table 24. The rubbing resistance test, the dry cleaning test and the discharge stability

test were made in the same manner as in Example G-1. The results thereof are shown in Table 23.

(Example G-5)

In Example G-5, an ink was prepared and evaluated in the same manner as in Example G-2 with the exception that emulsion C (EM-C) of polymer fine particles which were prepared by changing the raw material monomer constitution of the polymer fine particles to 16 parts of styrene, 68 parts of ethyl acrylate, 11.5 parts of butyl acrylate and 4.5 parts of methacrylic acid was used. The glass transition temperature of the polymer fine particles of emulsion C was -11°C. Further, the acid value determined by the same method as in Example G-1 was 30 mg KOH/g. An ink composition is shown in Table 24. The rubbing resistance test, the dry cleaning test and the discharge stability test were made in the same manner as in Example G-1. The results thereof are shown in Table 23.

(Example G-6)

In Example G-6, an ink was prepared and evaluated in the same manner as in Example G-1 with the exception that emulsion D (EM-D) of polymer fine particles which were prepared by changing the raw material monomer constitution of the polymer fine particles to 5 parts of styrene, 85 parts of ethyl acrylate, 8 parts of butyl acrylate and 2 parts of methacrylic acid was used. The glass transition temperature of the polymer fine particles of emulsion D was -21°C. Further, the acid value determined by the same method as in Example G-1 was 10 mg KOH/g. An ink composition is shown in Table 24. The rubbing resistance test, the dry cleaning test and the discharge stability test were made in the same manner as in Example G-1. The results thereof are shown in Table 23.

(Comparative Example G-1)

In Comparative Example G-1, an ink was prepared and evaluated in the same manner as in Example G-1 with the exception that emulsion E (EM-E) of polymer fine particles which were prepared by changing the raw material monomer constitution of the polymer fine particles to 16 parts of styrene, 66 parts of ethyl acrylate, 6 parts of butyl acrylate and 12 parts of 2-hydroxyethyl methacrylate was used. The glass transition temperature of the polymer fine particles of emulsion E was -6°C. Further, the acid value determined by the same method as in Example G-1 was 10 mg KOH/g. An ink composition is shown in Table 24. The rubbing resistance test, the dry cleaning test and the discharge stability test were made in the same manner as in Example G-1. The results thereof are shown in Table 23.

(Comparative Example G-2)

In Comparative Example G-2, an ink was prepared and evaluated, adding EM-A, in the same manner as in Example G-2 with the exception that a pigment dispersion having a particle size of 350 nm was prepared and used. The dispersion having a particle size of 350 nm was taken as pigment dispersion G2A. An ink composition is shown in Table 24. The rubbing resistance test, the dry cleaning test and the discharge stability test were made in the same manner as in Example G-1. The results thereof are shown in Table 23.

(Comparative Example G-3)

In Comparative Example G-3, an ink was prepared and evaluated in the same manner as in Example G-2 with the exception that emulsion H (EM-H) of polymer fine particles which were prepared by changing the raw material monomer constitution of the polymer fine particles to 40 parts of styrene, 47 parts of ethyl acrylate, 6 parts of butyl acrylate and 7 parts of methacrylic acid was used. The glass transition temperature of the polymer fine particles of emulsion H was 13°C. Further, the acid value determined by the same method as in Example G-1 was 10 mg KOH/g. An ink composition is shown in Table 24. The rubbing resistance test, the dry cleaning test and the discharge stability test were made in the same manner as in Example G-1. The results thereof are shown in Table 23.

(Comparative Example G-4)

In Comparative Example G-4, an ink was prepared and evaluated in the same manner as in Example G-1 with the exception that no polymer fine particles were used. An ink composition is shown in Table 24. The rubbing resistance test, the dry cleaning test and the discharge stability test were made in the same manner as in Example G-1. The results thereof are shown in Table 23.

[Table 23]

Table 23: Results of Rubbing Resistance, Dry Cleaning and Discharge Stability in Examples G-1 to G-6 and Comparative Examples G-1 to G-4

| | Tg | Particle Size | Acid Value | Rubbing Resistance | | Dry Cleaning | Discharge Stability |
|---|---|---|---|---|---|---|---|
| | | | | Dry | Wet | | |
| Example G-1 | -15 | 105 | 10 | 4/5 | 4/5 | 4/5 | A |
| Example G-2 | -15 | 120 | 10 | 4/5 | 5 | 4/5 | A |
| Example G-3 | -15 | 145 | 10 | 5 | 5 | 5 | A |
| Example G-4 | -16 | 105 | 10 | 4/5 | 4/5 | 5 | A |
| Example G-5 | -11 | 115 | 30 | 4/5 | 4/5 | 5 | A |
| Example G-6 | -21 | 120 | 10 | 4 | 4/5 | 4/5 | A |
| Comparative Example G-1 | -6 | 105 | 10 | 2 | 2 | 3/4 | A |
| Comparative Example G-2 | -15 | 350 | 10 | 3/4 | 4 | 4 | D |
| Comparative Example G-3 | 13 | 120 | 10 | 2/3 | 2 | 3 | A |
| Comparative Example G-4 | - | 105 | - | 2 | 1/2 | 2 | A |

The particle size is the average particle size of the pigment.

The rubbing resistance and dry cleaning are based on the evaluation standards of JIS.

[Table 24]

Table 24: Ink Compositions (wt%) of Examples G-1 to G-6 and Comparative Examples G-1 to G-4

| | Example | | | | | | Comparative Example | | | |
|---|---|---|---|---|---|---|---|---|---|---|
| | F-G | G-2 | G-3 | G-4 | G-5 | G-6 | G-1 | G-2 | G-3 | G-4 |
| Dispersion G1 | 3.5 | - | - | 3.5 | - | 3.5 | 3.5 | - | - | 3.5 |
| Dispersion G2 | - | 4.5 | - | - | 4.5 | - | - | - | 4.5 | - |
| Dispersion G2A | - | - | - | - | - | - | - | 4.5 | - | - |
| Dispersion G3 | - | - | 4.5 | - | - | - | - | - | - | - |
| EM-A | 5 | 6 | 6 | - | - | - | - | 6 | - | - |
| EM-B | - | - | - | 5 | - | - | - | - | - | - |
| EM-C | - | - | - | - | 6 | - | - | - | - | - |
| EM-D | - | - | - | - | - | 5 | - | - | - | - |
| EM-E | - | - | - | - | - | - | 5 | - | - | - |
| EM-F | - | - | - | - | - | - | - | - | - | |
| EM-G | - | - | - | - | - | - | - | - | - | - |
| EM-H | - | - | - | - | - | - | - | - | 6 | - |
| 1,2-HD | 3.0 | 3.0 | 2.0 | 3.0 | 3.0 | 3.0 | 3.0 | 3.0 | 3.0 | 3.5 |
| 1,2-PD | - | - | 1.0 | - | - | - | - | - | - | - |
| TEGmBE | 1.0 | 1.0 | 2.0 | 1.0 | 1.0 | 1.0 | 1.0 | 1.0 | 1.0 | 1.5 |
| S-104 | 0.3 | 0.3 | 0.3 | 0.3 | 0.3 | 0.3 | 0.3 | 0.3 | 0.3 | 0.3 |
| S-465 | 0.5 | 0.3 | 0.3 | 0.5 | 0.3 | 0.5 | 0.5 | 0.3 | 0.3 | 0.5 |
| S-61 | - | 0.2 | - | - | 0.2 | - | - | 0.2 | 0.2 | - |
| Glycerin | 12 | 10 | 10 | 12 | 10 | 12 | 12 | 10 | 10 | 20 |
| TMP | 3.0 | 3.0 | 3.0 | 3.0 | 3.0 | 3.0 | 3.0 | 3.0 | 3.0 | 4.0 |
| TEG | 4.0 | 4.0 | 4.0 | 4.0 | 4.0 | 4.0 | 4.0 | 4.0 | 4.0 | 4.0 |
| TEA | 1.0 | 1.0 | 1.0 | 1.0 | 1.0 | 1.0 | 1.0 | 1.0 | 1.0 | 1.0 |

(continued)

| | Example | | | | | | Comparative Example | | | |
|---|---|---|---|---|---|---|---|---|---|---|
| | F-G | G-2 | G-3 | G-4 | G-5 | G-6 | G-1 | G-2 | G-3 | G-4 |
| Ion-Exchange Water | Balance | Balance | Balance | Balance | Balance | Balance | Balance | Balance | Balance | Balance |

Each pigment concentration is indicated by the pigment solid concentration.
1,2-HD: 1,2-Hexanediol
1,2-PD: 1,2-Pentanediol
TEGmBE: Triethylene glycol monobutyl ether
S-104: Surfynol 104 (an acetylene glycol-based surfactant manufactured by Nisshin Chemical Industry Co., Ltd.)
S-465: Surfynol 465 (an acetylene glycol-based surfactant manufactured by Nisshin Chemical Industry Co., Ltd.)
S-61: Surfynol 61 (an acetylene alcohol-based surfactant manufactured by Nisshin Chemical Industry Co., Ltd.)
TMP: Trimethylolpropane
TEG: Triethylene glycol
TEA: Triethanolamine

Incidentally, the invention is based on Japanese Patent Application No. 2007-296367 filed on Nov. 15, 2007, Japanese Patent Application No. 2007-314489 filed on Dec. 5, 2007, Japanese Patent Application No. 2007-319282 filed on Dec. 11, 2007, Japanese Patent Application No. 2008-31436 filed on Feb. 13, 2008, Japanese Patent Application No. 2008-31437 filed on Feb. 13, 2008, Japanese Patent Application No. 2008-36981 filed on Feb. 19, 2008, Japanese Patent Application No. 2008-36982 filed on Feb. 19, 2008, and Japanese Patent Application No. 2008-292373 filed on Nov. 14, 2008.

## Claims

1. An ink composition comprising: a dispersion having an average particle size of 50 nm to 300 nm, in which a pigment is made dispersible in water; and polymer fine particles having a glass transition temperature of -10°C or less and an acid value of 100 mg KOH/g or less,
wherein the polymer fine particles are polymerized using 70% by weight or more of an alkyl (meth)acrylate and/or a cyclic alkyl (meth)acrylate and from 5% by weight to 25% by weight of styrene, as constituents thereof.

2. The ink composition according to claim 1, wherein the alkyl (meth)acrylate and/or the cyclic alkyl(meth)acrylate are an alkyl (meth)acrylate having 1 to 24 carbon atoms and/or a cyclic alkyl (meth)acrylate having 3 to 24 carbon atoms.

3. The ink composition according to claim 1, further comprising a polyalkylene wax having a melting point of 80°C or more.

4. The ink composition according to any one of claims 1 to 3, wherein the dispersion is a dispersion having an average particle size of 50 nm to 300 nm in which carbon black dispersed without any dispersing agent is made dispersible in water.

5. The ink composition according to claim 1, wherein the dispersion is dispersed by using a polymer obtained by polymerizing 50% by weight or more of benzyl acrylate and 15% by weight or less of methacrylic acid and/or acrylic acid as constituents.

6. The ink composition according to any one of claims 1 to 5, wherein the dispersion is a dispersion having an average particle size of 50 nm to 300 nm in which an organic pigment is made dispersible in water with a polymer, and the polymer has a styrene-conversion weight average molecular weight by gel permeation chromatography (GPC) of 10,000 to 200,000.

7. The ink composition according to claim 1, wherein the dispersion contains an organic pigment encapsulated in a water-insoluble polymer obtained by copolymerizing a monomer mixture containing a salt-forming group-containing monomer and a macromere and/or a hydrophobic monomer, and
wherein the polymer fine particles are obtained by polymerizing at least ethyl acrylate and (meth)acrylic acid as constituents.

8. The ink composition according to claim 1, wherein the dispersion contains an organic pigment encapsulated in a resin layer formed by emulsion polymerization, and
wherein the polymer fine particles are obtained by polymerizing at least ethyl acrylate and (meth)acrylic acid as constituents.

9. The ink composition according to any one of claims 1 to 8, wherein the polymer fine particles have a styrene-conversion weight average molecular weight by gel permeation chromatography (GPC) to 100,000 to 1,000,000.

10. The ink composition according to any one of claims 1 to 9, comprising a 1,2-alkylene glycol.

11. The ink composition according to any one of claims 1 to 10, comprising an acetylene glycol-based surfactant and/or an acetylene alcohol-based surfactant.

12. The ink composition according to any one of claims 1 to 11, wherein the content (% by weight) of the polymer fine particles is higher than the content (% by weight) of the pigment.

13. The ink composition according to any one of claims 1 to 12, wherein the ink composition is used for an inkjet recording

system.

**14.** Use of the ink composition according to any one of claims 1 to 13 as an inkjet recording ink for textiles.

**Patentansprüche**

**1.** Tintenzusammensetzung, umfassend: eine Dispersion mit einer mittleren Teilchengröße von 50 nm bis 300 nm, in der ein Pigment in Wasser dispergierbar gemacht wird; und feine Polymerteilchen mit einer Glasübergangstemperatur von -10°C oder weniger und einer Säurezahl von 100 mg KOH/g oder weniger.
wobei die feinen Polymerteilchen unter Verwendung von 70 Gew.-% oder mehr eines Alkyl(meth)acrylats und/oder eines cyclischen Alkyl(meth)acrylats und 5 bis 25 Gew.-% Styrol als Bestandteile polymerisiert werden.

**2.** Tintenzusammensetzung gemäß Anspruch 1, wobei das Alkyl(meth)acrylat und/oder das cyclische Alkyl(meth)acrylat ein Alkyl(meth)acrylat mit 1 bis 24 Kohlenstoffatomen und/oder ein cyclisches Alkyl(meth)acrylat mit 3 bis 24 Kohlenstoffatomen ist oder sind.

**3.** Tintenzusammensetzung gemäß Anspruch 1, ferner umfassend ein Polyalkylenwachs mit einem Schmelzpunkt von 80°C oder höher.

**4.** Tintenzusammensetzung gemäß einem der Ansprüche 1 bis 3, wobei die Dispersion eine Dispersion mit einer mittleren Teilchengröße von 50 nm bis 300 nm ist, in der ohne Dispergiermittel dispergierter Ruß in Wasser dispergierbar gemacht wird.

**5.** Tintenzusammensetzung gemäß Anspruch 1, wobei die Dispersion unter Verwendung eines Polymers dispergiert ist, das durch Polymerisieren von 50 Gew.-% oder mehr Benzylacrylat und 15 Gew.-% oder weniger Methacrylsäure und/oder Acrylsäure als Bestandteile erhalten wurde.

**6.** Tintenzusammensetzung gemäß einem der Ansprüche 1 bis 5, wobei die Dispersion eine Dispersion mit einer mittleren Teilchengröße von 50 nm bis 300 nm ist, in der ein organisches Pigment mit einem Polymer in Wasser dispergierbar gemacht wird und das Polymer ein mittels Gelpermeationschromatographie (GPC) bestimmtes, auf Styrol bezogenes, gewichtsgemitteltes Molekulargewicht von 10.000 bis 200.000 aufweist.

**7.** Tintenzusammensetzung gemäß Anspruch 1, wobei die Dispersion ein organisches Pigment enthält, das in einem wasserunlöslichen Polymer eingekapselt ist, das durch Copolymerisieren einer Monomermischung, die ein Monomer mit einer salzbildenden Gruppe und ein Macromer und/oder ein hydrophobes Monomer enthält, erhalten wird, und wobei die feinen Polymerteilchen durch Polymerisieren von mindestens Ethylacrylat und (Meth)acrylsäure als Bestandteile erhalten werden.

**8.** Tintenzusammensetzung gemäß Anspruch 1, wobei die Dispersion ein organisches Pigment enthält, das in einer durch Emulsionspolymerisation gebildeten Harzschicht eingekapselt ist, und
wobei die feinen Polymerteilchen durch Polymerisieren von mindestens Ethylacrylat und (Meth)acrylsäure als Bestandteile erhalten werden.

**9.** Tintenzusammensetzung gemäß einem der Ansprüche 1 bis 8, wobei die feinen Polymerteilchen ein mittels Gelpermeationschromatographie (GPC) bestimmtes, auf Styrol bezogenes, gewichtsgemitteltes Molekulargewicht von 100.000 bis 1.000.000 aufweisen.

**10.** Tintenzusammensetzung gemäß einem der Ansprüche 1 bis 9, umfassend ein 1,2-Alkylenglycol.

**11.** Tintenzusammensetzung gemäß einem der Ansprüche 1 bis 10, umfassend ein Tensid auf Acetylenglycolbasis und/oder ein Tensid auf Acetylenalkoholbasis.

**12.** Tintenzusammensetzung gemäß einem der Ansprüche 1 bis 11, wobei der Gehalt (Gew.-%) der feinen Polymerteilchen höher ist als der Gehalt (Gew.-%) des Pigments.

**13.** Tintenzusammensetzung gemäß einem der Ansprüche 1 bis 12, wobei die Tintenzusammensetzung für ein Tintenstrahlaufzeichnungssystem verwendet wird.

14. Verwendung der Tintenzusammensetzung gemäß einem der Ansprüche 1 bis 13 als Tintestrahlaufzeichnungstinte für Textilien.

## Revendications

1. Composition d'encre comprenant : une dispersion présentant une taille particulaire moyenne de 50 nm à 300 nm, dans laquelle un pigment est rendu dispersible dans l'eau ; et des particules polymères fines présentant une température de transition vitreuse de -10 °C ou moins et un indice d'acidité de 100 mg de KOH/g ou moins,
dans laquelle les particules polymères fines sont polymérisées en utilisant 70 % en poids ou plus d'un (méth)acrylate d'alkyle et/ou d'un (méth)acrylate d'alkyle cyclique et de 5 % en poids à 25 % en poids de styrène, en tant que constituants de celle-ci.

2. Composition d'encre selon la revendication 1, dans laquelle le (méth)acrylate d'alkyle et/ou le (méth)acrylate d'alkyle cyclique sont un (méth)acrylate d'alkyle contenant 1 à 24 atomes de carbone et/ou un (méth)acrylate d'alkyle cyclique contenant 3 à 24 atomes de carbone.

3. Composition d'encre selon la revendication 1, comprenant en outre une cire de polyalkylène présentant un point de fusion de 80 °C ou plus.

4. Composition d'encre selon l'une quelconque des revendications 1 à 3, dans laquelle la dispersion est une dispersion présentant une taille particulaire moyenne de 50 nm à 300 nm dans laquelle un noir de carbone dispersé sans aucun agent de dispersion est rendu dispersible dans l'eau.

5. Composition d'encre selon la revendication 1, dans laquelle la dispersion est dispersée en utilisant un polymère obtenu par la polymérisation de 50 % en poids ou plus d'un acrylate de benzyle et de 15 % en poids ou moins d'un acide méthacrylique et/ou d'un acide acrylique en tant que constituants.

6. Composition d'encre selon l'une quelconque des revendications 1 à 5, dans laquelle la dispersion est une dispersion présentant une taille particulaire moyenne de 50 nm à 300 nm dans laquelle un pigment organique est rendu dispersible dans l'eau avec un polymère, et le polymère présente un poids moléculaire moyen en poids par conversion du styrène par chromatographie par perméation sur gel (GPC) de 10000 à 200000.

7. Composition d'encre selon la revendication 1, dans laquelle la dispersion contient un pigment organique encapsulé dans un polymère insoluble dans l'eau obtenu par la copolymérisation d'un mélange de monomères contenant un monomère contenant un groupe formant un sel et un macromère et/ou un monomère hydrophobe, et
dans laquelle les particules polymères fines sont obtenues par la polymérisation d'au moins l'acrylate d'éthyle et l'acide (méth)acrylique en tant que constituants.

8. Composition d'encre selon la revendication 1, dans laquelle la dispersion contient un pigment organique encapsulé dans une couche de résine formée par polymérisation en émulsion, et
dans laquelle les particules polymères fines sont obtenues par la polymérisation d'au moins l'acrylate d'éthyle et l'acide (méth)acrylique en tant que constituants.

9. Composition d'encre selon l'une quelconque des revendications 1 à 8, dans laquelle les particules polymères fines présentent un poids moléculaire moyen en poids par conversion du styrène par chromatographie par perméation sur gel (GPC) de 100000 à 1000000.

10. Composition d'encre selon l'une quelconque des revendications 1 à 9, comprenant un 1,2-alkylène glycol.

11. Composition d'encre selon l'une quelconque des revendications 1 à 10, comprenant un tensioactif à base d'acétylène glycol et/ou un tensioactif à base d'alcool d'acétylène.

12. Composition d'encre selon l'une quelconque des revendications 1 à 11, dans laquelle la teneur (% en poids) des particules polymères fines est supérieure à la teneur (% en poids) du pigment.

13. Composition d'encre selon l'une quelconque des revendications 1 à 12, dans laquelle la composition d'encre est utilisée pour un système d'enregistrement par jet d'encre.

14. Utilisation de la composition d'encre selon l'une quelconque des revendications 1 à 13 comme encre d'enregistrement par jet d'encre pour les textiles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050282929 A1
- US 20050288391 A1
- EP 1683843 A1
- EP 1811002 A2
- WO 0144386 A1
- US 5156675 A
- US 5183502 A
- US 5196056 A
- US 2083372 A
- JP 56147861 A
- JP 9111165 A
- JP 2007515561 A
- JP 2007126635 A
- JP 2005272790 A
- JP 9286939 A
- JP 49046291 B
- JP 1024142 B
- JP 62104802 A
- JP 62221431 A
- JP 62034947 A
- JP 55011525 A
- JP 46034898 B
- JP 51030284 A
- JP 5320276 A
- JP 10316909 A
- JP 8003498 A
- JP 2007296367 A
- JP 2007314489 A
- JP 2007319282 A
- JP 2008031436 A
- JP 2008031437 A
- JP 2008036981 A
- JP 2008036982 A
- JP 2008292373 A